# EUROPÄISCHE PATENTSCHRIFT

(11) **EP 2 106 435 B1**
(45) Veröffentlichungstag und Bekanntmachung des Hinweises auf die Patenterteilung: **18.11.2020**
(21) Anmeldenummer: 07859545.1
(22) Anmeldetag: 28.12.2007
(51) Int. Cl.: C10L 5/44

(54) **VERFAHREN ZUR ERZEUGUNG VON AUS BIOMASSE HERGESTELLTEM WERK- UND/ODER BRENNSTOFF**
PROCESS FOR THE PRODUCTION OF MATERIAL AND/OR FUEL PRODUCED FROM BIOMASS
PROCÉDÉ POUR LA PRÉPARATION D'UN MATÉRIAU ET/OU COMBUISTIBLE PRODUIT À PARTIR DE BIOMASSE

(30) Priorität: 28.12.2006 DE 102006062504; 12.06.2007 DE 102007027594; 21.11.2007 DE 102007056170; 21.12.2007 DE 102007062808; 21.12.2007 DE 102007062809; 21.12.2007 DE 102007062810; 21.12.2007 DE 102007062811
(43) Veröffentlichungstag der Anmeldung: 07.10.2009
(73) Patentinhaber: Antacor Ltd., Ta' Xbiex XBX 1026 (MT)
(72) Erfinder: PEUS, Dominik, GU1 2SE Guildford (GB)
(74) Vertreter: Diehl & Partner
(86) Internationale Anmeldenummer: PCT/IB2007/055341
(87) Internationale Veröffentlichungsnummer: WO 2008/081407

(56) Entgegenhaltungen:
- EP-A1- 0 204 354
- EP-A1- 1 970 431
- WO-A1-02/20699
- WO-A1-03/002690
- AT-B- 363 905
- AT-B- 363 906
- US-A- 6 063 147
- US-A1- 2001 013 197
- US-A1- 2004 192 980
- US-A1- 2006 096 163
- US-A1- 2006 260 186

## Beschreibung

Die Anmeldung betrifft ein Verfahren nach dem Prinzip der hydrothermalen Karbonisierung, wobei

eine Vorrichtung zur Behandlung von kohlenstoffhaltigen Fest-/Flüssiggemischen, insbesondere von Biomasse, mit mindestens einem Reaktor zur Aufnahme des Fest-/Flüssiggemisches verwendet wird.

Eine so genannte hydrothermale Karbonisierung im Labormaßstab wurde im Juli 2006 von Prof. Markus Antonietti vom Potsdamer Max-Planck- Institut für Kolloid und Grenzflächenforschung vorgestellt. Bei diesem Verfahren wird Biomasse in einem Laborautoklaven bei 10 bar und 180 Grad innerhalb eines halben Tages in einen kohleähnlichen Stoff oder dessen Vorstufen und Wasser umgewandelt.

Die Nutzung von feuchter Biomasse zur Energiegewinnung durch Herstellung eines möglichst einheitlichen Brennstoffs wird seit längerem angestrebt, ist bisher aber durch mangelnde Effizienz der energetischen Nutzbarkeit und geringe Wirtschaftlichkeit in ihrer Anwendung begrenzt. Kohlendioxid-Emissionen durch die Verbrennung fossiler Energieträger werden im Wesentlichen für den Klimawandel verantwortlich gemacht.

Aus der DE 197 23 510 Cl ist beispielsweise eine Vorrichtung zur Behandlung biogener Restmassen bekannt, die einen zylindrischen Reaktor umfasst, in dem Lebensmittelabfälle und Ähnliches einer Temperatur-Druck-Hydrolyse unterzogen werden. Der Reaktor ist als Schlaufenreaktor mit beheizbarer Mantelfläche ausgebildet. Mittels einer Pumpe wird innerhalb des Reaktors eine Strömung erzeugt, die eine Durchmischung der Suspension gewährleistet.

Die Patentanmeldung US 2006/0096163 A1 offenbart ein Verfahren, bei dem Biomüll unter erhöhtem Druck so hoch erhitzt wird, dass seine Zellstruktur zerstört, Kohlendioxid abgespalten und dabei eine leicht entwässerbare Kohlesuspension erhalten wird.

Die Patentanmeldung US 2004/192980 A1 offenbart ein Verfahren, bei dem landwirtschaftliche oder andere kohlenstoffhaltige Abfälle hydrothermal zu höherwertigen Produkten wie Ölen und Spezialchemikalien umgewandelt werden.

Die Patentanmeldung US 2006/0260186 A1 offenbart ein Verfahren, bei dem organische Materialien in Gegenwart einer Alkali-Verbindung und eines hetero-genen Aluminium , Titan oder Zirkoniumoxid-Katalysators bei einem pH Wert von 8 bis 10 unter erhöhtem Druck und erhöhter Temperatur zu Kohlenwasserstoffen umgewandelt werden.

Die nachveröffentlichte europäische Patentanmeldung EP 1 970 431 A1 offenbart ein Verfahren zur hydrothermalen Karbonisierung von Biomasse, bei dem letztere durch gesteuerte Ein- und Auslässe zu- bzw. Produkte abgeführt werden, ohne dass der Reaktorinnendruck absinkt, wobei eine Förderschnecke den Transport durch den liegenden Reaktor zwischen Ein- und Auslass besorgt.

Die österreichische Patentschrift AT 363 905 B offenbart ein Verfahren zur Trocknung von Braunkohlen, bei dem die Kohle in einer Heißdampfatmosphäre unter erhöhtem Druck erhitzt wird, so dass enthaltenes Wasser ausgetrieben wird.

Die vorliegende Anmeldung geht von der Aufgabe aus, ein Verfahren zu entwickeln, durch das Brennstoffe, Humus, kohlenstoffhaltige Werkstoffe sowie Maillard- beziehungsweise Maillard-ähnliche Reaktionsprodukte mit hoher Effizienz aus einem Fest-Flüssig-Gemisch, insbesondere im industriellen Maßstab, wirtschaftlich hergestellt werden können.

Die Aufgabe wird durch den Gegenstand des unabhängigen Patentanspruchs gelöst. Weiterbildungen ergeben sich aus abhängigen Patentansprüchen.

Ein Verfahren gemäß der Anmeldung sieht vor, dass das kohlenstoffhaltige Fest-Flüssig-Gemisch und/oder die Ausgangs Stoffe vor und/oder während der Behandlung zusätzlich bearbeitet wird und/oder die Reaktions-, Zwischen-, Neben- und/oder Endprodukte aufgearbeitet beziehungsweise prozessiert werden. Durch gezielte Vorbereitung beziehungsweise Vorbehandlung des Fest-Flüssig-Gemisches und weitere Bearbeitung des Fest-Flüssig-Gemisches während der Behandlung beziehungsweise des Reaktionsprozesses und/oder die Aufarbeitung der Reaktions-, Zwischen-, Neben- und/oder Endprodukte kann die Ausbeute an Brennstoffen, Humus, kohlenstoffhaltigen Werkstoffen und/oder Maillard- beziehungsweise Maillard-ähnlichen Reaktionsprodukten auf wirtschaftliche Weise erheblich gesteigert werden.

Bei der energetischen Verwertung von Biomasse wird nur so viel Kohlendioxid in die Atmosphäre freigesetzt, wie die lebenden Pflanzen zuvor zum Wachstum benötigen. Die Nutzung von Brennstoffen aus Biomasse ist daher Kohlendioxidneutral und damit klimaverträglich. Weiter kann die Herstellung von Humus, der zum Beispiel auf landwirtschaftlichen Nutzflächen ausgebracht wird, als CO₂-Senke dienen. Ohne solche Maßnahmen und ohne den verstärkten energetischen Einsatz nichtfossiler Brennstoffe aus Biomasse sind Klimaschutzziele wie sie zum Beispiel im Kyoto-Protokoll festgelegt wurden, nur schwer zu erreichen.

Bei den Verfahren der Anmeldung zur Verwertung von Biomasse zur Herstellung von Brennstoffen ist der Anteil des Kohlenstoffs, der beim Umsetzungs-prozess verloren geht, wesentlich geringer als bei anderen Verfahren. Bei sachgerechter Umsetzung geht wenig oder gar kein Kohlenstoff verloren. Der Kohlenstoffverlust liegt bei der alkoholischen Gärung über 30 Prozent, bei der Umsetzung zu Biogas bei etwa 50 Prozent, bei der Holzverkohlung bei etwa 70 Prozent und bei der Kompostierung über 90 Prozent. Dabei entweicht der Kohlenstoff als Kohlendioxid oder auch als Methan, die jeweils als klimaschädlich angesehen werden. Dies ist bei dem Verfahren der Anmeldung nicht oder nur in sehr geringem Ausmaß der Fall.

Das Verfahren gemäß der Anmeldung hat einen hohen Wirkungsgrad. Die alkoholische Gärung hat dagegen nur einen geschätzten effektiven Wirkungsgrad von drei bis fünf Prozent der in den Pflanzen gespeicherten Primärenergie. Bei dem Verfahren gemäß der Anmeldung wird kein oder nur sehr wenig CO₂ freigesetzt. Bei der Umwandlung von Biomasse in Biogas wird etwa die Hälfte des Kohlenstoffs wieder als CO₂ freigesetzt. Außerdem sind nur wenige Substrate für einen wirtschaftlichen Betrieb einer Biogasanlage geeignet.

Anders als bei den bekannten Verfahren braucht bei dem Verfahren gemäß der Anmeldung die freigesetzte Wärme nicht weitgehend ungenutzt bleiben. Eine besondere Schwierigkeit besteht in der energetischen Verwertung von Biomasse mit einem hohen Feuchtigkeitsgehalt. Beim Verfahren der Anmeldung ist jedoch die Anwesenheit von Wasser Voraussetzung für den chemischen Umsetzungsvorgang. Bisherige Verfahren sind dagegen durch mangelnde Effizienz, geringere energetischen Nutzbarkeit und Wirtschaftlichkeit in ihrer Anwendung begrenzt.

Bei der Behandlung von Fest-/Flüssiggemischen wie beispielsweise Biomasse unter hohem Druck und bei hohen Temperaturen können die Reaktoren, in denen die Behandlung erfolgt, besondere Merkmale aufweisen. So kann die innere Oberfläche des Reaktors aufgrund der extremen Bedingungen korrosionsbeständig oder mit einer entsprechenden Beschichtung versehen sein. Darüber hinaus kann eine Einrichtung zur Durchmischung des Fest-/Flüssiggemisches vorhanden sein.

In einer weiteren Ausgestaltung des Gegenstands der Anmeldung wird das Verfahren semikontinuierlich oder kontinuierlich durchgeführt. Das bedeutet, dass die Behandlung des Fest-Flüssig-Gemisches, insbesondere während des Reaktionsprozesses , nicht diskontinuierlich, das heißt im Batch-Verfahren, durchgeführt wird. Vielmehr werden zur optimalen Reaktionsraumausnutzung und zur Minimierung der Verweilzeiten Temperatur- und Druckverhältnisse weitgehend im Betriebsbereich gehalten. Gleichzeitig können während des laufenden Prozesses Ausgangsstoffe als auch Katalysatoren zeitversetzt in den Reaktionsraum eingebracht, Prozesswasser und nicht umgesetzte Ausgangsstoffe sowie andere zugeführte Medien entnommen und nach Bedarf recykliert (zurückgeführt) sowie Störstoffe, Reaktions-, Zwischen-, Neben- und/oder Endprodukte abgezogen werden. Parallel dazu können weitere Verfahrensschritte, wie beispielsweise die Aufarbeitung und/oder Reinigung von Prozesswasser, Abwasser, Abluft, Reaktions-, Zwischen-, Neben- und/oder Endprodukte kontinuierlich oder in Intervallen durchgeführt werden.

In weiterer Ausgestaltung des Gegenstands der Anmeldung ist vorgesehen, dass die Temperatur zwischen 160 und 300 Grad Celsius, besonders bevorzugt zwischen 185 und 225 Grad, eingestellt und/oder dass die Temperatur automatisch gesteuert wird.

Gemäß der Anmeldung ist vorgesehen, dass der Druck auf mindestens 7 bar, vorzugsweise zwischen 10 und 34 bar, besonders bevorzugt zwischen 10 und 17 bar, 17 und 26 bar oder 26 und 34 bar, eingestellt wird.

Gemäß der Anmeldung ist vorgesehen, dass die Behandlungsdauer mindestens 2 Stunden, vorzugsweise 3 bis 60 Stunden, besonders bevorzugt 5 bis 30 Stunden oder 30 bis 60 Stunden, insbesondere 6 bis 12 Stunden oder 12 bis 24 Stunden, beträgt.

In weiterer Ausgestaltung des Gegenstands der Anmeldung ist vorgesehen, dass die Behandlungsdauer in Abhängigkeit von der Art der Ausgangsstoffe und/oder des Fest-Flüssig-Gemisches und/oder dem gewünschten Reaktionsprodukt gewählt wird.

In weiterer Ausgestaltung des Gegenstands der Anmeldung ist vorgesehen, dass mindestens ein Ausgangsstoff und/oder das Fest-Flüssig-Gemisch vorbehandelt wird, vorzugsweise durch Entwässerung, Zerkleinerung, Vorinkubation mit Hilfsstoffen, Vermischung und/oder Vorwärmung.

Teil der Vorbehandlung kann auch die Inkubation in einem sauren Milieu oder Medium sein, beispielsweise bei einem pH-Wert, der unter 6, bevorzugt unter 5, besonders bevorzugt unter 4, insbesondere unter 3 und dabei vorzugsweise unter 2 liegt. Die erforderliche Zeitdauer des Schrittes nimmt mit zunehmender Zerkleinerung und mit sinkendem pH-Wert ab. Die Inkubation bei saurem pH-Wert kann nach dem Zerkleinern erfolgen.

In weiterer Ausgestaltung des Gegenstands der Anmeldung ist vorgesehen, dass die Ausgangsstoffe das Fest-Flüssig-Gemisch vor, während und/oder nach der Behandlung zerkleinert, vorzugsweise gehäckselt und/oder gemahlen, werden. Dabei sollte die Partikelgröße des zerkleinerten Fest-Flüssig-Gemisches vorzugsweise unter 10 cm, besonders bevorzugt unter 1 cm, insbesondere unter 2 mm, liegen.

Dem Fest-Flüssig-Gemisch oder mindestens einem der Ausgangstoffe kann vor und/ oder während der Behandlung mindestens ein Katalysator mit oder ohne Zugabe von Wasser und/oder einer wässrigen Lösung zugegeben werden. Der Katalysator kann aus mindestens einer oder auch mehreren, verschiedenen Komponenten bestehen. Diese bilden dann gemeinsam ein Katalysatorgemisch. Eine Komponente des Katalysators kann beispielsweise aus einer Säure bestehen. Diese kann in vorteilhafter Weise eine Carbonsäure und insbesondere eine Protonensäure verwendet werden. Als vorteilhaft hat sich die Verwendung einer Di- oder Tricarbonsäure, und vor allem von Weinsäure oder Zitronensäure herausgestellt. Sowohl Zitronensäure als auch Weinsäure sind kristallin und nicht toxisch. Beide kommen in der Natur in Früchten vor (Zitronensäure in Zitrusfrüchten wie zum Beispiel Zitronen, Weinsäure in Weintrauben). Es kann in besonders vorteilhafter Ausgestaltung der Anmeldung aber beispielsweise auch eine anorganische Säure sein, vorzugsweise Schwefelsäure. Die Säure, die als Katalysatorkomponente eingesetzt wird, kann gleichzeitig auch zur Herstellung des sauren Mediums für den Inkubationsschritt eingesetzt werden.

Der Katalysator oder das Katalysatorgemisch kann, insbesondere auch zusätzlich, ein oder mehrere Metalle und/oder Metallverbindungen umfassen. Es kommen vorzugsweise Übergangsmetalle der Nebengruppen Ia, IIa, IVa, Va, VIa, VIIa und VIIIa des periodischen Systems der Elemente wie beispielsweise Eisen, Nickel, Kobalt, Kupfer, Zink, Rhodium, Palladium, Platin, Silber, Vanadium, Chrom, Wolfram, Molybdän und/oder Titan zum Einsatz, wobei sich Eisen als besonders vorteilhaft herausgestellt hat. Besonders bevorzugt sind auch Oxide dieser Metalle, beispielsweise Vanadiumoxid (V₂O₅), Kupferoxid (CuO), Zinkoxid (ZnO) und/oder Chromoxid (Cr₂O₃). Aber auch Metalle der Hauptgruppen des periodischen Systems der Elemente bzw. deren Oxide, beispielsweise Aluminiumoxid (Al₂O₃) können in vorteilhafter Weise als Katalysator eingesetzt werden.

Zusätzlich oder alternativ können vor der Behandlung des Fest-Flüssig-Gemisches auch Biokatalysatoren verwendet werden, um die Umsetzung des Fest-Flüssig-Gemisches in Brennstoffe, kohlenstoffhaltige Werkstoffe, Humus und/oder Maillard- bzw. Maillard-ähnliche Reaktionsprodukte zu beschleunigen. Dabei können beispielsweise Enzyme, Mikroorganismen (insbesondere Bakterien und/oder Pilze), pflanzliche Zellen, tierische Zellen und/oder Zellextrakte in freier und/oder immobilisierter Form eingesetzt werden. Biokatalysatoren können aufgrund der extremen Bedingungen während der Behandlung des Fest-Flüssig-Gemisches ausschließlich bei der Bearbeitung des Fest-Flüssig-Gemisches, insbesondere der Vorbehandlung, und/oder der Aufarbeitung der Reaktions- und/oder Nebenprodukte eingesetzt werden.

In weiterer Ausgestaltung des Gegenstands der Anmeldung ist vorgesehen, dass mindestens einer der Ausgangsstoffe und/oder das Fest-Flüssig-Gemisch vor und/oder während der Behandlung gemischt wird, vorzugsweise durch Rühren, Mischen, Suspendieren und/oder Aufwirbeln. Dabei kann bzw. können zum Mischen eine oder mehrere Mischvorrichtung(en), insbesondere eine Kombination verschiedener Mischvorrichtungen, vorzugsweise mindestens ein Flüssigkeitsstrahlmischer, -pumpe oder eine Düse, eingesetzt werden. Anmeldungsgemäß bevorzugt sind Mischvorrichtungen, die ohne bewegliche Teile im Reaktionsraum auskommen.

In weiterer Ausgestaltung des Gegenstands der Anmeldung ist vorgesehen, dass die Reaktionsprodukte nach der Behandlung mit einem Trockner oder einer Kombination verschiedener Trocknungsverfahren, vorzugsweise einem Konvektions- oder Kontakttrockner, besonders bevorzugt mit einem Strom- und/oder Band- und/oder Wirbelschichttrockner, getrocknet werden.

In weiterer vorteilhafter Ausgestaltung der Anmeldung ist vorgesehen, dass anfallendes Abwasser mechanisch, chemisch und/oder biologisch gereinigt wird.

In weiterer vorteilhafter Ausgestaltung der Anmeldung ist vorgesehen, dass bei der Behandlung, Bearbeitung und/oder Aufarbeitung anfallende Abluft mechanisch, chemisch und/oder biologisch gereinigt wird.

Die Anmeldung betrifft auch ein Verfahren, insbesondere einen kontinuierlichen oder semikontinuierlichen Prozess, zur industriellen Herstellung von verschiedenen Reaktions-, Zwischen-, Neben- und/oder Endprodukten. Die Reaktions-, Zwischen-, Neben und Endprodukte können beispielsweise Brennstoffe von Torf, über Braunkohle bis zu Steinkohle-ähnliche Brennstoffe, Humus, Maillard- oder Maillard-ähnliche Reaktionsprodukte, kohlenstoffhaltige Werkstoffe wie Dämmstoffe, Nanoschwämme, -kügelchen, -fasern, -kabel, Aktiv- oder Sorptionskohle, Grillkohleersatzstoff, hochverdichtete Kohlenstoffprodukte und Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe umfassen.

Gemäß der Anmeldung ist vorgesehen, dass das Fest-Flüssig-Gemisch zumindest teilweise aus Biomasse besteht. Dabei wird durch Zufuhr von Druck und Hitze das Grundprinzip der hydrothermalen Karbonisierung genutzt, um in dem effizienten und äußerst wirtschaftlichen anmeldungsgemäßen Verfahren feuchte Biomasse unter Freisetzung von Wärmeenergie zunächst zu depolymerisieren und hydrolysieren. Die Polymerisation der entstandenen Monomere führt innerhalb weniger Stunden zum Aufbau kohlenstoffhaltiger Reaktionsprodukte. Gewünschte Reaktionsprodukte werden in Abhängigkeit von den Reaktionsbedingungen hergestellt. Beispielsweise entsteht nach kürzerer Reaktionsdauer unter anderem zunächst Humus und im weiteren Reaktionsverlauf Brennstoffe mit steigendem Kohlenstoffgehalt, die zur Energiegewinnung geeignet sind.

Die Anmeldung sieht auch die Herstellung von verschiedenen Reaktions-, Zwischen-, Neben- und/oder Endprodukten nach dem anmeldungsgemäßen Verfahren vor, einschließlich der Herstellung von Brennstoffen von Torf, über Braunkohle bis zu Steinkohle-ähnlichen Brennstoffe, Humus, Maillard- oder Maillard-ähnlichen Reaktionsprodukte, kohlenstoffhaltige Werkstoffe wie Dämmstoffe, Nanoschwämme, - kügelchen, -fasern, -kabel, Aktiv- oder Sorptionskohle, Grillkohleersatzstoff, hochverdichtete Kohlenstoffprodukte und Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe.

Anmeldungsgemäß kann das Verfahren auch eine Vorstufe zur Erzeugung von Energie aus Biomasse sein, bei dem ein Brennstoff nach dem anmeldungsgemäßen Verfahren hergestellt wird und dieser Brennstoff anschließend zur Energieerzeugung konditioniert wird. Die Konditionierung kann dabei beispielsweise aus einer Herstellung von Pellets oder Briketts aus staubförmigem oder humusartigem Brennstoff bestehen. In vorteilhafter Ausgestaltung dieses Verfahrens ist dann vorgesehen, den konditionierten Brennstoff zur Energieerzeugung zu verwenden und insbesondere zu verbrennen. Anmeldungsgemäß kann ein Verfahren zur Erzeugung von verschiedenen Energieformen einschließlich von Wärmeenergie und/oder elektrischem Strom durchgeführt werden, bevorzugt eine Kombination derselben unter Verwendung des anmeldungsgemäß hergestellten Brennstoffs. Anmeldungsgemäß können ferner verschiedene Kombinationen zur Erzeugung von verschiedenen Energieformen aus unterschiedlichen erneuerbaren Energieträgern einschließlich anderer fester, flüssiger und gasförmiger Brennstoffe aus nachwachsenden Rohstoffen, fossilen Brennstoffen, Wasserkraft, Solar- und/oder Windenergie und verschiedener Speicherformen vorgenannter Energieträger und -erzeugungssystemen und unter Verwendung des anmeldungsgemäß hergestellten Brennstoffs eingesetzt werden.

Die Anmeldung betrifft nicht ein Verfahren zur Erzeugung von Energie bevorzugt solcher, bei denen eine Dampf- und/oder Gasturbine zum Einsatz kommt, einschließlich solcher Verfahren, bei denen der anmeldungsgemäße Brennstoff verwendet wird, in Kombination mit speicherbaren Energiearten durch Windkraft insbesondere von Druckluft und besonders bevorzugt des Dispatchable Wind Power Systems (DWPS).

Die Anmeldung betrifft nicht die Verwendung eines anmeldungsgemäß hergestellten Brennstoffs zur Erzeugung von Energie aus Biomasse.

Die Anmeldung sieht auch eine Vorrichtung vor, die eine effiziente Behandlung von Fest-/Flüssiggemischen im industriellen Maßstab ermöglicht.

In weiterer Ausgestaltung des Gegenstands der Anmeldung ist vorgesehen, dass der Reaktor aus einem zylindrischen Grundkörper besteht und/oder druckfest ausgebildet ist.

In weiterer Ausgestaltung des Gegenstands der Anmeldung ist vorgesehen, dass der Reaktor einen kegelförmigen Boden aufweist, der mit der Reaktorachse einen Winkel von maximal 45 Grad, bevorzugt kleiner 40 Grad, besonders bevorzugt kleiner 35 Grad, bildet.

In weiterer vorteilhafter Ausgestaltung der Anmeldung ist vorgesehen, dass der Innenraum des Reaktors, insbesondere die Boden- beziehungsweise Wandteile, aus hitze- und korrosionsbeständigem sowie wasserabweisendem Material zum Beispiel aus beschichtetem Metall, insbesondere Edelmetall oder keramischen Werkstoffen bestehen. Vorzugsweise sind der Innenraum des Reaktors, insbesondere im Bodenbeziehungsweise Wandbereich, sowie Armaturen und andere mit dem Reaktionsgemisch in Berührung kommenden Teile ganz oder teilweise oberflächenbehandelt und/oder mit einem Beschichtungsstoff beschichtet, der Anbackungen oder Ablagerungen von Bestandteilen des Reaktionsgemischs verhindert oder verringert. Der Beschichtungsstoff kann vorzugsweise korrosionsfeste, verschleißarme und/oder wasserabweisende Materialien, insbesondere metallische oder keramischen Werkstoffe und Legierungen, bevorzugt aus Chrom, Nickel, Molybdän, Titan, Aluminium, Niobium sowie aus den Stoffen Silicium , Eisen, Cobalt, Wolfram, Bor und Kohlenstoff und besonders bevorzugt aus Titan-Aluminium-Verbindungen, umfassen. Insbesondere ist vorgesehen, dass der Beschichtungsstoff mittels eines Beschichtungsverfahrens, bevorzugt durch Plattierung, besonders bevorzugt durch ein Flammspritzverfahren wie zum Beispiel das High-velocity oxy-fuel (HVOF)-Verfahren, aufgebracht wird.

Gemäß der Anmeldung ist vorgesehen, dass im Innenraum des Reaktors mindestens ein Membranteil angeordnet ist. Dieses Membranteil kann in Abständen von weniger als 10 mm, vorzugsweise weniger als 6 mm, besonders bevorzugt weniger als 4 mm, von Löchern durchsetzt sein. Wenn das Membranteil als Blech ausgebildet ist, kann man es aufgrund der Löcher auch als Membranblech bezeichnen. Es können mehrere Membranteile im Reaktor vorgesehen sein.

In weiterer Ausgestaltung des Gegenstands der Anmeldung ist vorgesehen, dass der Durchmesser der Löcher in dem Membranteil geringer als 400 µ m, vorzugsweise geringer als 100 µ m, besonders bevorzugt geringer als 35 µ m, ist.

In weiterer Ausgestaltung des Gegenstands der Anmeldung ist vorgesehen, dass die Löcher in dem Membranteil trichterförmig ausgebildet sind.

In weiterer Ausgestaltung des Gegenstands der Anmeldung ist vorgesehen, dass zwischen dem durchlöcherten Membranteil und der Reaktorwand mindestens ein Hohlraum vorhanden ist. Das Membranteil kann dabei mit der Reaktorwand derart verbunden sein, dass der Hohlraum in voneinander getrennte Bereiche unterteilt ist. Bei einer solchen Ausführungsform ist es besonders vorteilhaft, wenn mindestens ein Bereich des Hohlraums mit einer Eintrittsöffnung und mindestens ein anderer Bereich des Hohlraums mit einer Austrittsöffnung versehen sind. Die Verbindung zwischen dem Membranteil und der Reaktorwand kann beispielsweise durch punkt- oder linienförmiges Verschweißen erfolgen, wobei die nicht miteinander verschweißten Bereiche dann durch Einpressen eines hydraulischen Fluids voneinander getrennt werden können, so dass zwischen der Eintritts- und Austrittsöffnung eine Leitung entsteht, durch die beispielsweise eine Kühlflüssigkeit geleitet werden kann, wie in der US-A-4 700 445 beschrieben. In diesem Fall kann die Reaktorwand also gleichzeitig als Wärmetauscher genutzt werden.

In weiterer Ausgestaltung des Gegenstands der Anmeldung ist vorgesehen, dass die Reaktorwand doppelwandig ausgeführt ist, wobei zwischen einer inneren Wandschicht und einer äußeren Wandschicht mindestens ein Hohlraum angeordnet ist. Dabei können die beiden Wandschichten derart miteinander verbunden sein, dass der Hohlraum in voneinander getrennte Bereiche unterteilt ist. Mindestens ein Bereich des Hohlraums kann dann vorzugsweise mit einer Eintrittsöffnung und mindestens ein anderer Bereich des Hohlraums mit einer Austrittsöffnung versehen sein. Die Verbindung zwischen den beiden Wandschichten kann beispielsweise durch punkt- oder linienförmiges Verschweißen erfolgen, wobei die nicht miteinander verschweißten Bereiche dann durch Einpressen eines hydraulischen Fluids voneinander getrennt werden können, so dass zwischen der Eintritts- und Austrittsöffnung eine Leitung entsteht, durch die beispielsweise eine Kühlflüssigkeit oder ein Thermoöl geleitet werden kann, wie in der US-A-4 700 445 beschrieben. In diesem Fall kann auch eine doppelwandige Reaktorwand gleichzeitig als Wärmetauscher genutzt werden.

In weiterer Ausgestaltung des Gegenstands der Anmeldung ist vorgesehen, dass der Reaktor mit einem Temperierungssystem versehen ist, das vorzugsweise an mindestens eine Steuereinheit angeschlossen ist. Das Temperierungssystem kann in vorteilhafter Weise mindestens einen Einschraubheizkörper, mindestens eine Heiz- und Kühlschlange, mindestens eine auf die Reaktorwand aufgeschweißte Halbrohrschlange, mindestens ein Wärmeaustauschrohr oder eine -platte und/oder mindestens ein Membranteil bzw. gelochtes Boden- und/oder Wandteil umfassen. Das Temperierungssystem kann auch eine Doppelwand beziehungsweise Doppelrohr-Konstruktion des Reaktors umfassen. In weiterer vorteilhafter Ausgestaltung der Anmeldung können sämtliche im Reaktor von Medien durchströmten Vorrichtungen einschließlich der durchlöcherten Membranteile, Flüssigkeitsstrahlmischer, -pumpen und Düsen Teil des Temperierungssystems sein.

Die Anmeldung sieht dabei auch Einrichtungen vor, die eine im Wesentlichen nicht-mechanische Anordnung aufweisen, d. h. keine oder möglichst wenige mechanische und/oder bewegliche Teile umfassen.

In weiterer Ausgestaltung des Gegenstands der Anmeldung ist vorgesehen, dass die Einrichtung eine Mischvorrichtung zum Durchmischen, Rühren, Aufwirbeln des Reaktorinhalts ist. Der Reaktor kann also auch mit einer Misch-, Rühr-, Aufwirbelungs- und/oder Reinigungsvorrichtung ausgestattet sein. Zum Eintrag kinetischer Energie in den Reaktorinhalt können dabei mechanische Rühr- und Mischsysteme mit und/oder ohne bewegte Teile verwendet werden.

In weiterer Ausgestaltung des Gegenstands der Anmeldung ist vorgesehen, dass die Mischvorrichtung ohne bewegliche Teile ausgestattet ist und zum Beispiel mindestens einen Flüssigkeitsstrahlmischer, mindestens eine Flüssigkeitspumpe und/oder mindestens eine Düse umfasst.

In weiterer Ausgestaltung des Gegenstands der Anmeldung ist vorgesehen, dass die Mischvorrichtung, insbesondere die Vorrichtungen im Ansaugbereich, derart gestaltet ist, dass die in diesem Bereich auftretenden Turbulenzwirbel und Scherbelastungen die Feststoffe zerkleinern und desagglomerieren.

In weiterer Ausgestaltung des Gegenstands der Anmeldung ist vorgesehen, dass die Einrichtung eine Zerkleinerungsvorrichtung ist, insbesondere zur Zerkleinerung der festen Inhaltsstoffe im Reaktor, die vorzugsweise mindestens eine Mühle und/oder mindestens einen Häcksler umfasst.

In weiterer Ausgestaltung des Gegenstands der Anmeldung ist vorgesehen, dass die Einrichtung eine Trocknungsvorrichtung ist, die vorzugsweise mindestens einen Konvektions- oder Kontakttrockner, bevorzugt einen Strom- und/oder Bandtrockner, umfasst.

Gemäß des Gegenstands der Anmeldung ist vorgesehen, dass die Prozesswasseraufbereitung während des laufenden Prozesses stattfindet. Die Einrichtung ist dann vorzugsweise eine Prozesswasseraufbereitungsanlage, die einen Filter umfasst. Dabei dient die Prozesswasseraufbereitung im Wesentlichen der Trennung von Feststoffen aus dem Reaktionsgemisch. Die Prozesswasseraufbereitungsanlage umfasst mindestens ein Prozesswasserreservoir und/oder mindestens ein Fest-Flüssig-Trenngerät. In besonders vorteilhafter Ausgestaltung der Anmeldung ist vorgesehen, dass die Vorrichtung zur Prozesswasseraufbereitung mindestens eine Sieb-, Filter-, Zentrifugen-, Hydrozykloneinheit, ein kraftfeldunterstütztes Trenngerät oder eine Kombination derselben umfasst. Die Prozesswasseraufbereitungsanlage kann dabei aus einer Kombination verschiedener oder gleicher Trennvorrichtungen bestehen.

Die Prozesswasseraufbereitungsanlage kann auch mindestens eine Filteranlage, insbesondere einen Rotationsscheibenfilter, bevorzugt mit Keramikscheibe aufweisen.

In weiterer Ausgestaltung des Gegenstands der Anmeldung ist vorgesehen, dass die Einrichtung eine biologische Abwasseraufbereitungsanlage ist, die vorzugsweise mindestens einen Bioreaktor, bevorzugt einen Biomembranreaktor, umfasst. Der Bioreaktor kann dabei mindestens einen Schlaufenrektor aufweisen.

In weiterer Ausgestaltung des Gegenstands der Anmeldung ist vorgesehen, dass der Schlaufenrektor mindestens eine Düse zur Vermischung der gasförmigen und flüssigen Phase umfasst.

In weiterer Ausgestaltung des Gegenstands der Anmeldung ist vorgesehen, dass der Schlaufenreaktor ein Rohr umfasst, in dem die Strömung von oben nach unten verläuft.

In weiterer Ausgestaltung des Gegenstands der Anmeldung ist vorgesehen, dass die Einrichtung eine Luftreinigungsvorrichtung ist, die vorzugsweise mindestens eine Vorrichtung zur Reinigung der Prozess- und/oder Abluft umfasst, insbesondere einen Luftfilter.

Die Verwendung der Vorrichtung für die Herstellung von Brennstoffen, kohlenstoffhaltigen Werk- und Nutzstoffen, Humus und/oder Maillardbeziehungsweise Maillard-ähnlichen Reaktionsprodukten aus Biomasse kann ebenfalls vorgesehen sein.

Die Anmeldung beschreibt auch eine Anlage, die eine effiziente Erzeugung von Energie einem Brennstoff aus Biomasse im industriellen Maßstab ermöglicht, wobei mindestens eine Anordnung zur Energieerzeugung vorgesehen ist.

In vorteilhafter Ausgestaltung der Anlage ist vorgesehen, dass die Anordnung zur Energieerzeugung eine Verbrennungsanlage zur Verwertung eines Festbrennstoffs aus Biomasse umfasst, in der die in der anmeldungsgemäßen Vorrichtung zur Behandlung der Biomasse hergestellten Brennstoffe direkt verbrannt und zur Erzeugung von Verbrennungsgasen und Wasserdampf genutzt werden können. Die Verbrennungsanlage kann mit einer Turbine und einem Generator gekoppelt sein, so dass aus den in der Verbrennungsanlage erzeugten Gasen und dem Wasserdampf elektrischer Strom erzeugt werden kann. Durch diese Anordnung kann in ein kombinierter Gas-Dampfturbinenprozess zur Stromerzeugung mit höchstmöglichen Effizienzgraden höher als 43 Prozent, bevorzugt höher als 46 Prozent, besonders bevorzugt 49 Prozent - 55 Prozent, realisiert werden. Um die Abluft der Verbrennungsanlage umweltgerecht zu reinigen, ist es ferner möglich, an die Verbrennungsanlage eine Rauchgasreinigungsanlage anzuschließen.

Die Anlage umfasst mindestens einen Reaktor, der für Temperaturen von mindestens 160 Grad Celsius und mindestens einem Druck von über 7 bar ausgelegt ist. Gleichzeitig wird in der Anlage ein Brennstoff aus Biomasse zum Betreiben derselben verwendet, der nach einem Verfahren gemäß Anspruch 1 hergestellt wird.

Die Anordnung zur Energieerzeugung kann einen Pelletofen oder ein Kraftwerk mit Kohlenstaubfeuerung aufweisen, wobei eine druckaufgeladene stationäre Wirbelschichtfeuerung (DKSW) oder eine Druckkohlenstaubfeuerung (DKSF) vorgesehen sein kann.

Die Anordnung zur Energieerzeugung kann eine Kohlenstoff-Brennstoffzelle aufweisen.

Es ist vorgesehen, dass die Vorrichtung zur Behandlung der Biomasse mindestens einen Reaktor zur Aufnahme der Biomasse und mindestens eine Einrichtung zur Bearbeitung der Biomasse und/oder Aufarbeitung der Reaktionsprodukte und/oder der Nebenprodukte aufweist.

Der Reaktor ist ein Membranreaktor und weist eine Filter-Vorrichtung zum Abziehen von Wasser aus dem Fest-Flüssig-Gemisch während der Behandlung auf. Vorzugsweise umfasst mindestens ein Reaktor mindestens ein Membranteil und/oder mindestens eine Einrichtung zur Erzeugung einer zirkulierenden Wirbelschicht. Gleichzeitig ist der Reaktor für Temperaturen von mindestens 160 Grad Celsius und mindestens einen Druck von über 7 bar ausgelegt.

Um die Kapazität beziehungsweise den Durchsatz der Anlage zu erhöhen, können mehrere Reaktoren zur Aufnahme und Behandlung der Biomasse vorgesehen sein. Diese können dann in Serie geschaltet sein.

In weiterer Ausgestaltung des Gegenstands der Anmeldung ist der Reaktor mit einem Temperierungssystem versehen, das an mindestens eine Steuereinheit angeschlossen seinkann. Das Temperierungssystem kann mindestens einen Einschraubheizkörper, mindestens eine Heiz- und Kühlschlange, mindestens eine auf die Reaktorwand aufgeschweißte Halbrohrschlange und/oder mindestens ein Wärmeaustauschrohr oder eine -platte umfassen. Das Temperierungssystem kann auch eine Doppelwand beziehungsweise Doppelrohr-Konstruktion des Reaktors umfassen.

In weiterer Ausgestaltung des Gegenstands der Anmeldung ist vorgesehen, dass die Einrichtung als Mischvorrichtung zum Durchmischen, Rühren, Aufwirbeln des Reaktorinhalts ausgebildet ist. Der Reaktor kann also auch mit einer Misch-, Rühr-, Aufwirbelungs- und/oder Reinigungsvorrichtung ausgestattet sein. In weiterer Ausgestaltung der Anmeldung kann vorgesehen sein, dass die Einrichtung eine Zerkleinerungsvorrichtung ist, insbesondere zur Zerkleinerung der festen Inhaltsstoffe im Reaktor, die vorzugsweise mindestens eine Mühle und/oder mindestens einen Häcksler umfasst.

In weiterer Ausgestaltung des Gegenstands der Anmeldung kann vorgesehen sein, dass die Einrichtung als Trocknungsvorrichtung ausgebildet ist, die vorzugsweise mindestens einen Konvektions- oder Kontakttrockner, bevorzugt einen Strom- und/ oder Bandtrockner, umfasst.

In weiterer Ausgestaltung des Gegenstands der Anmeldung kann vorgesehen seim, dass die Prozesswasseraufbereitung während des laufenden Prozesses stattfindet. Die Einrichtung kann dann eine Prozesswasseraufbereitungsanlage sein, die mindestens ein Sieb, einen Filter, einen Hydrozyklon, eine Zentrifuge oder ein kraftfeldunterstütztes Trenngerät umfassen kann. Dabei kann die Prozesswasseraufbereitung im Wesentlichen der Trennung von Feststoffen aus dem Reaktionsgemisch dienen. Die Prozesswasseraufbereitungsanlage umfasst mindestens ein Prozesswasserreservoir und/oder mindestens ein Fest-Flüssig-Trenngerät. In weiterer Ausgestaltung des Gegenstands der Anmeldung kann vorgesehen sein, dass die Vorrichtung zur Prozesswasseraufbereitung mindestens eine Sieb-, Filter-, Zentrifugen-, Hydrozykloneinheit, ein kraftfeldunterstütztes Trenngerät oder eine Kombination derselben umfasst. Die Prozesswasseraufbereitungsanlage kann dabei aus einer Kombination verschiedener oder gleicher Trennvorrichtungen bestehen. Die Prozesswasseraufbereitungsanlage kann auch mindestens eine Filteranlage aufweisen, insbesondere mit Keramikscheiben und auch mit einem Rotationsscheibenfilter und/oder mit einem Zentrifugalmembranfilter.

Nicht gemäß der Anmeldung ist vorgesehen, dass die Einrichtung eine biologische, physikalische oder Wasseraufbereitungsanlage oder eine Kombination derselben ist, die vorzugsweise mindestens eine Fest-Flüssigtrennung, einen Bioreaktor, bevorzugt einen Biomembranreaktor, eine Umkehrosmose, Mikrofiltration, Ultrafiltration und/oder eine Naßoxidation umfasst. Der Bioreaktor umfasst dabei vorzugsweise mindestens einen Schlaufenrektor.

In weiterer Ausgestaltung der Anmeldung ist vorgesehen, dass die Einrichtung eine Luftreinigungsvorrichtung ist, die vorzugsweise mindestens eine Vorrichtung zur Reinigung der Prozess- und/oder Abluft umfasst, insbesondere einen Luftfilter.

Besonders vorteilhaft ist die Verwendung der anmeldungsgemäßen Anlage zur Erzeugung von Energie, insbesondere elektrischem Strom.

Der Werk- und/oder Brennstoff umfasst Brennstoffe von Torf, über Braunkohle bis zu Steinkohle-ähnliche Brennstoffe, Humus, Maillard- oder Maillard-ähnliche Reaktionsprodukte, sowie kohlenstoffhaltige Werkstoffe wie Dämmstoffe, Nanoschwämme, -kügelchen, -fasern, -kabel, Rein-, Reinst- und Ultrareinkohle- , bzw. Aktiv- oder Sorptionskohle -ähnliche Stoffe , Grillkohleersatzstoff, hochverdichtete Kohlenstoffprodukte und -Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe.

Der anmeldungsgemäße Werk- und/oder Brennstoff kann einen im Vergleich zur Biomasse um 10 bis 300 Prozent, auch 50 bis 300 Prozent, oder auch 100 bis 300 Prozent, und insbesondere 200 bis 300 Prozent erhöhten Kohlenstoffanteil bezogen auf den prozentualen Massenanteil der Elemente (Trockenmasse) aufweisen.

Alternativ kann der anmeldungsgemäße Werk- und/oder Brennstoff einen im Vergleich zur Biomasse um 5 bis 200 Prozent, auch 10 bis 150 Prozent, auch 10 bis 120 Prozent, und insbesondere 50 bis 100 Prozent erhöhten Kohlenstoffanteil bezogen auf den prozentualen Massenanteil der Elemente (Trockenmasse) aufweisen.

Der anmeldungsgemäße Werk- und/oder Brennstoff weist einen Kohlenstoffanteil im Vergleich zum Ausgangsstoff von 50 bis 90 Prozent, auch von 55 bis 80 Prozent, und auch von über 98 Prozent, jeweils bezogen auf den prozentualen Massenanteil der Elemente (Trockenmasse) auf.

In weiterer Ausgestaltung des Gegenstands der Anmeldung ist der Wasserstoffanteil des Werk- und/oder Brennstoffs im Vergleich zur Biomasse um 1 bis 300 Prozent, auch 5 bis 200 Prozent, und auch um 20 bis 100 Prozent jeweils bezogen auf den prozentualen Massenanteil der Elemente (Trockenmasse) vermindert.

In weiterer Ausgestaltung des Gegenstands der Anmeldung ist der Sauerstoffanteil des Werk- und/oder Brennstoffs im Vergleich zum Ausgangsstoff um 1 bis 300 Prozent, auch um 5 bis 200 Prozent, und auch um 15 bis 100 Prozent jeweils bezogen auf den prozentualen Massenanteil der Elemente (Trockenmasse) vermindert.

In weiterer Ausgestaltung des Gegenstands der Anmeldung ist der Stickstoffanteil des Werk- und/oder Brennstoffs im Vergleich zum Ausgangsstoff um 1 bis 300 Prozent, bevorzugt 5 bis 200 Prozent, besonders bevorzugt um 15 bis 100 Prozent jeweils bezogen auf den prozentualen Massenanteil der Elemente (Trockenmasse) vermindert.

Der anmeldungsgemäße Werk- und/oder Brennstoff kann mindestens oder mehr als 65 Prozent des ursprünglichen Brennwertes der Ausgangsstoffe und insbesondere der Biomasse bezogen auf die Trockenmasse aufweisen.

Der anmeldungsgemäße Werk- und/oder Brennstoff kann aufgrund seiner Zusammensetzung und Struktur im Vergleich zu Biomasse bzw. alternativen fossilen oder Biomasse-Brennstoffen deutlich günstigere und umweltfreundlichere Verbrennungseigenschaften haben, zum Beispiel aufgrund verminderter Ascheanteile, geringerem Chlor-, Nitrat-, Schwefel- und Schwermetallgehalt sowie geringerer Emissionen von Staub, Feinstaub und gasförmigen Schadstoffen einschließlich Stick- und Schwefeloxiden.

Der anmeldungsgemäße Werk- und/oder Brennstoff kann ferner im Vergleich zu Biomasse bzw. alternativen festen fossilen oder Biomasse-Brennstoffen auch eine höhere Reaktivität und eine niedrigere Selbstentzündungstemperatur aufweisen.

Wenn er eine Porosität aufweist, dann lässt sich der anmeldungsgemäße Werk- und/ oder Brennstoff mit geringerem Energieaufwand zerkleinern als feste fossile Brennstoffe mit vergleichbarem Brennwert bzw. Kohlenstoffgehalt.

Eine große Oberfläche ergibt sich bei einer geringen Partikelgröße des anmeldungsgemäßen Werk- und/oder Brennstoffs, insbesondere ein Partikelgröße von etwa 2 Nanometer bis 50 Mikrometer, auch unter einem Mikrometer und auch unter 200 Nanometer. Der anmeldungsgemäße Werk- und/oder Brennstoff lässt sich dann aufgrund der kleinen Partikelgröße und seiner großen Oberfläche gut trocknen.

Der anmeldungsgemäße Werk- und/oder Brennstoff enthält Maillard- oder Maillard-ähnliche Reaktionsprodukte.

Die Temperatur kann zwischen 160 und 300 Grad Celsius, und auch zwischen 185 und 225 Grad, eingestellt werden. Der Druck soll auf mindestens 7 bar, auch zwischen 10 und 34 bar, und auch zwischen 10 und 17 bar, 18 und 26 bar oder 27 und 34 bar, eingestellt werden. Die Behandlungsdauer soll bei mindestens 2 Stunden, vorzugsweise 3 bis 60 Stunden liegen, auch bei 5 bis 30 Stunden oder bei 31 bis 60 Stunden, insbesondere bei 6 bis 12 Stunden oder bei 13 bis 24 Stunden. Nach der Behandlung der Biomasse werden die Reaktionsprodukte mit einem Trockner, auch mit einem Konvektions- oder Kontakttrockner, mit einem Strom- und/oder Band-, und/oder mit einem Wirbelschichttrockner, bis zu einem gewünschten Restfeuchtigkeitsgehalt von 6 bis 25 Prozent, auch 10 bis 20 Prozent, oder auch 12 bis 15 Prozent, getrocknet.

Die Reaktions-, Zwischen-, Neben und Endprodukte des oben beschriebenen Verfahrens umfassen Brennstoffe von Torf, über Braunkohle bis zu Steinkohle-ähnliche Brennstoffe, Humus, Maillard- oder Maillard-ähnliche Reaktionsprodukte, sowie kohlenstoffhaltige Werkstoffe wie Dämmstoffe, Nanoschwämme, -kügelchen, - fasern, -kabel, Aktiv- oder Sorptionskohle, Grillkohleersatzstoff, hochverdichtete Kohlenstoffprodukte und -Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe.

Die Anmeldung betrifft ferner die Verwendung des anmeldungsgemäß hergestellten Werk- und/oder Brennstoffs zur Erzeugung von Energie aus Biomasse.

**Biomasse** umfasst im Gegensatz zu fossilen Brennstoffen nachwachsende Rohstoffe, die als heimische Energieträger langfristig verfügbar sind, sowie alle flüssigen und festen organischen Stoffe und Produkte biologischer und biochemischer Vorgänge und deren Umwandlungsprodukte, die für dieses Verfahren einen ausreichend hohen Kohlenstoffanteil besitzen und auch sonst in Ihrer Zusammensetzung und Beschaffenheit zu wirtschaftlich nutzbaren Reaktions-, Zwischen-, Neben und Endprodukten durch das anmeldungsgemäße Verfahren einschließlich Brennstoffen verarbeitet werden können. Zum Beispiel zählen zu den Ausgangsstoffen Kohlenhydrate, Zucker und Stärken, land- und forstwirtschaftliche Erzeugnisse, auch speziell angebaute Energiepflanzen (schnell wachsende Baumarten, Schilfgräser, Getreideganzpflanzen u.ä.), Soja, Zuckerrohr und Getreidestroh sowie biogene Rest-, Abfallstoffe und Nebenprodukte, Pflanzen und Pflanzenreste anderer Herkunft (Straßenbegleitgrün, Landschaftspflegegut u.ä.), landwirtschaftliche Abfälle einschließlich Stroh, Zuckerrohrblätter, Abputzgetreide, unverkäufliche Partien an landwirtschaftlichen Erzeugnissen wie zum Beispiel Kartoffeln oder Zuckerrüben, verdorbene Silagepartien sowie sonstige Futterreste, Rasenschnittgut, Getreidestroh, Rübenblatt, Zuckerrohrblätter, kohlenstoffhaltige Rest- und Abfallstoffe einschließlich Biomüll, heizwertreiche Fraktionen von Haus- und Gewerbeabfällen (Restmüll), Klärschlamm, verschiedene Holzarten und -klassen einschließlich Waldholz, Bauholz, Paletten, Altmöbel, Sägemehl, Reste und Abfälle aus der Ernährungsindustrie einschließlich Küchen- und Speiseabfälle, Abfallgemüse, Altfette sowie Papier und Zellstoff, Textilien insbesondere aus Naturfasern und natürlichen Polymeren und tierische Exkremente einschließlich Gülle, Pferdemist und Geflügelkot. Kadaver und insbesondere Tierkadaver können auch zu Biomasse gerechnet werden.

Unter **Behandlung der Ausgangsstoffe und/oder des Fest-Flüssig-Gemisches** im Sinne der Anmeldung werden alle Einwirkungen auf das Fest-Flüssig-Gemisch verstanden, die der Umwandlung des Fest-Flüssig-Gemisches in die Reaktionsprodukte dienen, insbesondere die Zufuhr von Energie zur Ingangsetzung und Aufrechterhaltung der Umsetzungsreaktion, einschließlich der Behandlung des Fest-Flüssig-Gemisches bei einer Temperatur von über 100 Grad Celsius und einem Druck von über 5 bar .

**Bearbeitung der Biomasse und/oder des Fest-Flüssig-Gemisches** im Sinne der Anmeldung ist die Bearbeitung der Ausgangsstoffe, Reaktions- und/oder Zwischenprodukte in verschiedenen Schritten vor und nach dem chemischen Umsetzungsprozess . Bearbeitung umfasst sämtliche Schritte, Vorgänge und Einwirkungen auf die Reaktionspartner einschließlich der Vorbehandlung und/oder Nachbehandlung.

Unter **Vorbehandlung** werden alle Einwirkungen verstanden, die bis zum Abschluss des Befüllungsvorgangs des Reaktionsraums und dem Beginn der Zufuhr von Energie zur Ingangsetzung der Umsetzungsreaktion auf das Fest-Flüssig-Gemisch einwirken. Insbesondere zählt zur Vorbehandlung auch eine Vorwärmung der Ausgangsstoffe sowie eine Zerkleinerung mit vorwiegender, d.h. mehr als zwei Drittel der Bestandteile des Reaktionsgemischs, Partikelgröße von unter 10 mm innerhalb oder außerhalb des Reaktionsraums.

**Fest-Flüssig-Gemische** im Sinne der Anmeldung sind alle Suspensionen, Dispersionen und sonstigen dispersen Systeme, einschließlich flüssigkeitshaltiger Feststoffe, insbesondere Biomasse. Das anmeldungsgemäße Verfahren findet insbesondere Anwendung für solche Fest-Flüssig-Gemische, die während des Reaktionsverlaufs auf physikalischem oder chemischem Wege zur Erhöhung des Gehalts der flüssigen Phase beziehungsweise an Lösungsmittel und/oder zur physikalischen oder chemischen Veränderung des Feststoffs führen, die eine verbesserte Fest-Flüssig-Trennung oder veränderte Verhältnisse mit höheren Feststoffanteilen ermöglichen. **Ausgangsstoffe** sind in diesem Zusammenhang flüssigkeitshaltige oder nicht-flüssigkeitshaltige Feststoffe, die zur Herstellung des Fest-Flüssig-Gemisches eingesetzt werden.

**Aufarbeitung und/oder Konditionierung der Reaktionsprodukte und/oder Nebenprodukte** im Sinne der Anmeldung umfasst alle Einwirkungen auf die Neben- und/oder Endprodukte der Umsetzungsreaktion, mittels derer diese in die gewünschte oder erforderliche Form gebracht werden.

Unter **semikontinuierlichem oder kontinuierlichem Verfahren** im Sinne der Anmeldung ist die Herstellung von Reaktions-, Zwischen-, Neben und Endprodukten im Technikums- und/oder industriellem Maßstab zu verstehen, bei der mindestens ein Kriterium, oder auch zwei oder auch mehrere der unten angeführten Kriterien erfüllt sind:
1. Die Temperatur, insbesondere in mindestens einem Druckbehälter, Reaktor oder Anlagenbestandteil, liegt über mindestens zwei Reaktionszyklen hinweg kontinuierlich oberhalb von 40 bis 90 Grad Celsius, bevorzugt von 60 bis 70 Grad Celsius und/oder oberhalb der Siedetemperaturen des Prozesswassers bei einem bar Absolutdruck, so dass ein längerer unmittelbarer und folgenloser händischer Kontakt mit der direkt mit dem Reaktionsgemisch in Berührung stehenden Behälterwand von über einer Minute nur mit Hilfsmitteln, isolierenden Stoffen oder zusätzlicen Vorrichtungen möglich ist.
2. Der Druck, insbesondere in mindestens einem Druckbehälter, Reaktor oder Anlagenbestandteil, liegt über mindestens zwei Reaktionszyklen hinweg kontinuierlich oberhalb von einem bar Absolutdruck. Mindestens zwei Behälter, davon mindestens ein Reaktor, sind in einer Weise miteinander verbunden, dass ein Transport, Druckausgleich oder die Speicherung von komprimierten Medien realisiert werden kann.
3. Die Bearbeitung der Ausgangsstoffe, Fest-Flüssig-Gemische, Reaktions-, Neben-, Zwischen- und/oder Endprodukte oder andere Reaktionsteilnehmer wird in mehr als einem Behälter innerhalb der Anlage durchgeführt.
4. Das Gesamtvolumen der Behälter, in denen diese Bearbeitung stattfindet und die gleichzeitig jeweils feste Bestandteile der Anlagen sind, beträgt mindestens 500 Liter wobei mindestens einer dieser Behälter, nicht allein händisch sondern nur mit zusätzlichen Hilfsmitteln zu bewegen ist.
5. Es wird ein vorbehandeltes kohlenstoffhaltiges Fest-Flüssig-Gemisch und/ oder unterschiedliche Arten von Ausgangsstoffen, Biomassen oder Kohlenstoffverbindungen, insbesondere von unterschiedlicher Beschaffenheit und Konsistenz, während eines Reaktionszyklus eingesetzt.
6. Verschiedene Ausgangsstoffe der Fest-Flüssig-Gemische, Reaktions-, Neben-, Zwischen- und/oder Endprodukte und/oder andere Reaktionsteilnehmer, einschließlich Katalysatoren und/oder Treib- oder Temperierungsmittel wie zum Beispiel Wasser, insbesondere Prozesswasser und/oder Gas wie Prozess-/Synthesegas, werden während eines Reaktionszyklus gleichzeitig, zeitversetzt, kontinuierlich oder diskontinuierlich dem Reaktionsgemisch zugeführt oder abgezogen.
7. Die Vorgänge unter 6. finden statt, während dieTemperatur vonDruckbehälter, Reaktor oder anderen Anlagenbestandteilen oberhalb von 60 bis 70 Grad Celsius oder oberhalb der Siedetemperaturen des Prozesswassers bei einem bar Absolutdruck oder während der Druck mindestens eines Anlagenbestandteils oberhalb von einem bar Absolutdruck liegt.
8. Das Reaktionsgemisch wird innerhalb eines zusammenhängenden Prozesses, insbesondere innerhalb einer Anlage, behandelt.
9. Vor und/oder während des Reaktionszyklus werden die Ausgangsstoffe oder das Reaktionsgemisch in Bewegung versetzt durch Einbringung von kinetischer Energie, insbesondere durch mindestens ein Rühr- oder Mischsystem oder eine Kombination von Rühr- oder Mischsystemen gleich welcher Art, bevorzugt unter Beteiligung mindestens eines nicht mechanischen Rühr- oder Mischsystems, wobei bei Verwendung eines einzelnen Systems, dieses keine magnetische Kupplung mit nur einer Welle aufweist und gleichzeitig auch nicht elektrisch betrieben wird.
10. Vor und/oder während des Zyklus wird den Ausgangsstoffen oder dem Reaktionsgemisch thermische Energie zu- und/oder abgeführt wird, insbesondere unter Verwendung mindestens eines Temperierungssystems oder einer Kombination aus verschiedenen Systemen oder Vorrichtungen, wobei bei Verwendung eines einzelnen Systems dieses vorzugsweise kein handelsüblicher Ofen ist und/oder keine wandständige Wärmeübertragung durch ein mit wenigen Handgriffen trennbares beheiztes Mantelgefäß, das elektrisch betrieben wird, aufweist.

Unter **Behälter** wird ein nach oben offener oder geschlossener Gegenstand verstanden, der in seinem Inneren einen Hohlraum aufweist, der insbesondere dem Zweck dient, seinen Inhalt von seiner Umwelt zu trennen. Ein Behälter, in dem die Umsetzungsreaktion, d. h. die Behandlung des Fest-Flüssig-Gemisches, und/oder die Bearbeitung des Fest-Flüssig-Gemisches durchgeführt wird, beispielsweise ein **Druckbehälter oder ein Reaktor,** wird durch einen nach außen abgeschlossenen Reaktionsraum oder Druckbehälterraum gebildet.

Als **Reaktor** wird insbesondere ein Behälter bezeichnet, in dem entscheidende Reaktionsschritte stattfinden. Als entscheidende Reaktionsschritte sind insbesondere die Schritte zu verstehen, die zum großen Teil zum Beispiel in einem Temperatur- und Druckbereich ablaufen, der im Durchschnitt vorliegen muss, um mindestens 10 bis 30 Prozent der Ausgangsstoffe in eines der genannten Reaktions-, Zwischen-, Neben und Endprodukte umwandeln zu können.

**Reaktionsräume** oder Druckbehälterräume werden definiert durch das Vorliegen von räumlichen Bereichen auch innerhalb nur eines Reaktions- oder Druckbehälterraums, in denen messbare voneinander abweichende Reaktionsbedingungen herrschen. Eine abweichende Reaktionsbedingung kommt dabei durch eine konstruktive, mechanische, strömungs- und/oder phasenbedingte, chemische, elektrische, oder elektrochemische oder anders geartete Einwirkung zustande. Die zu diesem Zweck verwendete Vorrichtung geht in der Regel über ein elektrisch betriebenes Rühr- oder Mischsystem mit einer einzigen Welle mit magnetischer Kupplung sowie über eine wandständige Wärmeübertragung einer druckbelasteten glatten Innenseite der äußeren Reaktorwand durch ein mit wenigen Handgriffen trennbares beheiztes Mantelgefäß, das elektrisch betrieben wird, eines Autoklaven für Laborzwecke hinaus.

Als **Reaktionszyklus,** Zyklus oder Reaktion wird die Dauer einer einzelnen Umsetzungsreaktion verstanden, die mit der Einbringung der Ausgangsprodukte in den Reaktionsraum und der Zufuhr von Energie beginnt, die der Ingangsetzung der Umsetzungsreaktion dient. Ein Zyklus dauert vom Start des Reaktionsprozesses bis zum Vorliegen des gewünschten Reaktionsprodukts im Reaktionsgemisch ohne Nachbehandlung oder Konditionierung beziehungsweise bis zur Beendigung des Reaktionsprozesses.

Zu **Rühr- oder Mischsystemen** zählen Vorrichtungen, die die Energie mechanisch oder mittels Ultraschall, strömungsbedingt, thermisch oder konstruktionsbedingt auf das Reaktionsgemisch übertragen und dadurch eine Bewegung des Reaktorinhalts durch Durch- oder Aufmischen bewirken. Dazu zählt auch die Bewegung des Reaktionsgemischs durch Vorrichtungen wie Pumpen, Flüssigkeitsstrahlmischer, Düsen sowie mechanische und thermische Mischer oder die Führung des Reaktionsgemischs entlang von Druckgradienten.

Eine **Anlage** besteht aus mindestens zwei Vorrichtungen oder Einrichtungen zur Durchführung des anmeldungsgemäßen Verfahrens. Mindestens zwei Behälter, davon mindestens ein Reaktor, können in einer Weise miteinander verbunden sein, dass ein Druckausgleich oder die Speicherung von komprimierten Medien realisiert werden kann. Ein fester Bestandteil der Anlage ist eine Vorrichtung beziehungsweise ein Behälter, dann wenn im Falle eines Ausfalls dieses Bestandteils, die Effizienz des Verfahrens insbesondere in wirtschaftlicher Hinsicht um mindestens zwei, bevorzugt um fünf und besonders bevorzugt um mindestens zehn Prozent eingeschränkt ist.

Ein **zusammenhängender Prozess** liegt vor, wenn Vorrichtungen oder Einrichtungen einer Anlage gemeinsam genutzt werden. In einer solchen Anlage können mehr als 200 Kilogramm eines Ausgangsstoffes pro Woche bezogen auf die Trockensubstanz verarbeitet werden. Eine Anlage wird dann gemeinsam genutzt, wenn Vorrichtungen oder Einrichtungen miteinander oder durch Leitungsverbindungen oder räumlich durch Wege miteinander verbunden sind, die einen Austausch von Ausgangs-, Zwischen-, Neben- und Reaktionsprodukten sowie anderen Reaktionsteilnehmern beziehungsweise die gemeinsame Nutzung desselben innerhalb eines Radius von 50 km erlauben.

Der **Beginn oder das Einsetzen der Reaktion** oder des Reaktionsprozesses ist durch das Erreichen mindestens eines Zielparameters der Reaktionsführung einschließlich Druck oder Temperatur gekennzeichnet, bei denen die Umsetzungsreaktion der hydrothermalen Karbonisierung über einen Zeitraum von mindestens einer Stunde stattfinden kann. Das Ende des Reaktionsprozesses ist durch das kontinuierliche Verlassen mindestens eines der Zielparameter der Reaktionsführung vor der Entleerung des Reaktionsraums charakterisiert.

**Reaktions-, Zwischen- oder Nebenprodukte oder -partner** im Sinne der Anmeldung sind alle festen, flüssigen und gasförmigen Stoffe, die sich unabhängig von ihrer Aufenthaltsdauer im Reaktionsraum unter Betriebsbedingungen (Druck größer 5 bar, Temperatur größer 100 Grad) befinden oder befunden haben.

**Fest-/Flüssiggemische** im Sinne der Anmeldung sind alle Suspensionen, Dispersionen und sonstigen dispersen Systeme, einschließlich flüssigkeitshaltiger Feststoffe, insbesondere Biomasse. Die anmeldungsgemäße Vorrichtung findet insbesondere Anwendung für solche Fest-Flüssig-Gemische, die während des Reaktionsverlaufs auf physikalischem oder chemischem Wege zur Erhöhung des Gehalts der flüssigen Phase beziehungsweise an Lösungsmittel und/oder zur physikalischen oder chemischen Veränderung des Feststoffs führen, die eine verbesserte Fest-Flüssig-Trennung oder veränderte Verhältnisse mit höheren Feststoffanteilen ermöglichen.

**Suspensionen** und **Dispersionen** sind beides heterogene **Fest-Flüssig-Gemische.** Unter Suspension wird ein heterogenes (nicht mischbar) Stoffgemisch aus einer Flüssigkeit und einem Feststoff verstanden. Eine Suspension besitzt mindestens eine feste Phase und mindestens eine flüssige Phase. Zu **dispersen Systemen,** d.h. binäre Mischungen aus kleinen Partikeln und einem kontinuierlichen Dispersionsmedium, zählen kolloidale Dispersionen, Mizellen, Vesikel, Emulsionen, Gele u. Aerosole wie beispielsweise Anstrichfarben, Emulsionen und Schäume.

Unter **Maillard-ähnlichen Reaktionsprodukten** werden im Sinne der Anmeldung Verbindungen verstanden, die Zwischen-, Neben-, Endprodukte oder Reaktionspartner von Maillard-Reaktionsprodukten sind und über ähnliche chemische, physikalische oder biologische Eigenschaften verfügen können. Zu diesen Verbindungen zählen zum Beispiel die Advanced Glycation Endproducts (AGE) die durch Umlagerung der primären Amadori-Produkte entstehen und weiter zu den Endprodukten der Maillard-Reaktion, den Advanced Glycation Endproducts (AGE) reagieren. Durch Umlagerung und Polymerisation können die AGEs Quervernetzungen mit anderen Proteinen ausbilden. Aufgrund des Entstehungsweges gibt es sehr viele verschiedene und komplexe Formen von AGEs, wobei N_{ε}-(carboxymethyl)Lysin (CML), Furosin und Pentosidin bisher am intensivsten untersucht wurden.

Unter **Polytetrafluorethylen (PTFE)-ähnlichen Stoffen**werden Stoffe und Verbindungen ähnlicher, verwandter oder nicht-verwandter Klassen verstanden, die mindestens eine oder mehrere Eigenschaften von Polytetrafluorethylen wie zum Beispiel Reaktionsträgheit, sehr geringen Reibungskoeffizienten, sehr niedrige Brechzahl, hohe Wärmebeständigkeit, geringe Haftbeständigkeit von OberflächenVerschmutzungen oder glatte Oberfläche besitzen.

**Brennstoffe** sind Stoffe, die zur Energieerzeugung dienen und beispielsweise mittels thermischer, chemischer, elektrischer oder anderer Verfahren in Energie umgesetzt werden.

**Werkstoffe** sind Stoffe, die durch Weiterverarbeitung, Behandlung oder Konditionierung in ein Produkt weiterverarbeitet werden oder als Arbeitsgegenstände in ein Endprodukt eingehen.

Im Folgenden wird der Gegenstand der Anmeldung beispielhaft näher erläutert.

Der Prozess der stofflichen Umsetzung der Ausgangsstoffe beziehungsweise der Biomasse innerhalb des anmeldungsgemäßen Verfahrens lässt sich grob in vier Phasen unterteilen:
1. **Aufwärmphase:**Die Biomasse wird auf Temperatur und Druck gebracht. Durch Zuführung von Energie wird die Depolymerisationsphase eingeleitet. Bereits während der Aufwärmphase kommt es initial insbesondere bei Biomassen mit hohem Kohlehydratanteil zu Quellungsreaktionen. Dabei wird Wasser zwischen Polysacchariden in der Zellwand eingelagert. Während des Quellungsprozesses kommt weiter vorübergehend zur Ausbildung von gallertartigen im weiteren Verlauf auch kolloidalen Strukturen, die sich im weiteren Verlauf der Depolymerisationsphase wieder auflösen.
2. **Depolymerisationsphase:**Dabei werden die ursprünglichen Strukturproteine aufgelöst, die insbesondere im Fall von pflanzlicher Biomasse vor allem aus polymerisierten Strukturproteinen Cellulose, Hemicellulose und Lignin bestehen. Es entstehen mono- und oligomere Kohlenstoffverbindungen. Je höher der Anteil an widerstandsfähigen und vernetzten Strukturproteinen ist und je kleiner die Oberfläche der Ausgangsstoffe ist, desto mehr Zeit wird für die Depolymerisationsphase benötigt. Gleichzeitig kommt es zur Hydrolyse, das heißt es kommt zur Spaltung von chemischen Verbindungen durch Reaktion mit Wasser. Je höher der Anteil an Kohlehydraten, nichtpflanzlichen und Nichtstruktur-Proteinen und Fetten, beziehungsweise je geringer der Anteil an lignocellulosehaltiger Biomasse desto schneller verläuft diese Phase. Gegen Ende dieser Phase steigt die Wärmeenergiefreisetzung an und es hat sich ein Rohöl-ähnlicher Stoff gebildet.
3. **Polymerisationsphase:**Die monomerisierten und unvernetzten Kohlenstoffverbindungen werden neu strukturiert und vernetzt. Es bilden sich Agglomerate, die sich makroskopisch an die ursprünglichen Grobstrukturen der Ausgangsstoffe anlehnen, aber den inneren Zusammenhalt im Hinblick auf die übergeordnete Struktur verloren haben und damit auch ihre Fasrigkeit und Festigkeit. Die neu gebildeten Strukturen, die eine höhere Brüchigkeit und Porosität aufweisen, bestehen in Zwischen- aber auch in Endstadien aus kleinen Partikeln mit einem Durchmesser von einigen hundert Mikrometern bis zu 5 Nanometer und kleiner.Es bilden sich neue Kohlenstoffverbindungen, die Ähnlichkeiten mit denen in natürlicher Kohle aufweisen. Sie bestehen unter anderem aus verschiedenen Kohlenstoffverbindungen sowie Terpenderivaten, deren Kohlenstoffgehalt zunimmt und deren Wasserstoff- und Sauerstoffanteil bezogen auf den prozentualen Massenanteil der Elemente (Trockenmasse) abnehmen. Zu den wichtigsten Unterscheidungsmerkmalen gegenüber fossilen Brennstoffen zählt vor allem das Vorliegen von Maillard-Reaktionsprodukten in der flüssigen und festen Phase der Reaktionsprodukte.
4. **Stabilisierungsphase:**Während die Depolymerisations- und Polymerisationsphase exotherm ablaufen, nimmt in dieser Phase die Wärmeenergiefreisetzung deutlich ab und die Reaktion läuft in der Stabilisierungsphase aus und kommt schließlich zum Stillstand.

Die Eigenschaften des Reaktionsprodukts wie Reinheitsgrad, Form, Struktur, Dichte, Festigkeit, Partikelgröße, Oberflächenstruktur, Zusammensetzung, Verbrennungseigenschaften, Brennwert und Energiegehalt sind abhängig von den Verfahrens- beziehungsweise Reaktionsbedingungen, also von den Parametern, die für die Steuerung des anmeldungsgemäßen Verfahrens, das heißt für die Prozessführung, verantwortlich sind. Die Reaktions- beziehungsweise Verfahrensführung wird unter anderem durch folgende Faktoren beeinflusst:
1. Zusammensetzung und Eigenschaften der Edukte einschließlich Dichte, Partikelgröße, Feuchtigkeitsgehalt, Reinheit, Kohlenstoff-, Mineralien- und Alkaligehalt etc.
2. Verhältnis zwischen fester und flüssiger Phase beziehungsweise Trockenmasse und Prozesswasser.
3. Temperatur, Druck, sowie die Schwankungsbreite dieser Parameter.
4. Katalysatoren: Auswahl, Zusammensetzung, Konzentrationen, Partikelgröße, Mischungsverhältnis und Zuführungszeitpunkte. Die Reaktion kann beschleunigt und gelenkt werden durch die Zuführung von Katalysatoren beziehungsweise Katalysatorgemischen zu späteren Zeitpunkten im Reaktionsverlauf. Dadurch kann die Eigenschaften des Reaktionsprodukts beeinflusst werden. Eine wesentliche Rolle zur Formgebung und Struktur des Endprodukts spielt die Partikelgröße des metallischen Katalysators. Die Reaktionsgeschwindigkeit wird wesentlich durch die Stärke der Säure (p*K*ₛ-Wert) mitbestimmt.
5. Wärmeaustauschsysteme und Geschwindigkeit von Temperaturanpassungen, pH-Wert, Konzentrationsverhältnisse, auch im Prozesswasser.
6. Stoffliche oder chemische Veränderungen des Reaktionsgemischs beispielsweise durch Hydrolyse: Unter anderem Zunahme der Dichte und Brüchigkeit während der Umsetzungsreaktion.
7. Geschwindigkeit der Polymerisation, denn desto schneller der Verlauf der Polymerisation, desto reiner das Reaktionsprodukt.
8. Art der Durchmischung und des Energieeintrags, Strömungsgeschwindigkeit und Scherkräfte sowie Mischungsintervalle und Zeitpunkte.
9. Prozesswasser: Konzentration von Alkalisalzen, Säuren, Elementen wie Chlor, Schwefel und ihre Salze sowie Metalle und Mineralien einschließlich Phosphor- und Nitratverbindungen. Aufreinigungsverfahren des Prozesswassers während und außerhalb des laufenden Prozesses.
10. Konzentration von Störstoffen wie zum Beispiel Sand oder Stoffe, die den Reaktionsverlauf behindern, verlangsamen, verzögern oder zu unerwünschten Nebenprodukten oder aus Ausfällungen führen.
11. Art der Durchführung einschließlich der Intensität und Dauer der hier genannten Verfahrensschritte.
12. Auswahl, Kombination, Zusammenwirken und Steuerung der Temperierungs- und Mischsysteme.
13. Auswahl, Kombination, Leistungsfähigkeit und Effizienz der Prozesswasseraufbereitung und -führung einschließlich Berücksichtigung der erforderlichen Anpassung an variable Reaktionsvolumina durch die Prozesswasser- und Stoffzufuhr beziehungsweise -entnahme.

Weitere Verfahrensschritte können sein:
1. Bereitstellung von Ausgangsstoffen einschließlich Biomasse, Ausgangsstoffen, Katalysatoren und Wasser.
2. Vorbehandlung
3. Überführung der Ausgangsstoffe in ein Transportsystem und/oder -behälter
4. Überführung der Ausgangsstoffe in den für den jeweiligen Bearbeitungs- oder Behandlungsschritt geeigneten Behälter
5. Entwässerung und/oder Trocknung der Ausgangsstoffe
6. Zerkleinerung der Ausgangsstoffe und gegebenenfalls der Katalysatoren
7. Metall- und Störstoffentfernung
8. Inkubation mit Katalysator, insbesondere mit Säure
9. Beimischung eines oder mehrerer weiterer Katalysatoren
10. Vorwärmung der Biomasse
11. Verdichtung, zum Beispiel bei Einführen in den Reaktor
12. Einbringen in Druckbehälter oder Reaktionsraum
13. Aufwärmen
14. Prozesswasseraufbereitung und Luftreinigung
15. Ausbringung des Reaktionsprodukts aus dem Reaktionsraum
16. Abtrennung vonReaktions-, Zwischen-, Neben- und/oder Endprodukteaus dem Reaktionsgemisch
17. Trocknen des gewünschten Reaktionsprodukts
18. Zerkleinern des gewünschten Reaktionsprodukts
19. Abkühlen des gewünschten Reaktionsprodukts
20. Konditionierung
21. Energiegewinnung, insbesondere durch thermische Verwertung.

In verschiedenen Schritten vor und nach dem chemischen Umsetzungsprozess werden die Ausgangsstoffe sowie die Reaktions-, Zwischen-, Neben- und/oder Endprodukte bearbeitet. Die Bearbeitungsschritte zielen auf eine Stoffumsetzung im industriellen oder Technikumsmaßstab ab. So ist unter Bearbeitung mehr als ein händisches Zerlegen oder eine manuelle Zerkleinerung mit einer Schere zu verstehen. Die Bearbeitung der Biomasse und/oder Aufarbeitung der Reaktionsprodukte und/oder der Nebenprodukte geht beim anmeldungsgemäßen Verfahren über ein elektrisch betriebenes Rühr- oder Mischsystem mit einer einzigen Welle mit magnetischer Kupplung sowie über eine wandständige Wärmeübertragung einer druckbelasteten glatten Innenseite der äußeren Reaktorwand durch ein mit wenigen Handgriffen trennbares beheiztes Mantelgefäß, das elektrisch betrieben wird, hinaus. Sie umfasst auch die unter Punkt 9 und 10 der für das semikontinuierliche oder kontinuierliche Verfahren genannten Kriterien zum Rühr- oder Mischsystem und/oder Temperierungssystem.

Die Biomasse kann in der Regel bereits vor der Lagerung und besonders vor dem eigentlichen Umsetzungsprozess, insbesondere vor und/oder nach dem Einfüllen in den Reaktionsraum, zerkleinert werden. Die Zerkleinerung erfolgt insbesondere auf mechanischem Wege bevorzugt durch Häckseln und besonders bevorzugt mittels einer Vorrichtung zum Mahlen beispielsweise einer Schrotmühle. Je nach Ausgangsstoff und gewünschter Partikelgröße kommen unterschiedliche Häcksler- und/oder Mühlentypen zum Einsatz. Die Partikelgröße hat einen Einfluss auf den Reaktionsverlauf. Denn je kleiner die Partikelgröße desto größer ist die Oberfläche der Ausgangsstoffe. Je größer die Oberfläche der Reaktionspartner, desto schneller die chemische Umsetzung. Daher kann die Partikelgröße der zerkleinerten Biomasse unter 10 cm, auch unter 1 cm und auch unter 2 mm liegen. Der Energie-, Zeit-, und Materialaufwand beim Zerkleinerungsprozess ist dabei von der Prozessführung und insbesondere von der Beschaffenheit des Ausgangsstoffs, Partikelgröße und Verweildauer abhängig.

Teil der Vorbehandlung ist auch die Inkubation in einem sauren Milieu oder Medium bei einem pH-Wert, der unter 6, auch unter 5, und auch unter 4, insbesondere unter 3 und dabei auch unter 2 liegt. Die erforderliche Zeitdauer dieses Schrittes nimmt mit zunehmender Zerkleinerung und mit sinkendem pH-Wert ab. Die Inkubation bei saurem pH-Wert kann beispielsweise nach dem Zerkleinern erfolgen.

Insbesondere metallische, anorganische oder sandähnliche Stoffe und andere Störstoffe werden von der Biomasse getrennt. Es werden Verfahren und Prozesse angewandt, wie sie im Rahmen der Behandlung von Biomasse und Biomüll zum Beispiel in Biogasanlagen etabliert sind.

Nach Vorinkubation im sauren Medium aber auch zu einem früheren oder späteren Zeitpunkt kann ein Katalysator mit oder ohne Zugabe von Wasser und/oder in einer wässrigen Lösung dazu gegeben werden. Der Katalysator kann aus mindestens einer oder auch mehreren, verschiedenen Komponenten bestehen. Diese bilden dann gemeinsam ein Katalysatorgemisch. Eine Komponente des Katalysators kann beispielsweise aus einer Säure bestehen. Die Reaktionsführung wird entscheidend durch Auswahl, Zusammensetzung, Konzentrationen, Partikelgröße, Mischungsverhältnis, Zuführungszeitpunkte der Katalysatoren beeinflusst. Diese Katalysator-abhängigen Faktoren haben daher großen Einfluss auf die Formgebung, Gestalt und Eigenschaften des Endprodukts. Eine wesentliche Rolle zur Formgebung und Struktur des Endprodukts spielt die Partikelgröße des metallischen Katalysators. Die Reaktionsgeschwindigkeit wird auch durch die Stärke der Säure (p*K*ₛ-Wert) bestimmt. Werden zum Beispiel Partikel kleiner zehn Mikrometer, bevorzugt 200 bis 1000 Nanometer und besonders bevorzugt 10 bis 199 Nanometer eingesetzt, erhöht sich die Wahrscheinlichkeit der Ausbildung gleichmäßiger faserähnlicher Nanostrukturen. Je kleiner die Partikelgröße desto klarer definiert sind die faserartigen Strukturen der neuen Kohlenstoffverbindungen. Allerdings spielt für die Lenkung des Reaktionsverlaufs zur Herstellung von definierten Nanostrukturen der Kohlehydratgehalt sowie die Partikelgröße und eine möglichst einheitliche Partikelgröße des Ausgangsstoffs eine Rolle. Die Reaktion kann beschleunigt und gelenkt werden durch den Zeitpunkt der Zuführung von Katalysatoren beziehungsweise Katalysatorgemischen. Auch eine Zuführung zu späteren Zeitpunkten im Reaktionsverlauf kann in Abhängigkeit vom erwünschten Endprodukt sinnvoll sein. Als Säuren kommen auch anorganische Säuren zum Einsatz, bevorzugt Mineralsäuren, besonders bevorzugt starke Säuren, das heißt Säuren mit einem möglichst niedrigem pKₛ. Die eingesetzten Säuren und ihre Reaktionsprodukte sollen nicht giftig sein und eine minimale korrosive Wirkung haben. Weiter sollen sie im Reaktionsprodukt möglichst nicht mehr nachweisbar sein und stoffliche Bestandteile möglichst leicht aufzureinigen sein. Schwefelsäure, die auch Lebensmittelzusatzstoff Verwendung findet, erfüllt die meisten Anforderungen und ist daher besonders geeignet. Es können auch verschiedene Säuren kombiniert werden. Alternativ oder zusätzlich werden Carbonsäuren und insbesondere Protonensäuren eingesetzt. Als besonders vorteilhaft hat sich die Verwendung einer Di- oder Tricarbonsäure, und vor allem von Weinsäure oder Zitronensäure herausgestellt. Sowohl Zitronensäure als auch Weinsäure sind kristallin und nicht toxisch. Beide kommen in der Natur in Früchten vor (Zitronensäure in Zitrusfrüchten wie zum Beispiel Zitronen, Weinsäure in Weintrauben). Die Säure, die als Katalysatorkomponente eingesetzt wird, kann gleichzeitig auch zur Herstellung des sauren Mediums für den Inkubationsschritt eingesetzt werden. Die Konzentration der Säure ist unter anderem abhängig vom pKₛ-Wert und beträgt etwa bezogen auf das Volumen 0,1 bis 3 Prozent 0,6 bis 2 Prozent und besonders bevorzugt 0,3 bis 1 Prozent. Eine Vorinkubation des Ausgangsstoffs mit Säure verkürzt die Reaktionszeit. Je länger die Vorinkubation, je stärker die Säure und je höher ihre Konzentration desto kürzer die Reaktionszeit. Der Katalysator oder das Katalysatorgemisch kann, insbesondere auch zusätzlich, ein oder mehrere Metalle umfassen. Es kommen vorzugsweise Übergangsmetalle wie Eisen, Nickel, Cobalt, Eisen, Kupfer, Chrom, Wolfram, Molybdän oder Titan zum Einsatz, wobei sich Eisen als besonders vorteilhaft herausgestellt hat. Die Zugabe des Katalysators kann vor Einbringung in den Reaktor aber auch zu anderen Zeiten während des Verfahrens erfolgen. Weiter können unterschiedliche Katalysatorgemische beziehungsweise -zusammensetzungen zu unterschiedlichen Zeitpunkten dem Reaktionsgemisch zugeführt werden.

Die Biomasse wird gründlich mit dem Katalysator beziehungsweise Katalysatorgemisch vermischt. Der Katalysator bildet dann mit der Biomasse gemeinsam ein Reaktionsgemisch. Alternativ findet der Vermischungsvorgang innerhalb eines Reaktors statt. Die Verdichtung des Reaktionsgemischs kann in einem oder mehreren Schritten sowohl außerhalb als auch innerhalb eines Reaktors erfolgen. Vorteilhaft ist eine hohe Verdichtung, die wiederum eine bessere Ausnutzung des Reaktionsraums bedeutet. Das Maß der Verdichtung ist abhängig von der Förderbarkeit in einen Reaktor, vom gewünschten Reaktionsprodukt und von der Prozessführung. Das Reaktionsgemisch kann nach der Vorbehandlung beispielsweise auch in einen Reaktor eingeführt werden.

Eine Vorwärmung kann beispielsweise vor der Einführung von Reaktionsbestandteilen in den Druckbehälterraum stattfinden. Es können sämtliche Reaktionspartner vorgewärmt werden. Unter den Ausgangsstoffen können alle aber insbesondere die Biomasse bis zu etwa 60 - 90 Grad Celsius erwärmt werden. Die Vorwärmung erfolgt zum Beispiel durch Zuführung von Wärmeenergie und insbesondere durch Zugabe von fast siedendem Prozesswasser, vorgewärmter Biomassesuspension oder anderem Wasser bei etwa einem bar Absolutdruck oder durch Zuführung von Wasser- oder Prozessdampf oder anderen Wärmeenergieträgern. Alternativ oder ergänzend kann dazu Wärmeenergie aus Wärmetauscherprozessen eingesetzt werden.

Die Reaktionszeit liegt je nach gewünschtem Reaktionsprodukt zwischen einer bis 60 Stunden, bevorzugt zwischen drei und 40 Stunden, besonders bevorzugt zwischen fünf und 18 Stunden. Die Reaktionszeit gilt als abgelaufen beziehungsweise die Reaktion als abgeschlossen, wenn keine nennenswerte Enthalpie mehr freigesetzt wird. Eine minimale Vorbehandlung und/oder die Auslassung einzelner Vorbehandlungsschritte kann die Reaktionszeit auf über 60 Stunden erhöhen. Die Reaktionszeit ist insbesondere abhängig von der Zusammensetzung und den Eigenschaften des jeweiligen Ausgangsstoffs. Je größer die Oberfläche, je kleiner die Partikelgröße, je geringer der Lignin- oder Celluloseanteil und je höher der Kohlenhydratanteil, desto schneller wird die Wärmeenergie in der Depolymerisationsphase freigesetzt und desto schneller wird die Stabilisierungsphase erreicht und die Reaktions- beziehungsweise Verweilzeit reduziert sich. Je kürzer die Umsetzungszeit des jeweiligen Ausgangsstoffs ist, desto später kann dieser zum Beispiel in eine bereits angelaufene Reaktion im Reaktor eingebracht werden. Eine kürzere Reaktionszeit wird auch bei relativ hohen Anteilen an Fett und nicht-pflanzlicher, nicht vernetzter zum Beispiel tierischer oder bakterieller Proteine erzielt. Das Auslaufen der Wärmeenergiefreisetzung während des Reaktionsprozesses ist ein Zeichen für den Abschluss des Umsetzungsprozesses.

Anmeldungsgemäß können Temperaturen von bis zu 300 Grad Celsius erzeugt werden. Vorteilhaft sind jedoch Temperaturen zwischen 185 bis 205 Grad Celsius und insbesondere bis 215 Grad Celsius und besonders bevorzugt bis 225 Grad Celsius.

Anmeldungsgemäß wird unter Luftabschluss ein Druck aufgebaut, der beispielsweise zwischen 7 und 90 bar liegt. Vorteilhaft ist ein Druck zwischen 11 und 18 bar, auch zwischen 18 und 26 bar, und auch zwischen 26 und 34 bar.
Figur 1 zeigt einen schematischen Längsschnitt durch einen anmeldungsgemäßen Reaktor mit weiteren Komponenten einer anmeldungsgemäßen Anlage.
Figur 2 zeigt einen Ausschnitt aus einem Wandbereich des anmeldungsgemäßen Reaktors gemäß Figur 1.

Die anmeldungsgemäße Vorrichtung umfasst einen Reaktor, der in Abhängigkeit von den darin ablaufenden Prozessen, der eingesetzten Menge und Art der Feststoffe und/ oder vom gewünschten Reaktionsprodukt unterschiedlich ausgestaltet sein kann. Mindestens einer der anmeldungsgemäßen Reaktoren kann beispielsweise ein Kaskaden-, Rohr-, Kreislauf-, Schlaufen-, Membran-, Wirbelschicht- und/oder ein Rührkessel- beziehungsweise Rührkesselreaktor sein oder einzelne Eigenschaften oder eine Kombination verschiedener Eigenschaften dieser Reaktoren aufweisen. Die Wirbelschicht des Reaktors ist vorzugsweise eine zirkulierende. Der anmeldungsgemäße Reaktor oder eine Kombination der verschiedenen Reaktoren können für unterschiedliche Behandlungszeitpunkte und Bearbeitungsschritte innerhalb einer Anlage verwendet werden. Weiter kann der Reaktor aufgrund des erforderlichen Drucks als Druckbehälter ausgelegt sein. Die Auslegung der Druckbehälterform ist von der Prozessführung und von der angewandten Mischtechnik abhängig.

In weiterer Ausgestaltung des Gegenstands der Anmeldung ist der Reaktor als eine Art Multimembran-Wirbelschichtreaktor mit zirkulierender Wirbelschicht ausgebildet. Ein solcher reaktor vereinigt die vorteilhaften Eigenschaften verschiedener Membran- und Wirbelschichtreaktortypen. In diesem Zusammenhang versteht man unter Wirbelschicht eine Schüttung bzw. Ansammlung von Feststoffpartikeln, welche durch eine aufwärtsgerichtete Strömung eines Fluids in einen fluidisierten Zustand versetzt wird. Der Begriff 'fluidisiert' weist in diesem Zusammenhang darauf hin, dass die (ehemalige) Schüttung nun Fluid-ähnliche Eigenschaften aufweist (z.B. die von Wasser). Im Innenraum des anmeldungsgemäßen Reaktors befindet sich ein Fest-Flüssig-Gemisch. Die feinkörnige Schüttung des Feststoffs wird aufgewirbelt, wenn sie vom Gas oder von der Flüssigkeit - dem so genannten fluiden Medium - von unten nach oben durchströmt wird. Damit die Feststoffteilchen aufgewirbelt werden, muss das fluide Medium mit einer bestimmten Mindestgeschwindigkeit hindurchströmen, die von den jeweiligen Reaktionsbedingungen abhängig. Aufgrund der Verwirbelung kann der Feststoff relativ leicht - zum Teil auch kontinuierlich - aus dem Reaktionsraum entfernt werden, wenn die Reaktion abgeschlossen ist. Entsprechend kann auch frischer Feststoff nachgeführt werden. Die Geschwindigkeit des Fluidstroms wird so eingestellt, dass der Feststoff mindestens so aufgewirbelt wird, dass sich eine stationäre Wirbelschicht bildet. Die Fluidgeschwindigkeit in diesem Zustand ist jedoch geringer als die Einzelkorn-Sinkgeschwindigkeit der Partikel. Durch Zusammenlagerung einzelner benachbarter Partikel ist deren Strömungswiderstand höher als der Strömungswiderstand eines einzelnen Partikels. Dies kann zur Ausbildung einer Suspensionsschicht mit definierter Oberfläche führen. Durch das Anlegen höherer Drücke an den Membranteilen kann die Geschwindigkeit des Fluidstroms erhöht werden. Durch den höheren Fluidstrom werden relativ viele Partikel aus der Bodenzone ausgetragen und die obere Schichtgrenze löst sich auf. Ein gewisser Anteil des Feststoffes fällt jedoch noch in der Wirbelschicht wieder in die Bodenzone zurück. Im sogenannten Freiraum oberhalb der dichten Zone bildet sich eine Strömung aus, bei der im relativ breiten Kern der Feststoff als dünne Suspension aufsteigt, während sich direkt am Rand des Reaktors der Feststoff in Clustern mit hoher Geschwindigkeit nach unten bewegt. Durch eine Positionierung der von mindestens vier Flüssigkeitsstrahlmischern, die möglichst gleichmäßig auf den Durchmesser und in möglichst gleichmäßigen vertikalen Abständen verteilt sind, und zusätzliche Mischer, die auch die Flächen unmittelbar oberhalb der Bodenbleche mit erfassen, wird die Ausbildung von Agglomeraten und Schichtgrenzen unterdrückt, so dass eine relativ homogene Aufwirbelung der Partikel erfolgt.

Mit dem anmeldungsgemäßen Reaktors können bei sachgerechter Anwendung, insbesondere bei der Verwendung von Membranteilen, u.a. folgende Vorteile erreicht werden:
1. Die durch die beschleunigten Treib- und Fluidstrahlen erzeugten Turbulenzen führen zu hohen Relativgeschwindigkeiten zwischen den kontinuierlichen Fluiden und der dispersen festen Phase
2. häufiger Partikel-Partikel-Stoß und auch Partikel-Wand-Stoß
3. intensive Vermischung der Partikel
4. beschleunigter Wärmeaustausch des Reaktionsgemisch mit dem Fluid
5. Minimierung von Ablagerung
6. kontrollierte Dosierung zum Beispiel von Wasser und Reaktanden während des Reaktionsprozesses.

Der anmeldungsgemäße Reaktor kann eine oder mehrere der folgenden Eigenschaften aufweisem.

Der Reaktor kann mindestens einen Druckbehälter und mindestens eine Vorrichtung zur Fest-Flüssig-Trennung aufweisen und wird dann auch als Membranreaktor bezeichnet. Der Reaktor kann über mindestens eine Grob- und/oder eine Feinfiltration oder eine Kombination aus beiden Vorrichtungen verfügen, die auch in einer Filtrationsvorrichtung kombiniert werden kann. Mindestens einer der Druckbehälter kann über ein Rühr- und/oder Mischsystem verfügen, der dadurch als Rührkesselreaktor bezeichnet werden kann. Die Summe aller Reaktionsräume der Druckbehälter oder Reaktoren kann über ein Volumen von 0,5 bis 10.000 Kubikmeter verfügen, auch über 5 bis 2.000 Kubikmeter und auch von 50 bis 500 Kubikmeter. Die Summe aller Behältnisse einer Anlage einschließlich der Reaktionsräume der Druckbehälter oder Reaktoren, Silos und Lagerräume kann über ein Volumen von 0,5 bis 1.000.000 Kubikmeter verfügen, auch 10.000 bis 700.000 Kubikmeter und auch 50.000 bis 500.000 Kubikmeter. Je nach Ausgangsstoff und Biomasse kann der Wasseranteil der Biomasse bis zu 95 Prozent oder mehr des Gesamtgewichts betragen. Aus diesem Grund kann die Integration eines Entwässerungsprozesses, der der Umsetzungsreaktion vorgeschaltet ist, sinnvoll sein. Aufgrund des hohen Feuchtigkeitsgehalt und des geringen Schüttgewichts vieler Biomassen ist die Förderbarkeit begrenzt, so dass der initiale Feststoffanteil im Reaktionsraum etwa zwischen 5 und 30 Prozent liegen kann. Daher kann der Ertrag des Reaktionsprodukts im einstelligen Prozentbereich bezogen auf das gesamte Reaktionsraumvolumen liegen. Weiter ist dann der Einsatz relativ großer Reaktionsraumvolumina erforderlich. Dies kann durch eine Zusammenschaltung mehrerer Druckbehälter erfolgen. Durch eine Zusammenschaltung mehrerer Druckbehälter bzw. Reaktoren, zum Beispiel im Sinne einer Kaskade, und/ oder die Kombination verschiedener Reaktortypen kann eine günstigere Verweilzeitverteilung und somit höhere Umsätze durch eine verbesserte Steuerung des Prozessablaufs realisiert werden. Gleichzeitig kann den unterschiedlichen Anforderungen der verschiedenen Reaktionsphasen und Teilschritte Rechnung getragen werden. Beispielsweise kann in einem Rohrreaktor ein günstigerer Wärmeaustausch stattfinden, in einem Rührkessel beziehungsweise Rührreaktor eine bessere Durchmischung und Rückvermischung. Durch die Aufteilung des Gesamtvolumens des Reaktors auf mehrere Druckbehälter wird die Transportfähigkeit einzelner Anlagenbestandteile einschließlich des Druckbehälters verbessert. Gleichzeitig wird durch die Zusammenschaltung mehrerer Druckbehälter bzw. Reaktoren die Realisierung eines kontinuierlichen oder semikontinuierlichen Prozesses erleichtert. Mindestens ein Druckbehälter zur Aufnahme des in den Reaktoren gebildeten oder enthaltenen komprimierten Prozessgases kann eingesetzt und in die Anlage integriert werden.

Durch die kontinuierliche Abtrennung bzw. den Abzug einzelner Reaktanden wie zum Beispiel Wasser während des Prozessverlaufs kann der Feststoffanteil während des Verfahrens erhöht werden. Der Feststoffgehalt kann von ursprünglich zum Beispiel 15 Prozent auf 20 bis 30 Prozent, bevorzugt auf 31 bis 45 oder und besonders bevorzugt von 46 bis 70 Prozent in Abhängigkeit von der Reaktionsführung ansteigen. Gleichzeitig kann das Volumen pro Reaktor im Reaktionsverlauf abnehmen, schneller umsetzbare Ausgangsstoffe zugeführt werden oder ein höherer Durchsatz bezogen auf des Reaktorvolumen erzielt werden. Weiter ermöglicht eine Schaltung mehrerer Reaktoren in Serie, die voneinander zum Beispiel durch Ventile getrennt sind, eine gezieltes Befüllen beziehungsweise Nachfüllen einzelner Druckbehälter mit frischen Ausgangstoffen, Reaktanden oder Katalysatoren zwecks Erhöhung der Durchsatzraten. Die Überführung des Reaktionsgemischs von einem in den anderen Druckbehälter findet im Wesentlichen bei Betriebsbedingungen statt. Reaktor sowie alle mit den Reaktanden in Berührung stehenden Oberflächen und Bestandteile der Vorrichtung einschließlich der Armaturen und Rohrleitungen bestehen aus hitzebeständigen und korrosionsfesten Materialien und zwar bevorzugt aus Edelmetall vergleichbar mit den Qualität wie sie für die Membranteile unten beschrieben wurden. Die Wanddicke des Reaktors ist ausgelegt für Drücke zwischen 7 bis 20 bar, bevorzugt für Drücke zwischen 20 bis 30 bar und besonders bevorzugt für Drücke von 30 bis 40 bar sowie für Temperaturen zwischen 160 und 230 Grad Celsius bevorzugt bis 260 Grad Celsius und besonders bevorzugt bis 300 Grad Celsius. Die Temperatur, insbesondere in mindestens einem Druckbehälter, Reaktor oder Anlagenbestandteil, liegt über mindestens zwei Reaktionszyklen hinweg kontinuierlich oberhalb von 40 bis 90 Grad Celsius, bevorzugt von 60 bis 70 Grad Celsius und/oder oberhalb der Siedetemperaturen des Prozesswassers bei einem bar Absolutdruck, so dass ein längerer unmittelbarer und folgenloser händischer Kontakt mit der direkt mit dem Reaktionsgemisch in Berührung stehenden Behälterwand von über einer Minute nur mit Hilfsmitteln, isolierenden Stoffen oder zusätzlichen Vorrichtungen möglich ist

Der anmeldungsgemäße Reaktor kann einen senkrecht stehenden zylindrischen Grundkörper umfassen. Der obere Boden kann als Klöpperboden ausgebildet sein. Es kann im oberen Teil bevorzugt der oberen Hälfte und besonders bevorzugt in den oberen zwei Dritteln eine leicht kegelförmige Form aufweisen mit leicht wachsendem Durchmesser nach unten hin. Der kegelförmige Boden kann einen Winkel zur Reaktorachse von maximal 45 Grad, bevorzugt kleiner 40 Grad und besonders bevorzugt kleiner 35 Grad aufweisen. Die Übergänge zum Beispiel vom Wand- zum Bodenbereich können abgerundet sein, um Störungen des Strömungsflusses zu minimieren. Die Platzierung des Stutzens für die Zufuhr des Reaktionsgemischs kann variabel sein und befindet sich beispielsweise in der oberen Hälfte, bevorzugt im oberen Drittel des Druckbehälters. Die Zufuhr kann über ein Ventil über gemeinsam über den Auslassstutzen stattfinden, der sich etwa im Zentrum des Bodens beziehungsweise Kegelbodens befindet. Die Bauteile und Stutzen des Reaktors können durch Schweißen miteinander verbunden werden. Der Deckel kann angeflanscht sein. Bei einem vorrangigen Einsatz von Flüssigkeitsstrahlmischer und Vollstrahldüsen kann das Verhältnis von Durchmesser zur Höhe etwa bei eins zu zwei bis eins zu drei liegen, auch bei eins zu vier bis ein zu fünf und auch bei eins zu fünf bis eins zu sechs.

Ein Membranreaktor ist eine Vorrichtung, die die Kombination mit mindestens einer chemischen Reaktion mit einem Membranverfahren oder einer Fest-Flüssig-Trennung erlaubt. Dabei sind beide Prozesse integral miteinander gekoppelt, so dass Synergien entstehen können. Gleichzeitig können beide Prozesse in einem einzigen Gehäuse oder einer Anlage untergebracht sein. Bei der chemischen Reaktion wird mindestens eine Komponente des Reaktionsgemisches umgesetzt. Durch den Einsatz eines Membranreaktors können Reaktions-, Zwischen-, Neben- und Endprodukten selektiv aus dem Reaktionsgemisch entfernt werden, Edukte kontrolliert zugegeben oder der Kontakt der Edukte intensiviert werden. Reaktions-, Zwischen-, Neben und Endprodukten und insbesondere Wasser wird durch eine Fest-Flüssig-Trennung kontinuierlich oder in Intervallen aus dem Reaktionsgemisch entfernt. Dadurch lässt sich eine deutliche Umsatzerhöhung erzielen. Auch die Entfernung von gasförmigen Stoffen und insbesondere von gelöstem Sauerstoff kann sowohl für den Reaktionsverlauf als auch für die Verminderung von Korrosionen vorteilhaft sein. Durch die chemische Veränderung der Zusammensetzung und Eigenschaften einschließlich der Dichte insbesondere während der Polymerisationsphase wird die Fest-Flüssig-Trennung erleichtert. Dadurch kann eine höhere Feststoffkonzentration im Reaktionsgemisch erreicht werden. In Abhängigkeit vom Feststoffgehalt und vom Stadium des Umwandlungsprozesses wird das Reaktionsgemisch in einen Schlaufenreaktor überführt. Dabei wird das Reaktionsgemisch durch einen radial innen liegenden Zylinderabschnitt axial in eine erste Richtung und in einem radial außen liegenden Abschnitt axial in eine zweite entgegen gesetzte Richtung strömt. Bei Verwendung eines Schlaufenreaktors kann das innen liegende Rohr zum Beispiel mit Wärmetauscherelementen versehen werden, um den Wärmeaustausch zu beschleunigen und umso größere Reaktordurchmesser zu ermöglichen. Das innen liegende Rohr wird auch als Einsteck- oder Führungsrohr bezeichnet. Der Durchmesser des Führungsrohrs beeinflusst die Reibungs- und Umlenkdruckverluste der Schlaufenströmung. Diese steigt bei abnehmenden Durchmessern und gleicher Länge an. Wird ein zu großer Durchmesser gewählt, kann die Schlaufenströmung zusammenbrechen. Daher kann der Durchmesser des Einsteckrohrs etwa ein Viertel bis ein Drittel, maximal aber die Hälfte des Durchmessers des Reaktors betragen. Das Führungsrohr kann etwa im Abstand von einem Drittel, bevorzugt von einem Viertel, des Reaktordurchmessers vom Reaktorboden positioniert sein.

Es herrschen reduktive Verhältnisse im Reaktionsgemisch. Aufgrund des sauren Milieus, der Gegenwart korrosiver Stoffe wie Chlor, hoher Temperaturen und Drücke sind die Flächen, die zu Betriebskonditionen mit dem Reaktionsgemisch in Berührung kommen, korrosionsgefährdet. Dadurch können sich insbesondere im langfristigen Betrieb Verschleißerscheinungen insbesondere durch Lochfraßkorrisionen bemerkbar machen. Zur Minimierung von Korrosionen werden in Abhängigkeit vom Durchmesser des Behälters entweder fest installierte Membranteile oder eine fluiddurchlässige Kartusche eingesetzt.

Membranteile bestehen aus durchlöcherten Elementen, vorzugsweise Blechen, die den Transport insbesondere von Gasen und Flüssigkeiten durch das Element ermöglichen. Ebenso besteht die fluid- und gasdurchlässige Kartusche aus durchlöcherten zumeist metallischen Bauteilen, durch die aufgereinigtes Lösungsmittel oder Wasser in den Reaktorraum fließen kann. Ob jeweils ein Membranteil oder eine fluiddurchlässige Kartusche eingesetzt wird, hängt primär vom Durchmesser des jeweiligen Reaktionsgefäßes und den Toleranzen bei der Verarbeitung aber auch von der Form und der Korrosionsbelastung ab. Als mögliche Werkstoffe oder Beschichtungsstoffe beziehungsweise Trägermaterialien kommen Kunststoffe, Metalle, insbesondere Hartmetalle, keramische Werkstoffe und Polytetrafluorethylen und bevorzugt Edelmetalle und besonders bevorzugt, die für die Membranteile genannten Edelmetalle in Frage. Die Beschichtung geht in der Regel über eine herausnehmbare Kartusche aus Polytetrafluorethylen wie sie zum Beispiel bei Autoklaven im Labormaßstab verwendet werden, hinaus. Zum Aufbringen der Beschichtung werden chemische, mechanische, thermische und thermomechanische Verfahren angewandt. Dabei liegen das aufzubringende Material, das Trägermaterial und/oder der Haftvermittler in gasförmiger, flüssiger, gelöster oder fester Form vor. Bevorzugt kommen galvanische oder Flammspritzverfahren wie zum Beispiel das High-velocity oxy-fuel (HVOF)-Verfahren zum Einsatz. Eine Technik zur Aufbringung der Beschichtung ist die Plattierung.

Alternativ oder zusätzlich zur Plattierung kann der Innenraum eines oder mehrer Behälter der Anlage mit einer Kartusche ausgestattet sein. Insbesondere kann die Innenwand des Reaktors mit Membranteilen ausgekleidet werden. Die Kartusche hat zumeist eine zylindrische Form und kann einem Grid, das heißt einer netzähnlichen Struktur, oder Metallstegen aufliegen.

Alternativ wird entweder auf die äußeren oder inneren Edelstahlschichten des Reaktors oder der Kartusche ein Edelstahlmantel, vergleichbar einem Wärmeaustauschplatten-System, mittels Laserschweißung aufgebracht. Der Edelstahlmantel wird durch Innendruck aufgeweitet, wodurch gleichmäßige Hohlräume entstehen. Durch diese Hohlräume wird können dann verschiedene Medien geleitet werden. Diese Medien können auch als Wärmeträger dienen, zu denen hinreichend aufbereitetes Prozesswasser, Frischwasser oder Wasserdampf oder Thermoöl zählen kann.

Um die Druckbelastung des Edelstahlmantels, der dem Reaktorraum zugewandt ist, zu minimieren, werden Vorrichtungen eingesetzt, durch die eine möglichst geringe Druckdifferenz zwischen dem Hohlraum und dem Reaktorraum zustande kommt. Mögliche Druckdifferenzen im Hohlraum können durch Löcher, die mittels Laser in den Edelstahlmantel gebohrt werden verhindert oder minimiert werden. Der Durchmesser und die Form der Löcher entsprechen denen in den Membranteilen oder in der Kartusche. Die Abstände der Löcher können auch so weit wie möglich auseinander liegen, damit möglichst wenig Medium in den Reaktionsraum gelangt.

Die Bohrungen sowohl im Mantel als auch in der Kartusche befinden sich im Abstand von mindestens 10 bis 20 cm, auch von mindestens 60 cm und auch mindestens 150 cm. Durch den anliegenden Überdruck, der auf dem Mantelkreislauf anliegt, gelangt das Medium durch die Bohrungen in den Reaktorinnenraum oder in den Hohlraum zwischen der Reaktorwand und der Kartusche. Es kann eine Zwangsführung durch die Verbindung einzelner Schweißkreise durch eine Lasernaht erzeugt werden, so dass eine gleichmäßige Verteilung des Temperierungsmediums im Mantel gewährleistet wird. Der Druck, der diesem Temperierungssystem anliegt, übersteigt den des Reaktorinnendrucks um bis zu 6 bar. Der Außenmantel der Kartusche liegt direkt der Innenseite des Druckbehälters auf. Alternativ kann sie einem durchlöcherten Grid oder Stegen aufliegen. Die Kartusche weist regelmäßige Bohrungen mit einem Durchmesser von etwa 20 bis 70 Mikrometer auf.

Bei Verwendung von plattierten Blechen kann zusätzlich zur ein- und/oder beidseitigen Plattierung und/oder nach Auftreten von Verschleißerscheinungen ein Innenmantel aufgebracht werden, der mittels eines Schweißverfahrens und bevorzugt mittels Laserschweißung verbunden wird. Zur gleichzeitigen Verwendung des Innenmantels als Temperierungssystem werden Hohlräume wie oben beim Außenmantel der Kartusche erzeugt. Der Innenmantel hat eine Dicke von 1 bis 1,5 mm, auch 1,5 bis 2 mm oder auch von 2 bis 2,5 mm. Druckverluste sind minimal und werden über Anzahl und Größe der Ein- und Austrittsstutzen zusätzlich minimiert.

Die Kartusche oder die Membranteile aus Stahl und vor allem Edelstahl und besonders austenitischen Stählen und besonders bevorzugt aus Stählen zunehmender Chrom- und Molybdängehalte der Gruppen 6, 7 und 8 oder auch Duplexstählen (DIN-Bezeichnungen u.a. 1.4571 (1.4404), 1.4435, 1.4539, 1.4439, 1.4462, 1.4529, 1.4501). Werden beanspruchendere Reaktionsbedingungen gewählt, sind zum Beispiel Kupfer-Nickellegierungen, hoch-molybdänhaltige Nickellegierungen, wie z. B. 2.4610, sowie Titan einzusetzen. Die Wanddicke der Kartusche ist so ausgelegt, dass die Kartusche einem Differenzdruck von 2, bevorzugt 4 und besonders bevorzugt von 6 bar ausgesetzt werden kann.

Besonders im Boden- beziehungsweise Wandbereich kommt es durch Sedimentation und die Wirkung der Schwerkraft zur Ansammlung fester Bestandteile mit der Gefahr von Anbackungen und Verstopfungen. Diese verhindern einen reibungslosen Wärmeaustausch und erschweren den Kontakt der Edukte innerhalb des Reaktionsgemischs, was die Steuerung der Reaktion erschwert. Daher wurden die an diesen Stellen eingesetzten Membranteile speziell bearbeitet, insbesondere im Boden- beziehungsweise Wandbereich mindestens aber im Konusbereich und bevorzugt im unteren Drittel besonders in den Bereichen, in denen es zu Ablagerungen oder Anbackungen kommen kann. Die Bearbeitung dieser Bleche erfolgt beispielsweise durch das Bohren von Löchern in regelmäßigen Abständen, bevorzugt in Abständen von unter 10 mm, auch von unter 6 mm und auch unter 4 mm.

Die Löcher in den Membranteilen oder in der Kartusche werden mittels Laser in das Element bzw. Bauteil gebohrt und besitzen Durchmesser zwischen 200 bis 10 Mikrometer, auch zwischen 100 und 20 Mikrometer und auch zwischen 50 und 25 Mikrometer. Die Löcher sind vorzugsweise trichterförmig ausgebildet, so dass der Durchmesser der Löcher am Austritt mindestens doppelt so groß ist wie am Eintritt. Dadurch wird eine gefächerte Strömung erzielt, die einen optimierten Wärmeübergang ermöglicht. Die Achse der Löcher verläuft fast parallel zur Reaktorachse und/oder senkrecht zur Oberfläche zu den durchlöcherten Membranteilen. Durch die Löcher wird erhitztes oder gekühltes und hinreichend aufbereitetes Prozesswasser, Frischwasser oder Wasserdampf durch einen Überdruck vom Hohlraum in den Druckbehälterinnenraum geleitet. Die Löcher können dabei als Düsen fungieren. Die vorgenannten Flüssigkeiten dienen gleichzeitig als Temperierungs- und Treibmedium. Prozesswasser oder Frischwasser muss zur Durchleitung durch die Löcher beziehungsweise das Wärmeaustauschsystem hinreichend aufbereitet sein. Es werden die Standards bei der Konditionierung angestrebt, die auch für Speisewasser und/oder Kesselwasser gelten.

Zwischen der Reaktorwand und den Membranteilen wird ein zum Reaktorinnenraum abgedichteter Hohlraum belassen, der zur Durchleitung von Lösungsmittel, Wasser oder Wasserdampf dient. Der Überdruck des aus den Bohrungen austretenden Prozesswassers ist stets so hoch, dass ein Eindringen von Reaktionsgemisch verhindert wird. Die Stärke der Membranteile oder Kartuschenwand ist so ausgelegt, dass die Wandstärke den Anforderungen der Druckdifferenzen zwischen der Innen- und Außenseite gerecht wird. Die Membranteile beziehungsweise die Hohlräume, die sie mit der Druckbehälterwand bilden, können in Zonen, die beispielsweise im Konus- oder Bodenbereich eine konzentrische Fläche aufweisen, eingeteilt werden. Diese sind durch unterschiedliche Druckstufen gekennzeichnet. Die unterschiedlichen Druckstufen kommen zum Beispiel durch Ventile oder getrennte Pumpsysteme zustande. Dadurch kann Ablagerungen und Anbackungen durch schwerkraftbedingten Sedimentationen entgegengewirkt werden. Vergleichbare Effekte können bei einheitlichem Druck werden durch angepasste Durchmesser der Löcher erzielt. Beispielsweise können die Durchmesser in den Bereichen mit schweren Sedimentationen größer sein.

Alternativ zur Beschichtung oder Verwendung zusätzlicher Stoffe zur Vorbeugung von Korrosionen kann der Innenraum, insbesondere der Boden beziehungsweise der Konus des Druckbehälters sowie Armaturen und andere mit dem Reaktionsgemisch in Berührung kommenden Teile oberflächenbehandelt sein. Insbesondere wird dies durch eine Verringerung der Oberflächenrauheit erreicht. Alternativ oder zusätzlich werden zur Oberflächenbehandlung nach üblicher Vorbehandlung abtragende Fertigungsverfahren angewandt, auch elektrochemische Abtragverfahren oder auch in einem speziell auf das Material abgestimmten Elektrolyten Metall anodisch abgetragen.

Während der chemischen Umwandlungsreaktion werden etwa 5 bis 34 Prozent der Energie, die im Ausgangsstoff enthalten ist, als Wärme freigesetzt. Diese Energie wird durch Vorrichtungen zum Wärmetausch für andere Prozesse mit Wärmebedarf innerhalb oder außerhalb des Prozesses oder Anlage genutzt. Innerhalb des Prozesses oder Anlage kann die Wärme beispielsweise zur Vorwärmung der Biomasse oder von Reaktionsräumen genutzt werden. Außerhalb des Prozesses oder Anlage kann die Energie zur Beheizung von Räumen, Maschinen oder als Prozesswärme für andere Prozesse eingesetzt werden. Mit Hilfe des Temperierungssystems soll nicht nur die erforderliche Wärmeenergie zur Initiierung des chemischen Umwandlungsprozesses zugeführt werden können, sondern auch die bei der exothermen Reaktion freiwerdende Wärmeenergie abgeführt werden. Dadurch kann der Entwicklung unkontrollierter Hot-Spots und damit auch einem Durchgehen des Reaktors entgegengewirkt werden. Es wird mindestens ein und bevorzugt mehrere oder eine Kombination verschiedener Temperierungssysteme eingesetzt, die mechanisch, elektrisch oder chemisch betrieben werden. Zusätzlich oder alternativ zu den unten genannten Prozesswassersystemen besteht das Temperierungssystem des Reaktors beispielsweise aus einer Doppelwandkonstruktion, einem Einschraubheizkörper, in den Reaktor eingebrachte Heiz- und Kühlschlangen beziehungsweise -rippen oder an der Außenwand aufgeschweißten Halbrohrschlangen. Alternativ oder ergänzend kommt je nach Konstruktionsweise und gewähltem Material zum Beispiel ein Wärmeaustauschplatten-System in Frage. Als Wärmeenergieträger beziehungsweise Temperierungsmedium für durchflossene und zum Reaktorinnenraum geschlossene Temperierungssysteme werden vorzugsweise Prozesswasser und/oder ein Thermoöl verwendet.

Die Kombination, Positionierung, Auslegung und Steuerung des jeweiligen Temperierungssystems ergibt sich aus der Prozessführung und sind insbesondere von der Zusammensetzung der Ausgangsstoffe abhängig. Sämtliche Prozesswassersysteme außerhalb und innerhalb des Reaktors können für den Temperierungsprozess eingesetzt werden. Dies kann zum einen durch externe, das heißt außerhalb des Reaktors gelegene Wärmetauschprozesse und zum anderen durch die Einbringung von temperiertem Prozesswasser als Verdünnungs-, Temperierungs-, Ansaugmedium oder Treibmittel für Mischer, Pumpen und/oder Düsen und/oder als angesaugtes Medium für die Flüssigkeitsstrahlpumpen geschehen. Eine Vermischung von Prozess- und Frischwasser kann ebenfalls einer optimierten Reaktortemperierung dienen. Zusätzlich kann dadurch auch die Prozessführung optimiert werden, indem zum Beispiel die Konzentrationen bestimmter anorganischer Stoffe und Störstoffe gesenkt wird. Vorteilhaft kann die Zuführung eines Temperierungsmediums sein, insbesondere durch Eindüsen von temperiertem Wasser oder recyceltem Prozesswasser an temperaturkritischen Punkten. Ergänzend wird die Temperierung über die Prozessführung gesteuert. Neben der Kombination von Ausgangsstoffen, pH-Wert, Probenvorbereiten und Katalysatoren ist die zeitversetzte Einbringung von Ausgangsstoffen in Abhängigkeit von ihren Umsetzungseigenschaften ein wesentliches Element der Temperatursteuerung.

Während des Verfahrensverlaufs ändern sich die Viskosität, Dichte und Größe und andere Eigenschaften der Ausgangsstoffe beziehungsweise, des Reaktionsgemischs. Diese Veränderungen sind auf chemische Reaktionen und Strukturveränderungen der kohlenstoffhaltigen Ausgangsstoffe, die auch auf die Depolymerisation und später auf die Polymerisation der Ausgangsstoffe zurückzuführen sind. Daraus ergeben sich unterschiedliche Anforderungen an den Mischvorgang in Abhängigkeit vom Prozessverlauf. Eine möglichst gleichmäßige und homogene Vermischung und/oder Strömungsverteilung ist vom Stadium des Prozesses, von den Ausgangsstoffen, Feststoffkonzentrationen und Anforderungen, die an das Reaktionsprodukt gestellt werden, abhängig. Ein Aufwirbeln beziehungsweise Suspendieren erfolgt kontinuierlich oder intermittierend zwecks Wärmeaustauschs, Intensivierung des Eduktkontakts und zwecks besseren Aufschlusses noch vernetzter zum Beispiel lignocellulosehaltiger Schichten, gleichmäßiger Verteilung der Reaktanden und vor allem des Katalysatorgemischs und Entlüftung des Reaktionsgemischs. Gleichzeitig werden Sedimentationen gelöst, aufgelockert und einer Tromben- sowie Agglomeratbildung wird entgegengewirkt. Insgesamt wird dadurch der Reaktionsverlauf positiv beeinflusst. Das heißt je gründlicher und gleichmäßiger der Mischvorgang, desto schneller der Reaktionsverlauf und desto homogener das Reaktionsprodukt. Es kann beziehungsweise können mindestens ein oder mehrere und insbesondere eine Kombination verschiedener Mischsysteme mit und/ohne bewegliche Teile im Reaktionsraum eingesetzt werden. Als Mischer mit bewegten Teilen im Reaktionsraum können ein oder mehrere oder eine Kombination verschiedener Rührer eingesetzt werden. Der Rührer ist mit mindesten einer und vorzugsweise mit zwei oder mehr Wellen ausgestattet, so dass weitere Rührer über den gleichen Motor und Reaktorzugang angetrieben werden. Ein Vorteil solcher Rührsysteme ist der relativ geringe Energiebedarf im Verhältnis zum Energieeintrag beziehungsweise zur Mischzeit. Der entscheidende Nachteil neben den hohen Kosten liegt in der Störanfälligkeit und dem höheren Wartungsbedarf gegenüber Mischsystemen ohne bewegte Teile im Reaktionsraum.

Unter Flüssigkeitsstrahlsystemen werden Flüssigkeitsstrahlmischer, -pumpen und Düsen verstanden. Sie besitzen in der Regel keine bewegten Teile und sind daher wartungsärmer. Flüssigkeitsstrahlsysteme können als Mischsysteme dienen, denn sie sind dazu geeignet, kinetische Energie über ein Treibmittel, das auch als Wärme- beziehungsweise Kühlmittel dienen kann, in den Reaktor einzubringen, um den Reaktorinhalt zu suspendieren und zu homogenisieren. Weitere Vorteile von Flüssigkeitsstrahlsystemen zählen sind ihre geringe Baugröße, minimale Störung der Strömungs- und Flußverhältnisse und Vermeidung von Dichtungssystemen. Strombrecher, wie sie für herkömmliche Rührsysteme nicht selten eingesetzt werden müssen, sind überflüssig, Daher gibt es bei der Verwendung solcher Systeme auch keine strombrecherbedingten Strömungstotzonen. Gleichzeitig wird ein Floating (Aufschwimmen von Feststoffen) vermindert, wodurch sich die Gefahr des Lufteinsogs minimiert. Die Flüssigkeitsstrahlsysteme können von einem gemeinsamen oder mehreren Prozesswasserreservoirs gespeist werden. Sie können unabhängig voneinander angesteuert werden und von unterschiedlichen Mengen Treib- und/oder Temperierungsmittel durchflossen werden. Treib- und/oder Temperierungsmittel wird bevorzugt fast kontinuierlich und/oder in Intervallen zum Suspendieren und Homogenisieren zugeführt. Die Positionierung der Flüssigkeitsstrahlsysteme und insbesondere von Flüssigkeitsstrahlmischern wird so gewählt, dass es zur Ausbildung eines Flüssigkeitsstroms zum Beispiel in Form einer vertikalen Schlaufenströmung kommt. Bei Reaktoren ab einem Durchmesser-Höhen-Verhältnis von 1:2 kann auch eine Schlaufenströmung zum Beispiel in Form einer Acht ausgebildet werden oder bei entsprechenden Höhen weiterer Schlaufen, die quer zur Senkrechte verlaufen. Flüssigkeitsstrahlmischer werden insbesondere in der oberen Hälfte positioniert, insbesondere im oberen Drittel, wobei der Treibstrahl nach unten fast parallel zur Reaktorachse gerichtet ist. Bei größeren beziehungsweise höheren Reaktoren insbesondere ab einem Durchmesser-Höhen-Verhältnis von 1:3 werden mehrere Flüssigkeitsstrahlmischer in Reihe geschaltet, das heißt auf verschiedenen Höhen hintereinander geschaltet, so dass ein jeweils nachgeschalteter Mischer den Treibstrom beschleunigt. Bei größeren Durchmessern, insbesondere über einem Meter werden mehrere Flüssigkeitsstrahlmischer auf einer Längsachse so positioniert, dass der Treibstrahl wirksam in eine Richtung verstärkt wird. Werden mehr als zwei Flüssigkeitsstrahlmischer beziehungsweise -pumpen auf einer Höhe eingesetzt, ist die Zahl der Flüssigkeitsstrahlmischer, deren Treibstrahl nach unten zur Reaktorboden gerichtet ist, jeweils gleich. Ein oder mehrere Flüssigkeitsstrahlmischer werden knapp oberhalb des Bodenbereichs beziehungsweise Konus positioniert, so dass die Strömung tangential über die Wand des Bodens beziehungsweise des Konus gelenkt wird. Ein oder mehrere Flüssigkeitsstrahlmischer werden unmittelbar neben dem Ausflussstutzen im Zentrum des Bodenbereichs beziehungsweise Konus positioniert, so dass die Strömung tangential über die Wand des Bodens beziehungsweise Konus nach oben gelenkt wird.

Durch die Turbulenzwirbel und Scherbelastung der Flüssigkeitsstrahlsysteme desagglomerieren die Feststoffe. Durch den zusätzlichen Einsatz von Zerkleinerungsvorrichtungen in Bereichen maximaler Turbulenz und Scherbelastung, insbesondere der Saugschlitze beziehungsweise Ansaug- und Austrittsöffnungen, wird der Bildung von Klumpen und Agglomeraten gezielt entgegengewirkt. An Positionen, an denen die Saugschlitze beziehungsweise Ansaugöffnungen zu Verstopfungen neigen, können diese mit einer eigenen Prozesswasserzufuhr versorgt werden, wobei das Prozesswasser zu diesem Zweck nur grob gereinigt wird. Zur Grobreinigung werden zum Beispiel Siebe, Filter und Membrane eingesetzt. Die Grobreinigung verläuft schneller und praktisch unmittelbar ohne beziehungsweise mit wesentlich geringeren Reservevolumina im Gegensatz zur Prozesswasserreinigung zwecks Aufbereitung von Treib- und Temperierungsmittel. Alternativ werden verstopfungs- und ablagerungsgefährdete Saugschlitze beziehungsweise Ansaugöffnungen der Mischer mit Vollstrahldüsen mit eigenem Treibstromkreislauf freigehalten und/oder mit einem Mechanismus zur kurzzeitigen Flußumkehr ausgestattet. Zur Steuerung dieser Düsen dienen Durchflußmesser, Manometer und Ventile, die auf Verstopfungen zum Beispiel durch Druckveränderungen im Ansaugbereich reagieren. Auch eine gemischte Reaktionsgemischzufuhr für die verstopfungs- und ablagerungsgefährdete Saugschlitze beziehungsweise Ansaugöffnungen der Mischer kann realisiert werden durch eine geteilte Treibstromzufuhr: ein Anteil wird direkt aus dem Reaktor angesaugt, ein anderer Anteil wird grob gefiltert aus dem oberen Reaktorteil angesaugt. Die Treibstromzufuhr wird über Ventile geregelt und geschaltet, so dass zum Beispiel bei Betriebsproblemen oder bei zu geringem Flüssigkeitsstand, Treibmittel eingespart wird.

Düsen können an gezielten Stellen im Behälterinnenraum eingesetzt werden. Dazu zählen insbesondere Totraumbereiche oder Zonen, in denen Ablagerungen und Anbackungen unterbunden werden sollen. In sämtlichen Flüssigkeitsstrahlsystemen herrscht ein kontinuierlicher Differenzdruck gegenüber dem Reaktorinnendruck, um einen Rückfluss des Reaktionsgemischs in die Mischer, Pumpen und Düsen zu verhindern. Eine Verlangsamung oder ein Stillstand der Strömung beschleunigt den Absetzungs- und Sedimentationsprozess der festen Reaktionsprodukte, die sich dadurch zunehmend im unteren Reaktorteil ansammeln.

Während der chemischen Umwandlungsprozesse kann es zu Ablagerungen und Anbackungen an den Wänden des Reaktors sowie den Armaturen und Teilen, die mit dem Reaktionsgemisch in Berührung kommen. Ohne die Betriebstemperatur wesentlich zu senken, kann nach dem Überführen des Reaktorinhalts in einen anderen Druckbehälter oder Reaktor ein Reinigungsvorgang durchgeführt werden. Als Reinigungsvorrichtung kann beispielsweise eine bewegliche und steuerbare Hochdruckdüse eingesetzt werden. Durch eine kompakte Bauweise kann die Vorrichtung durch ein Handloch, eine Schleuse oder ein Ventil in den Innenraum eingebracht werden. Der Reinigungsvorgang wird unter direkter Sichtkontrolle oder mittels einer oder mehrerer Kameras durchgeführt. Die Reinigungsvorrichtung lässt sich von außen fernsteuern. Druck und Temperatur des Treibmediums werden so eingestellt, dass das bestmögliche Reinigungsergebnis erzielt wird, ohne die auskleidenden Materialien oder Beschichtungen zu beschädigen. Insbesondere sind Trockeneis-Strahler zur Oberflächenreinigung der Strahlmedien geeignet: Trockeneispellets als Strahlmittel werden mit Druckluft auf 300 m/s beschleunigt und treffen mit hoher kinetischer Energie auf die Schmutzschicht auf. Dabei kühlen sie diese auf minus 80°C ab; die Schmutzschicht schrumpft und wird spröde. Gleichzeitig verdampfen die Trockeneispellets und dehnen sich schlagartig auf das bis zu 700-fache aus, was die die Schmutzschicht von der Oberfläche absprengt. Durch den Einsatz eines Trockeneis-Strahlers zur Reinigung entfällt die aufwendige Aufarbeitung oder Entsorgung eines Reinigungsmediums. Umweltbelastende organische Lösungsmittel und halogenierte Kohlenwasserstoffe werden überflüssig. Dadurch, dass sich die Trockeneispellets förmlich in Luft auflösen, entsteht noch ein weiterer entscheidender Vorteil: Eine Zerlegung und externe Reinigung von Anlagekomponenten wird sehr häufig überflüssig. Ein Trockeneis-Strahler wird bevorzugt als Tauchschnorchelsystem eingesetzt. Es wird durch ein Handloch an zentraler Position in den Reaktor eingeführt und an Haltesystem, das vorher positioniert wurde, angedockt. Mit Hilfe einer rotierenden Sprüheinrichtung werden die Trockeneispellets auf die zu reinigenden Stellen gerichtet.

Als Treibmittel für die Flüssigkeitsstrahlmischer, -pumpen und Düsen kann ein flüssiges oder gasförmiges Medium wie zum Beispiel Wasser, aufbereitetes Prozesswasser oder ein Gas wie zum Beispiel Wasserdampf dienen. Das Prozesswasser wird beim beziehungsweise unmittelbar nach dem Austritt aus dem Reaktor gesiebt, gefiltert und von Störstoffen befreit, so dass die Mischer, Pumpen und Düsen nicht verstopfen und der Verschleiß an Reaktor-, Rohr-, Pumpenbestandteilen und anderen Armaturen minimiert wird. Mit Hilfe eines Wärmetauschers wird die Temperatur des Treibmittels so eingestellt, dass dessen Einbringung zur Steuerung der Prozesstemperatur dient. Das Treib-/Temperierungsmittel wird außerhalb des beziehungsweise der Reaktoren bei ähnlichen Drücken geführt wie innerhalb des beziehungsweise der Reaktoren. Wird auf die Temperierungsfunktion des Prozesswassers verzichtet, wird es außerhalb der Reaktionsräume bei ähnlichen Temperaturen geführt wie innerhalb derselben. Alternativ zu Prozesswasser kann Frischwasser, Wasserdampf oder Wasser aus anderen Prozessen als Treib-, Wärme- beziehungsweise Kühlmittel eingesetzt werden.

Die im Prozesswasser enthaltenen Stoffe sind abhängig von der Mischung der Ausgangsstoffe und der Prozessführung einschließlich der Katalysatoren. Durch die verfahrensbedingte Desintegration gehen vorher in der Biomasse gebundene Stoffe in Lösung. Zahlreiche Elemente einschließlich Chlor, Schwefel, Nitrat und Ihre Salze sowie Metalle insbesondere Schwermetalle und Mineralien sowie Alkalien wie zum Beispiel Kalium oder Natrium und ihre Salze gehen zu einem bestimmten Anteil während des chemischen Umsetzungsprozesses in die wässrige Phase über. Ein Anteil wird wieder in der Festphase gebunden. Der restliche Anteil verbleibt in der flüssigen Phase. Die Anteile der Stoffe, die in der flüssigen Phase übergehen, sind auch abhängig vom Konzentrationsgefälle, das heißt der bereits in der flüssigen Phase vorhandenen Konzentration. Bei steigenden Konzentrationen tritt eine Sättigung bis hin zum Ausfallen bestimmter Stoffe ein. So können anorganische Stoffe und Verbindungen zum Beispiel Sulfate und Chloride als Salze ausfallen und dadurch die Prozessführung und Reaktorbestandteile nachteilig beeinflussen. Der Anteil organischer Kohlenstoffverbindungen in der flüssigen Phase kann über 50g pro Liter liegen. Der CSB-Wert des Prozesswassers liegt bereits ohne Wiederverwertung im höheren fünfstelligen Bereich (mg O₂/l) und überschreitet damit die gesetzlichen Einleitungsgrenzwerte deutlich. Unter dem chemischen Sauerstoffbedarf CSB versteht man im umfassenden Sinne die Menge an Sauerstoff, die erforderlich ist, alle organischen Inhaltsstoffe einer definierten Stoffmenge chemisch zu oxidieren.

In Abhängigkeit vom Feuchtigkeitsgehalt der Ausgangsstoffe und der Prozessführung einschließlich der Fest-Flüssig-Verhältnisse wird ein Prozesswasseranteil von 10 bis 35 Prozent, auch von 35 bis 60 Prozent oder auch von 60 bis 85 Prozent wiederverwertet. Eine nahezu vollständige Rückführung des Prozesswassers, das heißt eine Kreislaufschließung oder -einengung des Prozesswasserkreislaufs, mit dem Ziel, Frischwasser einzusparen und das Abwasservolumen zu senken, ist nur begrenzt möglich. Denn es kommt neben einer Akkumulation organischer Kohlenstoffverbindungen zu einer Anreicherung anorganischer Stoffe wie Sulfat, Nitrat, Calcium Chlor, Phosphor oder ihrer Verbindungen. Anorganische Störstoffkonzentrationen beschleunigen die Korrosion. Kalkablagerungen stören den Strömungsfluss im Reaktor und schädigen ebenfalls Armaturen wie Pumpen, Ventile und Düsen. Damit steigen die Anforderungen an die Auslegung des Reaktors. Sulfate können ausfallen. Die Geschwindigkeit der Akkumulation beziehungsweise Aufsättigung ist abhängig von der stofflichen Zusammensetzung der Ausgangsstoffe und der Prozessführung .

Der chemische Umwandlungsprozess dauert in der Regel mehrere Stunden. In dieser Zeit gehen komplexe chemische Vorgänge verbunden mit stofflichen Veränderungen einher, die zur Optimierung der Prozessführung zu berücksichtigen sind. Unterschiedliche Arten von Biomasse werden in den ersten zwei bis drei Prozessphasen in Intervallen zugeführt. Je nach gewünschtem Reaktionsprodukt werden zum Beispiel gegen Ende der letzten beiden Prozessphasen Reaktionsprodukte abgezogen. Treib- oder Temperierungsmittel wie zum Beispiel ein Gas, Wasser, insbesondere Prozesswasser und/oder Prozess-/Synthesegas sowie Katalysatoren werden während des laufenden Prozesses abgezogen oder zugeführt. Reaktanden und insbesondere Nebenprodukte werden entfernt, die sowohl den Ablauf der chemischen Reaktion, die Durchmischung als auch die Strömung stören.

Zur Abscheidung der festen Stoffe und insbesondere der Reaktionsprodukte im Reaktionsgemisch können verschiedene Verfahren zum Einsatz kommen. Die Fest-Flüssig-Trennung dient zur Abtrennung der flüssigen Phase, wodurch eine Aufkonzentration der Feststoffanteile erreicht wird. Zur Abtrennung der Feststoffe können verschiedene Siebungsvorgänge (Grobsiebung, Feinsiebung), Filtrationsprozesse und/oder die Fliehkraftabscheidung mittels Zyklon miteinander verknüpft werden. Um den Aufwand einer Filtration oder Siebung während des Prozesses zu verringern, werden im Rahmen der Vorbehandlung bereits eine oder mehrere Filtrations- oder Siebungsvorgänge durchgeführt.

Es kann mindestens eine Grob- oder eine Feinfiltration oder eine Kombination aus diesen beiden Verfahren erfolgen. Durch Filtrationsverfahren, insbesondere Mikro- und/oder Ultrafiltrationsverfahren oder eine Kombination der beiden, kann ein Drittel bis zwei Drittel der gesamten organischen Kohlenstoffverbindungen aus dem Prozesswasser entfernt werden. Die Fest-Flüssig-Trennung wird vorzugsweise bei Betriebsbedingungen betrieben und geht in der Regel über die Nutzung einfacher Papierfilter wie sie beispielsweise im Labormaßstab verwendet werden hinaus. Die Auswahl der verwendeten Methoden ist unter anderem abhängig von der chemischen Zusammensetzung, Partikelgrößenverteilung, Dichte, Partikelform, Festigkeit sowie Löslichkeit und schließt die Ausnutzung elektrischer Ströme und Ladungen, unterschiedliche Dichten und Fliehkräfte sowie verschiedene Partikelgrößen ein.

Zu den eingesetzten Vorrichtungen zur Fest-Flüssig-Trennung zählen die dynamische, statische, Vakuum-, Druck und Sterilfiltration, darunter insbesondere die Cross-Flow-Filtration einschließlich verfügbarer Mikro-, Ultra-, Nanofiltration- und Umkehrosmose-verfahren. Es werden bevorzugt Vorrichtungen verwendet, bei denen das zugrunde liegende Verfahrens- oder Funktionsprinzip von Hydrozyklonen, Zentrifugen, kraftfeldunterstützten Trenngeräten und/oder Filtrationsverfahren angewandt wird. Zu den bevorzugten Filtrationsverfahren zählen insbesondere diejenigen, die sich auch bei den Reaktionsbedingungen der hydrothermalen Karbonisierung einsetzen lassen. Bevorzugt werden für die Fest-Flüssig-Trennungen insbesondere bei Betriebsbedingungen Rotationsscheibenfilter oder Zentrifugalmembranfilter eingesetzt. Das bevorzugte Material, das für die Ausbildung der Poren verantwortlich ist, besteht aus Metall und besonders aus Keramik.Die Form des porenbildenden Materials ist bevorzugt scheibenförmig. Je nach angewendetem Filtrationsverfahren und dabei eingesetzten Materialien liegt nicht immer ein proportionales Verhältnis von Porengröße des Filters und der Feststoffmenge im Filtrat vor. Dies trifft insbesondere auf den Einsatz keramischer Werkstoffe für die Filterelemente zu. Die wässrige Phase wird einem Prozesswasserreservoir oder gefiltert oder ungefiltert der Prozesswasseraufbereitung zugeführt. Die Eigenschaften der abzutrennenden Feststoffe und damit die Wahl der zur Abtrennung gewählten Verfahren hängen von der Prozessführung und von den Eigenschaften des gewünschten Reaktionsprodukts ab. Je weiter fortgeschritten der Prozess und je höher die Dichte des Reaktionsprodukts ist, desto einfacher lässt es sich abtrennen. Bevorzugt erfolgt die Abtrennung nah an den Betriebsbedingungen. Die Feststoffmenge im Filtrat sinkt in der Regel proportional zur Porengröße und kann durch den Einsatz eines Ultrafiltrationsverfahrens deutlich ansteigen und über zwei Drittel bis vier Fünftel betragen. In den Prozess sind ein oder mehrere Vorrichtungen zur Fest-Flüssig-Trennung integriert zur Elimination von Sand und anderen Störstoffen mit hoher Dichte oder hohem Gewicht, die im Laufe der Behandlung der Biomasse abtrennbar werden. Insbesondere zur Aufreinigung des Prozesswassers, das als Treibstrahlmittel verwendet wird, ist die Anwendung des Prinzips der Fliehkraftabscheidung von Feststoffen vorteilhaft, um Pumpen, Mischer und Düsen zu schonen.

Während des Prozesses wird an ein oder mehreren Stellen aus der oberen Hälfte, bevorzugt aus dem oberen Drittel, besonders bevorzugt aus dem oberen Viertel, des Reaktors Prozesswasser zur Aufbereitung abgezogen. Aufbereitetes Prozesswasser wird in den Wasserkreislauf der Anlage zur Wiederverwertung zurückgeführt. Mindestens ein und bevorzugt mehrere Prozesswasserreservoirs können für jeden einzelnen Reaktor oder für mehrere zusammengeschaltete Reaktoren und für andere Vorrichtungen der Anlage genutzt werden. Den einzelnen Prozesswasserreservoirs sind verschiedene Reinigungsschritte vorgeschaltet. Das Volumen einzelner oder eines gemeinsamen Prozesswasserreservoirs beträgt in ihrer Summe etwa 35 bis 85 Prozent des Gesamtvolumens aller Reaktoren. Das Prozesswasserreservoir ist für die Temperatur- und Druckbelastung der Reaktoren ausgelegt, so dass Druckminderungs- und Wärmeaustauschvorrichtungen nicht zwingend erforderlich sind. Eine Prozesswasserreinigung ist in den Wasserkreislauf der beschriebenen Anlage integriert. In Abhängigkeit von der Verwendung des aufbereiteten Prozesswassers sind unterschiedliche Reinigungs- beziehungsweise Aufbereitungsverfahren notwendig. Dazu kommen verschiedene mechanische, chemische und biologische Verfahren und Vorrichtungen einzeln oder in Kombination zum Einsatz: Aerobe und anaerobe Hochleistungsbioreaktoren, Biomembranreaktoren, Anaerob- und Belebtschlammverfahren. In den Prozesswasserkreislauf integrierte oder angeschlossene oben genannte Verfahren und Vorrichtungen sollen den Gehalt an organischen Verbindungen im Kreislaufwasser zwar erheblich senken; das Maß der Rückführung des Prozesswassers muss jedoch von den Konzentrationen von nicht ausreichend abgebaute organische Substanzen und hohen Alkalimetall- beziehungsweise Mineralstoffkonzentrationen wie zum Beispiel Calcium abhängig gemacht werden. Um einen möglichst hohen Anteil des Prozesswassers zurückführen zu können, soll eine besonders leistungsfähige Kombination unterschiedlicher Verfahren und Vorrichtungen zum Einsatz kommen.

Die Vorrichtung zur mechanischen Abwasserreinigung ist ein Filter, bevorzugt ein Mikrofilter und besonders bevorzugt ein Ultrafiter, und kann mit den oben beschriebenen Verfahren zur Fest-Flüssig-Trennung deckungsgleich sein. Die Vorrichtung zur Fest-Flüssig-Trennung, in dem der oder die Filter eingebaut sind, ist bevorzugt ein Rotationsscheibenfilter und besonders bevorzugt ein Zentrifugalmembranfilter. Zur biologischen Reinigung des Prozess- beziehungsweise Abwassers kommt eine Vorrichtung zum Einsatz, die den komplexen Anforderungen zur Reinigung am ehesten gerecht wird. Zum Beispiel soll bevorzugt eine Vorrichtung in Stahlbauweise verwendet werden, zum Beispiel ein Hochleistungsbioreaktor im Biomembranverfahren, bevorzugt eine aerobe Prozesswasserbehandlung, besonders bevorzugt ein Schlaufenreaktor. Der Schlaufenreaktor soll in seiner Auslegung über eine leistungsfähige Düse zur Vermischung der festen und flüssigen Phase verfügen. Alternativ oder zusätzlich zum aeroben Verfahren kann ein Reaktor zur anaeroben Prozesswasserbehandlung oder auch reverse Elektrodialyse (Electrodialysis Reversal) insbesondere zur Nitratrückgewinnung, Destillations- Verdampfungs- und/oder Ionenaustauscherverfahren sowie Aktivkohle eingesetzt werden.

Die Geruchsbelastung stellt sowohl Anforderungen an die Lagerung und den Transport des Feststoffs als auch an die Auslegung der Anlage, Gebäude und Förderanlage. Die Intensität der Geruchsbelastung nimmt mit der Dauer der Lagerzeit ab. Das Gebäude beziehungsweise die Lager- und Transporträume, insbesondere für die Brennstoffe, sollen luft- beziehungsweise geruchsdicht ausgelegt sein, so dass die belastete Luft nicht entweichen kann. Zugänge zum Gebäude werden über Schleusen abgedichtet. Es wird/werden eine oder mehrere chemische und/oder biologische Luftreinigungsanlagen installiert, so dass die Geruchsbelastung für Mitarbeiter, Lieferanten und Anwohner auf ein Minimum reduziert wird.

Die Abkühlung des Reaktionsprodukts insbesondere unterhalb der Siedetemperatur bei einem bar Absolutdruck erfolgt in der Regel außerhalb des Reaktionsraums, auch in einer Vorrichtung zur Entspannung. Die dabei freigesetzte Wärmeenergie kann über Wärmetauscherprozesse für andere Prozesse verfügbar gemacht werden.

Vor, während oder nach diesem Prozess finden ein oder mehrere Zerkleinerungsschritte statt. Dazu werden bevorzugt Mühlen oder Pressverfahren eingesetzt.

Die Abtrennung der festen Phase aus dem Reaktionsgemisch erfolgt im ersten Schritt in der Regel in mechanischen und im zweiten Schritt in thermischen Trennvorrichtungen.

Ein statischer Eindicker wird zur Verminderung des Wassergehalts unter Einwirkung der Schwerkraft mit oder ohne mechanische, sich drehende Vorrichtung beziehungsweise Krählwerk, zum Beispiel ein Standeindicker oder Durchlaufeindicker verwendet. Die Regelung der Zulaufmenge kann von einem Dosierapparat übernommen werden. Bei entspre chend großen Volumina ermöglicht der Apparat das eingedickte Gemisch, dosiert und auf mehrere Maschinen, gleichmäßig abzugeben. Der Eindicker kann auch direkt in die Trocknungsvorrichtung integriert werden. Eine vorteilhafte Auslegung der Konus-Konstruktion ermöglicht, dass die Trocknungsvorrichtung direkt mit dem Gemisch beschickt wird. Bei entsprechender Anpassung der Prozessgrößen kann somit auf externe Installationen verzichtet werden. Alternativ kann das einzudickende Gemisch wird unter Druck auf eine gewölbte Siebfläche beziehungsweise auf ein Bogensieb aufgegeben werden. Die entstehende Zentrifugalkraft drückt einen Teil der Flüssigkeit durch die Siebschlitze. Das eingedickte Gemisch wird am Ende der Siebbahn zusammengefasst und der Trocknungsvorrichtung zugeführt. Ein weiteres vorteilhaftes mechanisches Trennverfahren bietet ein Hydrozyklon, in dem Feststoff und Flüssigkeit durch Zentrifugalbeschleunigung getrennt werden. Das eingedickte Gemisch im Unterlauf wird der Trocknungsvorrichtung zugeführt und die prozessierte beziehungsweise geklärte Flüssigkeit verlässt im Überlauf den Hydrozyklon. Durch vorgeschaltete und abgestimmte Eindickapparate und zwischengeschaltete Dosiervorrichtungen kann ein kontinuierlicher und optimierter Zulauf zur Trocknungsvorrichtung gewährleistet werden. Dies ist insbesondere bei Verwendung einer Schubzentrifuge zur Trocknung von Bedeutung. Schubzentrifugen verfügen über eine hohe eine Betriebssicherheit und sind zum Entfeuchten und Waschen körniger Feststoffe geeignet.

Neben mechanischen Vorrichtungen, die der Trocknung zumeist aus energetischen Gründen vorzuschalten sind, werden thermische Trennverfahren zur Trocknung bevorzugt eingesetzt. Die der Trocknung zugeführten Mengen liegen über einem Kilogramm Gewicht. Einem Chargenbetrieb ist ein kontinuierlicher Betrieb vorzuziehen. Die Trocknung erfolgt durch mindestens einen oder mehrere Trockner oder durch eine Kombination verschiedener Vorrichtungen zur Trennung und/oder Trocknung. Zur Trocknung der Reaktions- und/oder Nebenprodukte wird zum Beispiel ein Konvektionstrockner verwendet. Dabei kommt d as Trockengut mit heißem Trocknungsgas in Kontakt. Nachteilig ist dabei, dass das verwendete Gas abzuführen ist und in der Regel mit Staubabscheidern gereinigt werden muss. Gegebenenfalls wird das Gas nach Kondensieren der Feuchtigkeit zurückgeführt. Als Konvektionstrockner kann beispielsweise ein Wirbelschichttrockner eingesetzt werden. Ebenso können Sprüh-, Düsenturm- oder Stromtrockner in Abhängigkeit von der vorliegenden beziehungsweise erwünschten Partikelgröße verwendet werden. Vorteilhaft ist ein kontinuierlicher Prozess, bei dem ein oder mehrere Horden-, Trommel- oder Tunneltrockner eingesetzt werden.

Bei der Verwendung eines Kontakttrockners steht im Wesentlichen nur die Kontaktfläche für den Wärmeübergang zur Verfügung. Es wird ein Band-, Vakuumband-, Trommel-, Schnecken-, Zylinder-, Walzen- oder Bandtrockner und bevorzugt ein Vakuumtrommelfilter oder -trockner eingesetzt. Zur Erzielung geringerer Feuchtigkeitsgehalte kann je nach Durchsatzrate alternativ oder zusätzlich zum Beispiel auch ein Tellertrockner verwendet werden. Die Trocknung kann mittels eines heißen gasförmigen Mediums wie zum Beispiel Luft bei Temperaturen zwischen 61 und 95 Grad Celsius, bevorzugt zwischen 65 und 90 Grad Celsius und weiter bevorzugt zwischen 70 und 85 Grad Celsius, erfolgen. Alternativ wird vor allem in den thermischen Trocknungsvorrichtungen als Gas neben Luft bevorzugt überhitzter Wasserdampf und besonders bevorzugt Wasserdampf mit einer Temperatur von 130 bis 180 Grad Celsius eingesetzt.

Es kann ein kombiniertes mechanisch-thermisches Verfahren zur Trennung beziehungsweise Trocknung angewendet werden. Der Vorteil eines mechanischthermischen Prozesses im Vergleich zu den konventionellen Verfahren liegt in einer deutlich geringeren Restfeuchte des Produkts, wodurch gerade bei feinen Partikel- oder Nanosystemen eine verbesserte Förderfähigkeit des Produkts erreicht wird. Ein weiterer Vorteil ist, dass gleichzeitig eine teilweise Auswaschung von Verunreinigungen aus dem Reaktionsprodukt durch den kondensierenden Dampf erfolgt. Der Einsatz von Dampf als weiteres treibendes Entfeuchtungspotential bringt eine Steigerung der Leistung für filtrierend arbeitende Zentrifugen mit sich. Der Mechanismus der ebenen mechanischen Verdrängung durch eine Kondensationsfront wirkt zusammen mit der Massenkraft und führt auch bei kleinsten Reaktionsprodukten bis hin zum Nanobereich praktisch zu einer vollständigen Entleerung des Grobkapillarsystems. Zu den Verfahren, die diesen Mechanismus ausnutzen zählt beispielsweise die Dampf-Druckfiltration. Sie wendet anstelle von Druckluft gesättigten oder überhitzten Dampf für eine Gasdifferenzdruckentfeuchtung an. Besonders bevorzugt wird eine Dampf-Drucküberlagerte Zentrifugalentfeuchtung angewendet. Der Prozess der kombinierten Dampfdruck- und Zentrifugalentfeuchtung überführt den feindispersen Feststoff des Reaktionsprodukts von der Suspension direkt in einem Verfahrensraum in ein trockenes, reines, rieselfähiges anmeldungsgemäßes Endprodukt.

Der Restfeuchtigkeitsgehalt der anmeldungsgemäßen Reaktionsprodukte liegt in vorteilhafter Weise bei ungefähr 6 bis 25 Prozent, auch 10 bis 20 Prozent oder auch 12 bis 15 Prozent.

Nach der Umwandlungsreaktion liegt das Reaktionsgemisch als Suspension vor. In Abhängigkeit von den Ausgangsstoffen und der Prozessführung entstehen aus Biomasse unter anderem folgende Reaktions-, Zwischen-, Neben- und/oder Endprodukte :

Brennstoffe von Torf, über Braunkohle bis zu Steinkohle-ähnlichen Brennstoffe, Humus, Maillard- oder Maillard-ähnlichen Reaktionsprodukte, kohlenstoffhaltige Werkstoffe wie Dämmstoffe, Nanoschwämme, -kügelchen, -fasern, -kabel, Aktiv- oder Sorptionskohle, Grillkohleersatzstoff, hochverdichtete Kohlenstoffprodukte und Werkstoffe und insbesondere auch Ausgangsstoffe für Graphit und graphithaltige oder -artige Produkte sowie Kohlenstofffasern und Ausgangsstoffe für Verbund- oder Faserverbundwerkstoffe.

Auch **Rein-, Reinst-** und **Ultrareinkohle-ähnliche Stoffe** gehören zu den anmeldungsgemäßen Produkten. Sie verfügen über vorteilhafte Eigenschaften, die vor allem auf der Verminderung mineralischer Stoffe gegenüber den Ausgangsstoffen zurückzuführen ist. Unter **Reinkohle** wird vor allem der brennbare Anteil der Kohle und unter **Reinstkohle** wird auch Aktivkohle verstanden. Bei **Ultrareinkohle** liegt beispielsweise der Minderalgehalt unter 0,1 Gewichtsprozent verfügen.

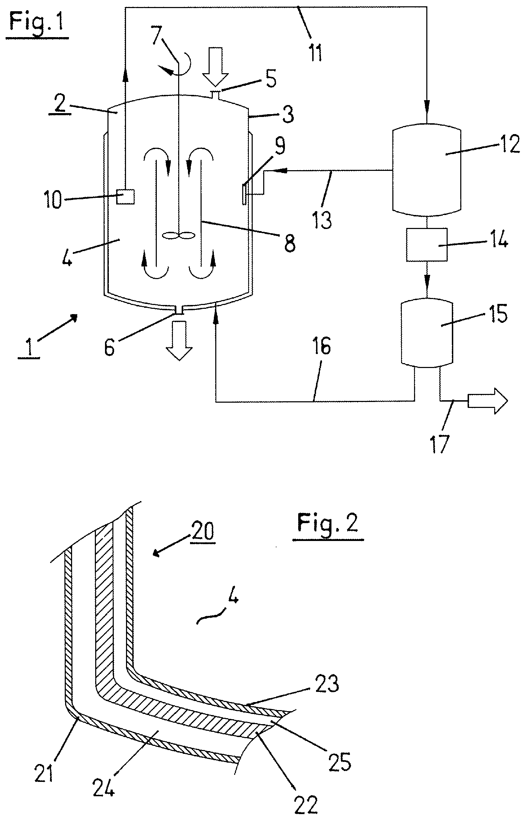

Figur 1 zeigt eine Vorrichtung 1 mit einem Reaktor 2. Der Reaktor 2 besteht aus einem zylindrischen Grundkörper 3, der einen Reaktionsraum 4 einschließt. Der Reaktionsraum 4 dient der Aufnahme eines Fest-/Flüssiggemisches, beispielsweise Biomasse. Der Reaktor 2 weist einen Einfüllstutzen 5 für das Fest-/Flüssiggemisch und eine Auslassstutzen 6 auf, durch den Zwischen-, Neben- oder Endprodukte aus dem Reaktionsraum 4 entnommen werden können. Der Reaktor weist ferner eine Einrichtung zur Durchmischung des Fest-/Flüssiggemisches auf. Die Einrichtung ist in der hier dargestellten Ausführungsform eine Rührvorrichtung 7, mit der das Fest-/Flüssiggemisch während der Behandlung und/oder Bearbeitung gemischt werden kann. Der Reaktor 2 weist ferner ein zylinderförmiges Führungs- bzw. Einsteckrohr 8 auf, das die Strömung des Fest-/Flüssiggemisches im Reaktionsraum 4 lenkt bzw. kontrolliert. Zusätzlich weist der Reaktor 2 eine nicht-mechanische Mischvorrichtung in Form eines Flüssigkeitsstrahlmischers 9 auf. Ferner ist der Reaktor 2 mit einer Filter-vorrichtung 10 ausgestattet, mittels derer feste Bestandteile im Reaktionsraum 4 zurückgehalten werden. Über die Filtervorrichtung 10 und die Leitung 11 kann Prozess- bzw. Brauchwasser aus dem Reaktionsraum 4 abgezogen und einem Reservoir 12 zugeführt werden. Das Brauchwasser kann entweder über die Leitung 13 dem Flüssigkeitsstrahlmischer 9 und damit wieder dem Fest-/Flüssiggemisch im Reaktionsraum 4 zugeführt oder über einen Feinfilter 14 als Reinwasser in ein weiteres Reservoir 15 geleitet werden. Aus dem weiteren Reservoir 15 kann das Reinwasser über die Leitung 16 entweder in den Reaktor 2 zurückgeführt oder über die Leitung 17 dem Abwasser zugeführt werden.

Figur 2 zeigt einen Ausschnitt aus dem Wandbereich des Reaktors 2 gemäß Figur 1. Die Reaktorwand 20 ist doppelwandig ausgebildet, wobei die Reaktorwand 20 aus einer äußeren Wandschicht 21 und einer inneren Wandschicht 22 besteht. Die innere Wandschicht 22 ist am Rand des Reaktionsraums 4 mit einem Membranteil 23 versehen, bei dem es sich beispielsweise um ein gelochtes Blech bzw. ein Membranblech, aber auch um eine Wärmeaustauschplatte handeln kann. Das Membranteil 23 kann entweder in den Reaktor eingehängt oder an der innerern Wandschicht 22 befestigt, beispielsweise angeschweißt, sein. Die äußere Wandschicht 21 und die innere Wandschicht 22 sind voneinander beabstandet, so dass zwischen diesen beiden Wandschichten ein Hohlraum 24 liegt. In dem Hohlraum 24 kann sich beispielsweise ein Thermoöl befinden, wie es beispielsweise zur Übertragung von Wärmeenergie in Wärmeübertragungsanlagen verwendet wird. Das Thermoöl wird erhitzt und in den Hohlraum 24 geleitet, um den Innenraum des Reaktors aufzuheizen. Dies geschieht in einem geschlossenen Kreislauf. Der Vorteil von Thermoöl gegenüber Wasser liegt dabei in seinem wesentlich höheren Siedepunkt, so dass eine Temperatur von bis zu 300 °C erreicht werden kann. Ein weiterer Hohlraum 25 befindet sich zwischen dem Membranteil 23 und der inneren Wandschicht 22. Dieser weitere Hohlraum 25 dient der Aufnahme von Reinwasser und kann beispielsweise auch als Temperierungssystem genutzt werden. Ist das Membranteil 23 ein Membranblech oder eine gelochte Wärmeaustauschplatte, so muss in diesem Fall der Druck im Hohlraum 25 zumindest leicht über dem Druck im Reaktionsraum 4 liegen, damit kein Bestandteile des Reaktionsgemischs in den Hohlraum 25 gelangen kann. Aufgrund der extremen Reaktionsbedingungen im Reaktionsraum 4 besteht die innere Wandschicht 22 vor allem aber das Membranteil 23 aus einem korrosionsbeständigen Material oder sind zumindest mit einem solchen Material beschichtet.

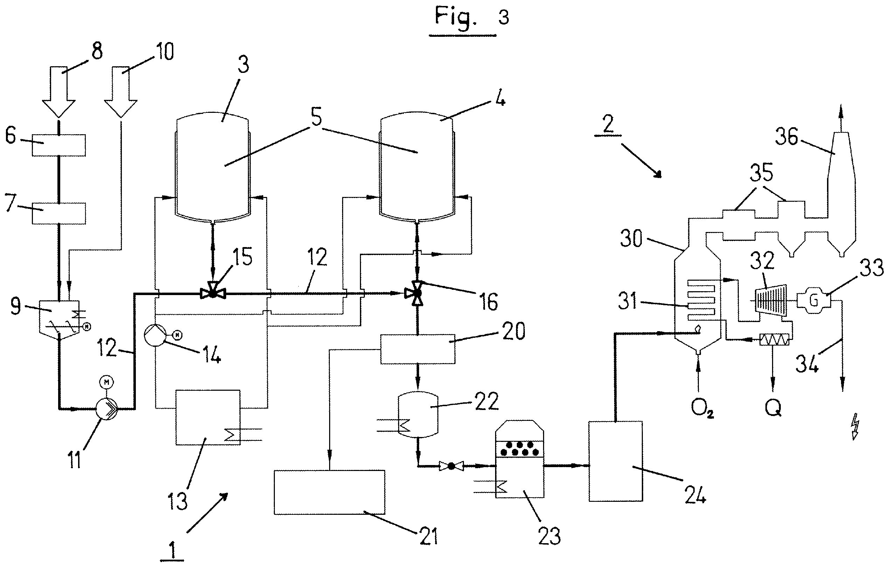

Figur 3 zeigt beispielhaft eine schematische Darstellung einer Anlage.

Die Verbrennung der in der Vorrichtung erzeugten Brennstoffe bzw. Reaktionsprodukte kann in Abhängigkeit von der Art der Brennstoffe beispielsweise in Pelletöfen, Pelletkesseln oder Anbaubrennern, vorzugsweise mit automatischer Brennstoffzufuhr, erfolgen.

Die Anordnung zur Energieerzeugung kann beispielsweise eine Verbrennungsanlage aufweisen, deren Form und Größe des Brenntellers an den Aschegehalt angepasst sind. Da der Aschegehalt bei der Verwendung der anmeldungsgemäßen Vorrichtung geringer ist, reichen kleinere Brenntellerdurchmesser. Zur Verhinderung von Anbackungen am Brennteller ist die anmeldungsgemäße Verbrennungsanlage mit einer automatischen Vorrichtung zur Entfernung der Asche vom Brennteller ausgestattet.

Bei der Energieerzeugung aus staubförmigen Brennstoffen umfasst die anmeldungsgemäße Anlage zur Verbrennung des Staubs ein Kohlekraftwerk beziehungsweise Kohlenstaubfeueurng mit mindestens einer Dampfturbine oder ein super- oder überkritisches Kohlekraftwerk (supercritical coal-fired power plant). Zur Erzielung hoher Wirkungsgrade findet der Verbrennungsprozess bei möglichst hohen Temperaturen von über 600 Grad Celsius, oder über 650 Grad Celsius und in einem weiteren Ausführungsbeispiel über 700 Grad Celsius statt. Weitere Effizienzsteigerung im Hochtemperaturbereich können beispielsweise durch den Einsatz moderner Kraftwerkstechnologien genutzt werden, so dass eine kombinierter Gas-Dampfturbinenprozess mit höchstmöglichen Effizienzgraden zur Stromerzeugung höher als 43 Prozent, oder höher als 46 Prozent, oder in einem weiteren Ausführungsbeispiel 49 Prozent - 55 Prozent, realisiert werden kann.

Für eine Nutzung des Kombiprozesses können das IGCC-Konzept mit integrierter Kohlevergasung, bevorzugt auch Wirbelschichtfeuerungen, vor allem die druckaufgeladene stationäre Wirbelschichtfeuerung (DWSF) mit Kombiprozess und besonders bevorzugt Kombikraftwerke mit Druckkohlenstaubfeuerung (DKSF), eingesetzt werden.

Der Verbrennungsprozess sollte eine Gaseintrittstemperatur von >1.000 Grad Celsius, bevorzugt >1.200 Grad Celsius und besonders bevorzugt >1.400 Grad Celsius, aufweisen. Die Hochtemperaturgasreinigung ist so geartet, dass der Partikelgehalt und der Gehalt an korrosiv wirkenden Inhaltsstoffen, insbesondere Natrium- und Kaliumverbindungen, als auch Schadgasen so weit verringert wird, dass das Rauchgas unmittelbar einer Gasturbine zugeleitet werden kann , bevorzugt unter Ausnutzung der Niedertemperaturplasma-Eigenschaften des Rauchgases.

Durch das Vorsehen eines Rauchgasabscheiders innerhalb der anmeldungsgemäßen Anlage kann ein Partikelgehalt < 3mg/m³ i.N. bei d < 3 Mikrometer, Alkaligehalt ≤0,01 mg/m³ i.N. realisiert werden.

Ein weiterer Weg zur Erzeugung von Strom bzw. Energie aus staubförmigen Brennstoffen ist die Nutzung in einer Kohlenstoff-Brennstoffzelle. Eine Kohlenstoff-Brennstoffzelle besitzt gegenüber der Wasserstoff-Brennstoffzelle zwei entscheidende Vorteile: Zum einen ist der Ladungszustand von Kohlenstoff doppelt so groß wie der eines Wasserstoffmoleküls. Die Gasvolumina vor und nach der Reaktion sind im Fall der Kohlenstoff-Brennstoffzelle gleich groß, dagegen verschieden im Fall der Wasserstoff-Brennstoffzelle. Das bedeutet, dass sich die Entropie im ersten Fall fast nicht verändert, der gesamte Heizwert kann daher vollständig in elektrische Energie gewandelt werden. Daher ist der Nutzungsgrad der Kohlenstoff-Brennstoffzelle theoretisch bis zu 60 Prozent höher als bei der Wasserstoff-Brennstoffzelle. Das Problem besteht darin, die erforderlichen Teilchendichten für den Kohlenstoff zu erreichen. Die anmeldungsgemäße Anlage bietet die Möglichkeit, einen kohleähnlichen Brennstoff mit einer Partikelgröße im Nanobereich für die Kohlenstoff-Brennstoffzelle herzustellen.

Synergien mit anderen Energieerzeugungsverfahren können durch gemeinsame Nutzung von Vorrichtungen zur Energieerzeugung, insbesondere von Turbinen, vorzugsweise Dampf- oder Gasturbinen, geschaffen werden. Zu den erneuerbaren Energien bei denen sich eine gemeinsame Nutzung von Turbinen und insbesondere von Dampf- oder Gasturbinen anbietet zählt das Dispatchable Wind Power System (DWPS). Dabei wird komprimierte Luft in einem Luftspeicher dekomprimiert. Diese Druckluft wird dann zusätzlich in eine ohnehin laufende Turbine eingeleitet. Der Wirkungsgrad erhöht sich durch Einleitung der Druckluft in eine ohnehin laufende Turbine um mehr als 20 bis 200 Prozent, oder 40 bis 170 Prozent und in einem weiteren Auführungsbeispiel um 60 bis 150 Prozent.

Mindestens ein Teil der Energie, die durch die Verwertung der in der anmeldungsgemäßen Vorrichtung hergestellten Brennstoffe erzeugt wird, insbesondere in Form von Wärme- und/oder elektrischer Energie, kann anmeldungsgemäß durch eine der folgenden Einrichtungen verwertet werden:
- Fern- und Nahwärmenetze;
- Verarbeitungs- und Behandlungsprozessen von Ausgangsstoffen, Wasser einschließlich Prozesswasser, Reaktions-, Zwischen-, Neben- und/oder Endprodukten , insbesondere von Brennstoffen, kohlenstoffhaltigen Werkstoffen, Humus und/oder Maillard- bzw. Maillard-ähnlichen Reaktionsprodukten aus Biomasse einschließlich Zerkleinerung, Trocknung, Entwässerung, Konditionierung, Aufreinigung und/oder Trocknung, Prozessen zur Metall- und Störstoffentfernung, insbesondere metallische Stoffe, zum Beispiel mittels Zyklonabscheider, Inkubatoren, Rühr- und Mischsysteme, Pumpen, Erwärmung, Zuführung von Wasserdampf, Wärmetauscherprozesse, Verdichtung, Transport- und Förderprozesse, Prozesswasser-, Wasser und Abwasseraufbereitung und Luftreinigung, Fest-Flüssigtrennprozesse, Kühlung sowie Konditionierung zur Weiterverarbeitung und Energiegewinnung;
- Industrielle Betriebe zur Produktion, Verarbeitung und Bearbeitung von Metallen und insbesondere von Aluminium, Ferrosilikon, Nahrungsmitteln insbesondere Milchverarbeitung, Bierherstellung, Gartenbaubetriebe mit und ohne Gewächshäuser und Fleischverarbeitung;
- Betriebe zur Herstellung und Verarbeitung von Dünger und Düngemittel, Reifenrecylinganlagen;
- Betriebe und Produktionsstätten der chemischen Industrie insbesondere für die Erzeugung und Verarbeitung von Produkten aus Luftbestandteilen und anderen Stoffen in gasförmiger und flüssiger Form einschließlich, Sauerstoff, Stickstoff und Argon;
- Wasserreinigungs- und Entsalzungsanlagen, insbesondere unter Nutzung der Umkehrosmose; oder
- Ölmühlen, Raffinerien, Anlagen zur Ethanolherstellung.

Zwecks Wärme- und Energieaustausch und zur Ausnutzung von Synergiepotenzialen kann die Verwertung der mit der anmeldungsgemäßen Anlage erzeugten Brennstoffe und/oder Reaktionsprodukte gemeinsam mit verschiedenen Kraftwerks- und Energieerzeugungsprozessen betrieben werden. Dazu sind insbesondere geeignet:
- Kohlekraftwerke, darunter insbesondere das IGCC-Konzept mit integrierter Kohlevergasung, bevorzugt auch Kohlestaub-Kraftwerke, insbesondere Wirbelschichtfeuerungen, vor allem die druckaufgeladene stationäre Wirbelschichtfeuerung (DWSF) mit Kombiprozess und besonders bevorzugt Kombikraftwerke mit Druckkohlenstaubfeuerung (DKSF);
- Gaskraftwerke;
- Brennstoffzellen mit unterschiedlichen Brennstoffen einschließlich Methanol, Kohle, Öl und Gas;
- Biomassekraftwerke; oder
- Solarkraftwerke.

Figur 3 zeigt eine Anlage zur Erzeugung von Energie mit einer Vorrichtung 1 zur Behandlung der Biomasse und einer Anordnung 2 zur Energieerzeugung. Die Vorrichtung 1 umfasst zwei in Serie geschaltete Reaktoren 3, 4, die jeweils einen zylindrischen Grundkörper aufweisen, der einen Reaktionsraum 5 einschließt und eine Art Druckbehälter darstellt. Der Reaktionsraum 5 dient der Aufnahme der Ausgangsstoffe einschließlich der Biomasse. Die Vorrichtung 1 umfasst ferner Zerkleinerungsvorrichtungen in Form eines Häckslers 6 und einer Mühle 7. Die Biomasse wird zunächst zur groben Zerkleinerung dem Häcksler 6 zugeführt (Pfeil 8) und von dort aus zur weiteren Zerkleinerung in die Mühle 7 geführt. Die derart vorbereitete Biomasse wird dann in einer Mischvorrichtung 9 intensiv gemischt, wobei auch Hilfsstoffe, wie beispielsweise Katalysatoren, zugesetzt werden können (Pfeil 10). Die Biomasse wird anschließend mittels der Pumpvorrichtung 11 über die Leitung 12 den Reaktoren 3, 4 zugeführt und in deren Reaktionsräumen 5 unter Druck, beispielsweise 7 bar, und bei hoher Temperatur, beispielsweise mindestens 160 °C, weiter behandelt. Das Einstellen der erforderlichen Temperatur in den Reaktionsräumen 5 wird dabei durch das Temperierungssystem 13 sichergestellt. Das Temperierungssystem 13 kann beispielsweise eine Einrichtung zum Erhitzen eines Fluids umfassen, das mittels der Pumpe 14 Wärmetauschern in bzw. an den Reaktoren 3, 4 zugeführt wird. Die Einspeisung der Biomasse in die hintereinander angeordneten Reaktoren 3, 4 wird über die Ventileinrichtungen 15, 16 gesteuert.

Nach der Behandlung der Biomasse werden die Reaktionsprodukte aus den Reaktoren 3, 4 abgezogen und einer Trennvorrichtung 20 zugeführt, welche die festen Reaktionsprodukte von den flüssigen Bestandteilen trennt. Die flüssigen Bestandteile werden einer Abwasseraufbereitungsanlage 21 zugeführt und dort umweltgerecht gereinigt. Die noch feuchten, festen Reaktionsprodukte werden über die Entspannungseinrichtung 22 in eine Trocknungsvorrichtung 23 eingebracht und dort bis zum gewünschten Restfeuchtgehalt getrocknet. Bei den getrockneten Reaktionsprodukten handelt es sich in der Regel um Kohlestaub oder ähnliche Brennstoffe. Die Brennstoffe werden in einem zwischen der Vorrichtung 1 und der Anordnung 2 angeordneten Brennstofflager 24 zwischengelagert.

Die Anordnung 2 zur Energieerzeugung umfasst eine Verbrennungsanlage 30, welche der Verbrennung der mittels der Vorrichtung 1 hergestellten Brennstoffe dient. Die Wärmeenergie der Verbrennung wird in der Verbrennungsanlage 30 genutzt, um Wasser bzw. Wasserdampf in dem Rohr 31 zu erhitzen und mit dem so erzeugten Wasserdampf die Turbine 32 anzutreiben. Die Rotationsenergie der Turbine 32 wird dem Generator 33 zugeführt und durch diesen in elektrische Energie umgewandelt, die beispielsweise in ein Stromnetz eingespeist werden kann (Pfeil 34). Das bei der Verbrennung in der Verbrennungsanlage 30 entstehende Rauchgas wird in einem Reinigungsverfahren 35, das beispielsweise eine Rauchgasentschwefelung und eine Rauchgasentstickung umfasst behandelt, bevor es über einen Schornstein 36 ins Freie abgeführt wird.

Aus den Ausgangsstoffen werden im Verlauf der Prozessführung auch organische als auch anorganische Stoffe herausgelöst beziehungsweise leichter verfügbar und zugänglich gemacht. Dies geschieht zum Teil dadurch, dass die Stoffe in die wässrige Phase gehen, in der sie zum Teil in Lösung gehen. Dies hängt wiederum von den Reaktionsbedingungen ab. Zu den herausgelösten beziehungsweise leichter verfügbaren und zugänglichen Stoffen zählen neben den organisch gelösten und nichtgelösten Stoffen auch anorganische Stoffe, wie Alkalien, Metalle, Salze und Säuren einschließlich huminsäureähnliche Stoffe, Calcium, Magnesium, Chlor, Eisen, Aluminium, Phosphor, Kalium, Natrium, Stickstoff und deren Verbindungen.

Die festen kohlenstoffhaltigen Bestandteile des Reaktionsprodukts, die nach der Umwandlungsreaktion als Werk- und/oder Brennstoffe vorliegen, weisen unter anderem folgende Eigenschaften auf:

Die Zusammensetzung der Werk- und/oder Brennstoffe lässt sich durch die Reaktionsführung steuern. Die Konzentration einzelner Stoffe kann nicht ohne weiteres selektiv und unabhängig von anderen Stoffen variiert werden. Es lassen sich vielmehr verschiedene Stoffgruppen und Parameter gleichsinnig verändern. Beispielsweise wird bei einer Verminderung des Schwefelgehalts gleichzeitig auch der Chlor-und Aschegehalt vermindert.

In verschiedenen Messungen mittels Elementaranalyse lag der Kohlenstoff-anteil für Gras, Heckenschnitt (Thuja) und Zuckerrübe bei über 50 bis 63 Prozent des prozentualen Massenanteil der Elemente (Trockenmasse) und lag damit um etwa 20 bis 60 Prozent über dem Massenanteil des Ausgangsstoffs. Der Sauerstoffanteil war um bis zur Hälfte und der Stickstoffanteil um etwa ein Viertel reduziert und der Wasserstoffanteil war auf bis zu etwa einem Viertel vermindert.

Der Kohlenstoffanteil der Werk- und/oder Brennstoffe ist im Vergleich zur Biomasse um 10 bis 300 Prozent, auch 50 bis 300 Prozent, oder auch 100 bis 300 Prozent, insbesondere um 200 bis 300 Prozent höher.

Der Kohlenstoffanteil der Werk- und/oder Brennstoffe ist im Vergleich zur Biomasse um 5 bis 200 Prozent, vorzugsweise 10 bis 150 Prozent, besonders bevorzugt 10 bis 120 Prozent, insbesondere 50 bis 100 Prozent höher.

Der Kohlenstoffanteil der Werk- und/oder Brennstoff liegt in der Regel zwischen 40 bis 95 Prozent, auch 50 bis 90 Prozent oder auch bei 55 bis 80 Prozent. Der Kohlenstoffanteil kann in Abhängigkeit von der Reaktionsführung und vom Ausgangsstoff aber auch höhere Reinheitsgrade erreichen von über 98 Prozent.

Der Wasserstoffanteil des Werk- und/oder Brennstoffs ist im Vergleich zur Biomasse um 1 bis über 5 Prozent, oder auch 20 bis 100 Prozent vermindert.

Der Sauerstoffanteil des Werk- und/oder Brennstoffs ist im Vergleich zum Ausgangsstoff um 1 bis über 5 Prozent, oder auch 15 bis 100 Prozent vermindert.

Der Stickstoffanteil des Werk- und/oder Brennstoffs ist im Vergleich zum Ausgangsstoff um 1 bis über 5 Prozent, oder auch 15 bis 100 Prozent vermindert.

Eine Verminderung der Mineralanteile sowie des Asche- und Feinstaubanteils bei der Verbrennung kann durch einen hohen Anteil an Prozesswasser ermöglicht werden. Durch Erhöhung des Prozesswasseranteils tritt eine Verdünnung der genannten Anteile aber auch zahlreicher anderer Stoffe ein, die ursprünglich im Ausgangsstoff enthalten waren und während der Umsetzungsreaktion herausgelöst werden und in Lösung gehen. Man könnte sagen, dass diese Stoffe herausgewaschen werden, so dass praktisch der Anteil der löslichen Stoffe proportional zum zugeführten Prozesswasser in der festen Phase gesenkt werden kann.

Selbst bei Auslassung eines Katalysatorbestandteils oder suboptimalen Reaktionsbedingungen kann immer noch ein höherer Kohlenstoffanteil erreicht werden, der um über 5 bis 10 Prozent über dem des Ausgangsstoffs liegt. Bei sachgerechter Behandlung der Biomasse und Prozessführung kann ein Kohlenstoff-anteil von 55 bis 77 Prozent erreicht werden. Bei sachgerechter Prozessführung, günstigen Ausgangsstoffen einschließlich Abstimmung des Katalysatorgemischs lassen sich auch Kohlenstoffwerte von 78 Prozent und mehr erzielen und ist damit dem fossiler Brennstoffe vergleichbar.

Nach Abschluss der Umsetzungsreaktion ist der Kohlenstoffanteil des Werk-und/ oder Brennstoffs zwar angestiegen, der Energiegehalt beziehungsweise der Brennwert kann aber um bis zu 36 Prozent gesunken sein. Denn es wird während der Reaktion Wärme freigesetzt, da es sich um eine exotherme Reaktion handelt. Im Umkehrschluss bleiben insgesamt mindestens 65 Prozent des ursprünglichen Brennwertes der trockenen Biomasse erhalten.

Wird als Ausgangsstoff kohlehydrathaltige Biomasse verwendet wie Korn, Mais oder Zucker beträgt der Brennwert des Werk- und/oder Brennstoffs etwa 65 bis 85 Prozent oder in einem anderen Ausführungsbeispiel 70 bis 80 Prozent im Vergleich zum Ausgangsstoff. Je weniger Kohlenhydrate der Ausgangsstoff enthält, desto geringer die Energiefreisetzung während der Umsetzungsreaktion. Dies bedingt gleichzeitig auch einen höheren Brennwert des Reaktionsprodukts im Vergleich zum Ausgangsstoff.

In beispielhafter Weise können die Energiegehalte des Reaktionsprodukts in Abhängigkeit von der verwendeten Biomasse wie folgt beschrieben werden:

Wird als Ausgangsstoff lignocellulosehaltige Biomasse verwendet wie Schnittgrün oder Ernteabfälle, beträgt der Brennwert des Werk- und/oder Brennstoffs etwa 70 bis 90 Prozent und auch 75 bis 85 Prozent im Vergleich zum Ausgangsstoff.

Wird als Ausgangsstoff Biomasse mit geringem Kohlehydrat-, Zellulose- oder Ligninanteil verwendet wie zum Beispiel Klärschlamm, beträgt der Brennwert des Werk-und/oder Brennstoffs etwa 80 bis 95 Prozent und auch 85 bis 90 Prozent im Vergleich zum Ausgangsstoff.

Rein-, Reinstkohle oder ultrareine Kohle kann vielseitig Anwendung finden, zum Beispiel als chemischer Grund- und Ausgangsstoff zur Weiterverarbeitung in der chemischen Industrie oder als Brennstoff für eine Kohlenstoff-Brennstoffzelle.

Während des Reaktionsverlauf sind zahlreiche Stoffe aus der festen Phase herausgelöst worden. Sie liegen nun zu in der wässrigen Phase vor und sind im Prozesswasser gelöst. Aus dem Prozesswasser können verschiedene Mineralien wie Phosphor, Schwefel aber auch Nitrat zurück gewonnen werden. Diese können dann als Dünger, Roh- oder Werkstoff für andere Prozesse verwendet werden. Im Sinne eines natürlichen Kreislaufs ist die Isolierung mineralischer Bestandteile insbesondere aus der flüssigen Phase von Interesse, denn diese können als Dünger wieder zum natürlichen Aufbau von Biomasse wieder auf Flächen ausgebracht werden. Dadurch kann ein annähernd geschlossener Kreislauf dargestellt werden, indem den Flächen, denen vorher Biomasse für den Produktionsprozess entnommen wurde, nun wieder die Nährstoffe, die in dieser Biomasse enthalten waren, zurückgeführt werden.

Durch Depolymerisations- und neue Polymerisationsprozesse bilden sich völlig neue chemische Kohlenstoffverbindungen und Strukturen, insbesondere bilden sich Agglomerate, die mit geringerem Energieaufwand zerkleinert werden können als die meisten bekannten Brennstoffe. Weiter kommt es in Abhängigkeit vom Ausgangsstoff es zu einer bräunlich-schwarzen Färbung, wahrscheinlich durch Bildung von Maillard-Reaktionsprodukten.

Die Dichte vieler Ausgangsstoffe liegt vor Reaktionsbeginn unter der von Wasser. Während des Reaktionsverlaufs nimmt die Dichte kontinuierlich zu und erreicht in Abhängigkeit der Ausgangsstoffe und Reaktionsführung eine Dichte vergleichbar mit Steinkohle erreichen. Während die Dichte der meisten Ausgangsstoffe bei 200 bis 600 kg/m3 und gelegentlich bis 800 kg/m3 (Trockengewicht) liegt, kann die Dichte des Reaktionsprodukt über 900 bis 1200 kg/m3, gelegentlich sogar Werte von 1250 bis 1350 kg/m3 erreichen unter der Voraussetzung, dass die Luft zwischen den Partikeln des Reaktionsprodukts herausgepresst wird.

Durch die geringe Partikelgröße des Reaktionsprodukts weist es im Vergleich zum Ausgangsstoff eine größere Oberfläche auf. Dies erleichtert die Trocknung bei gleichem Feuchtigkeitsgehalt leichter möglich als bei natürlich vorkommenden Kohlenstoffverbindungen mit vergleichbarem Kohlenstoffgehalt. Gleichzeitig trägt die große Oberfläche zu einer niedrigen Zündtemperatur bei.

Zu den Unterscheidungsmerkmalen der Reaktionsprodukte zählt das Vorliegen von Maillard- oder Maillard-ähnlichen Reaktionsprodukten sowohl in der flüssigen als auch in der festen Phase. Die starke und intensive Geruchsbildung variiert mit den Ausgangsstoffen. Die Geruchsbildung hängt ursächlich mit der Bildung von Maillard-Reaktionsprodukten zusammen.
- Verbesserte elektrische Leitfähigkeit im Vergleich zu anderen natürlich vorkommenden Kohlenstoffverbindungen mit vergleichbarem Kohlenstoffgehalt.
- Torf- bis Steinkohle-ähnlicher Brennstoff.
- Weniger flüchtige Bestandteile als gebräuchliche oder fossile Brennstoffe mit gleichem Kohlenstoffanteil.
- Geringere Aschebildung durch Verbrennung, niedrigerer Gehalt an Stickstoff, Schwefel, Nitrat, Schwermetalle und reaktiver, das heißt niedrigere Selbstentzündungstemperaturen als bei vergleichbaren fossilen Brennstoffen mit ähnlich hohem Kohlenstoffanteil.
- Vorteilhafte und weniger schädliche Zusammensetzung der Rauchgase durch Verbrennung als vergleichbarer fossiler Brennstoff mit ähnlich hohem Kohlenstoffanteil.

Insgesamt ergeben sich aus den oben aufgeführten Charakteristika des neuen Reaktionsprodukts zahlreiche Vorteile gegenüber herkömmlichen Brennstoffen sowie umwelt- und klimafreundliche Eigenschaften. Gegenüber den gebräuchlichen Verfahren zur Energiegewinnung aus Biomasse ist das Behandlungsverfahren zum Zweck einer industriellen Herstellung von Werk- und/oder Brennstoffen aus Biomasse effizienter und wirtschaftlicher. Bei der stofflichen Umwandlung der Biomasse braucht praktisch kein Kohlenstoff verloren gehen. In der Regel geht über 95 Prozent des Kohlenstoffs, der im Ausgangsstoff enthalten ist, in die festen Bestandteile des Reaktionsprodukts über, der zur Energiegewinnung genutzt werden kann. In der flüssigen Phase findet sich der Rest der Kohlenstoffverbindungen. Während der Umwandlungsreaktion im Reaktor werden praktisch kaum nennenswerte Mengen von Kohlendioxid oder andere klimaschädliche Gase freigesetzt.

In der flüssigen Phase können sich etwa 1 - 4 Prozent des Kohlenstoffs der Ausgangsstoffe finden. Der Anteil hängt dabei von der Prozessführung, insbesondere vom Kohlenstoffgehalt des Ausgangsstoffs und vom Flüssig-Fest-Verhältnis des Reaktionsgemischs ab.

Durch die Reaktionsführung und insbesondere durch die Auswahl und Zusammensetzung der Ausgangsstoffe und Katalysatoren werden kohlenstoffhaltige Nanowerkstoffe und -strukturen geformt. Diese Werkstoffe weisen zum Teil nützliche Material- und Oberflächeneigenschaften auf. Dazu gehören zum Beispiel Nanoschwämme, die als Wasserspeicher oder Dämmstoffe eingesetzt werden können.

Die so genannte Maillard-Reaktion findet bei Erhitzungsverfahren wie Backen, Braten, Rösten, Grillen und Frittieren von eiweißhaltigen und kohlenhydratreichen Lebensmitteln bei Temperaturen über 130°C statt. Im Verlauf der so genannten Maillard-Reaktion entstehen aus Kohlenhydraten und Aminosäuren neben einer Vielzahl von Aromastoffen rot- bis gelbbraune, manchmal fast schwarz gefärbte Polymere - die Melanoidine. Durch hohe Temperaturen, wie sie beim Backen und Rösten auftreten, aber auch durch höhere Drücke wird die Reaktion beschleunigt und besonders viele und dunkle Melanoidine gebildet. Sie stellen deshalb in Produkten wie Brot, Kaffee, Malz, Nüssen oder Cornflakes einen nicht unerheblichen Anteil am Lebensmittel dar - in Kaffee sind es beispielsweise bis zu 30 Prozent.

Die Au sgangsstoffe der Maillard-Reaktion bilden in einer ersten nicht-enzymatischen Reaktion eine Schiff'sche Base. Dieser Schritt vollzieht sich innerhalb von Minuten bis Stunden und ist reversibel, da die Schiff'sche Base eine sehr instabile Verbindung ist. Die Menge der Schiff'schen Base ist direkt von der Glucosekonzentration abhängig, da das Produkt innerhalb von Minuten zerfällt, wenn der Reaktion Glucose entzogen oder die Konzentration verringert wird. Im Weiteren lagert sich die instabile Schiff'sche Base zu dem weitaus stabileren Amadori-Produkt um. Dieser Prozess ist wesentlich langsamer, aber da er weniger reversibel ist, akkumulieren die Amadori-Produkte. Die primären Amadori-Produkte lagern sich um und reagieren weiter zu den Endprodukten der Maillard-Reaktion, den Advanced Glycation Endproducts (AGE). Durch Umlagerung und Polymerisation können die AGEs Quervernetzungen mit anderen Proteinen ausbilden. Aufgrund des Entstehungsweges gibt es sehr viele verschiedene und komplexe Formen von AGEs, wobei Nε-(carboxymethyl)Lysin (CML), Furosin und Pentosidin bisher am intensivsten untersucht wurden.

Maillard- oder Maillard-ähnliche Reaktionsprodukte werden bei der Hydrothermalen Karbonisierung in hohen Konzentrationen gebildet. Sowohl in der festen (v.a. Feststoffe) als auch in der flüssigen Phase (z.B. Prozesswasser) finden sich relativ hohe Konzentrationen der Indikatorsubstanz CML, die in der Regel zwischen 0,3 - 2 mmol/ mol Lysin liegen. In der flüssigen Phase, das heißt im Prozesswasser liegen in der Regel höhere Konzentrationen vor, als in der festen Phase des Reaktionsprodukts. Die Konzentrationen beziehungsweise Konzentrationsverhältnisse sind vom Fest-Flüssig-Verhältnis sowie von der Zusammensetzung der Ausgangsstoffe sowie der Prozessführung abhängig. CML werden antioxidative und chemopräventive Eigenschaften zugesprochen. Es ist daher davon auszugehen, dass vergleichbare oder ähnliche Eigenschaften auch bei anderen Zwischen-, Neben- oder Reaktionsprodukten der hydrothermalen Karbonisierung einschließlich der Maillard- oder Maillard-ähnliche Reaktionsprodukte zu finden sind.

Isolation und Aufreinigung der Maillard- oder Maillard-ähnlichen Reaktionsprodukte erfolgen unter anderem über Filtration, Ultrafiltration und/oder chromatographische Verfahren insbesondere über Säulenchromatographie.

Der Humus, der mittels hydrothermaler Karbonisierung im anmeldungsgemäßen Verfahren hergestellt wird, entsteht im Vergleich zu Reaktionsprodukten mit höherem Brennwert durch eine vergleichsweise kürzere Verweilzeit. Er weist in der Regel noch faserhaltiges Material (v.a. Lignin und Cellulose) der Ausgangsstoffe auf. Die Vernetzung der Biopolymere ist nicht vollständig aufgehoben. Der anmeldungsgemäß hergestellte Humus besitzt einen Kohlenstoffanteil von mindestens 30 bis 45 Prozent und einen Heizwert von mindestens 15 bis 24 MJ/kg und ist gut brennbar.

Der anmeldungsgemäß hergestellte Humus kann z.T. über ähnliche Eigenschaften wie natürlicher Humus und teilweise auch Torf verfügen:
o Er schützt den Boden vor Erosion durch Regen, weil das Wasser gleichmäßig und tief einsickern kann,
o reduziert die Erosion durch Wind,
o ernährt Regenwürmer und andere nützliche Bodenorganismen,
o senkt die Bodentemperatur im Sommer und erhöht sie im Winter,
o versorgt die Pflanzen mit Nährstoffen, wobei er sie so langsam abgibt, dass die Pflanzen sie bewältigen können,
o befähigt den Boden, das Wasser schwammartig zu speichern und begrenzt die Verdunstung auf ein Minimum,
o kontrolliert die chemischen Veränderungsprozesse im Boden bei Zugabe von Kalk und organischem Dünger,
o setzt organische Säuren frei, mit denen hoch alkalischer Boden neutralisiert wird, um Mineralien freizusetzen, und
o speichert Ammoniak und andere Stickstoffverbindungen in austauschbarer und verwertbarer Form.

Im Unterschied zu Humus oder Torf, der sich über lange Zeiträume natürlich gebildet hat, gibt es verschiedene positive Merkmale:
o Die Wasserbindungskapazität lässt sich durch die Prozessführung stark erhöhen und übersteigt die von natürlichem Humus oder Torf deutlich. Sie kann sogar ein Vielfaches betragen.
o Für die Verbrennungseigenschaften treffen die vorgenannten Eigenschaften zu den Reaktionsprodukten der hydrothermalen Karbonisierung zu.

Durch optimierte Prozessführung, insbesondere durch Konzentrationsgefälle zwischen fester und flüssiger Phase innerhalb des Reaktionsgemischs, können bestimmte Stoffe im Humus angereichert werden. Dies ist bei der Verwertung des Humus als CO₂-Bindungsstoff beziehungsweise Dünger erwünscht. Im Gegensatz dazu wird bei der Verarbeitung oder Beimischung von anmeldungsgemäß hergestelltem Humus zu Produkten, bei denen eine Anreicherung bestimmter Stoffe nicht erwünscht ist, durch die Prozessführung eine Anreicherung von mineralischen und für die Produktverwertung schädlichen Stoffen und Alkalien vermieden. Der anmeldungsgemäß hergestellte Humus ist ein einheitlicher Humus und Brennstoff, dessen Eigenschaften sich über die Zusammensetzung der Ausgangsstoffe und der Katalysatoren sowie die Prozessführung berechnen und steuern lassen. anmeldungsgemäß hergestellter Humus kann innerhalb von Stunden hergestellt werden. Das anmeldungsgemäße Verfahren ist damit wesentlich schneller als andere bekannte Produktionsverfahren von Humus, die in der Regel Wochen und Monate in Anspruch nehmen.

Die anmeldungsgemäß hergestellten Werk- und/oder Brennstoffe einschließlich Torf beziehungsweise Torf-ähnliche Stoffe haben folgende vorteilhafte Eigenschaften:
- Aus Biomasse entsteht durch Anwendung des anmeldungsgemäßen Verfahrens ein Torf- bis Steinkohle-ähnlicher Brennstoff.
- Der Brennwert ist abhängig von der Prozessführung, insbesondere von der Reaktionsdauer. Der Brennwert steigt mit der Reaktionsdauer beziehungsweise Verweilzeit im Reaktor.
- Weniger flüchtige Bestandteile als gebräuchliche oder fossile Brennstoffe mit gleichem Kohlenstoffanteil.
- Die Energieausbeute bis zur Kohle ist 0,7 - 0,95. Je geringer der Kohlehydratanteil, desto höher der Energieerhalt.
- 90 - 95 %: Lignine bzw. bakterielle Biomasse.
- Die Brennstoffe sind reaktiver und besitzen niedrigere Selbstentzündungstemperaturen als vergleichbarer fossiler Brennstoff mit ähnlich hohem Kohlenstoffanteil.
- Fossile Brennstoffe wie Braunkohle oder Steinkohle weisen im Vergleich zu Brennstoffen, die mittels hydrothermaler Karbonisierung im anmeldungsgemäßen Verfahren hergestellt werden (Brennstoffe), zwar ähnliche Heizwerte auf, unterscheiden sich von Brennstoffen aber deutlich im Hinblick auf die Zusammensetzung und Eigenschaften.
- Die unterschiedlichen Arten und Sorten von fossiler Kohle haben je nach Herkunftsort und Abbaugebiet sehr unterschiedliche chemische Zusammensetzungen und Eigenschaften, so dass jede Kohlesorte einzigartige und unverwechselbare charakteristische Merkmale besitzt. Beispielsweise liegt der Heizwert von fossiler Lausitzer Rohbraunkohle bei 8.700 kJ/kg, der Wassergehalt bei ca. 56 Prozent, Schwefelgehalt bei ca. 0,7 Prozent und der Aschegehalt bei ca. 4,5 Prozent. Sowohl Wasser-, Schwefel- und Aschegehalt des Brennstoffs sind geringer während der Brennwert in der Regel deutlich 20.000 kJ/kg liegt. Unabhängig vom Wassergehalt kann a us 1 Kilogramm fossiler Lausitzer Rohbraunkohle in der Lausitz 1 Kilowattstunde Strom erzeugt werden kann. Dagegen kann aus der gleichen Menge Brennstoff mehr als das Doppelte an Strom erzeugt werden.
- Im Gegensatz zu fossiler Kohle finden sich im anmeldungsgemäßen Werk- und/ oder Brennstoff gut nachweisbare Konzentrationen an Maillard-Reaktionsprodukten. Als Indikator hat sich Nε-(carboxymethyl)Lysin (CML) etabliert. Sowohl in der flüssigen als auch in der festen Phase der Reaktionsprodukte wird diese Verbindung nachgewiesen. Es wurden Konzentrationen von 0,2 bis über 1,5 mmol/mol Lysin gemessen wobei in der flüssigen Phase höhere Anteile als in der festen gemessen wurden. Die Verteilung der Konzentrationen ist jedoch abhängig von den Ausgangsstoffen, den Reaktionsbedingungen und der Prozessführung.
- Fossile Kohle liegt nach dem Abbau in Klumpen beziehungsweise je nach Abbautiefe in relativ hochverdichteten Agglomeraten vor, die unter hohem Energieaufwand zerkleinert werden müssen. Weiter muss sie getrocknet und in Kohlemühlen zu feinem Braunkohlenstaub zermahlen werden. Im Gegensatz dazu liegen Werk- und/oder Brennstoffe nach Abschluss des Prozesses als kleine Partikel in der Regel unter 1 Millimeter bis unter 30 Nanometer Größe vor und sind aufgrund ihrer großen Oberfläche leichter zu trocknen. Damit ist der Energieaufwand zur Konditionierung und insbesondere Trocknung von Brennstoffen wesentlich geringer im Vergleich zu fester fossiler Kohle.
- Insbesondere sind die Verbrennungseigenschaften des Brennstoffs nicht nur gegenüber fossilen Kohlesorten sondern auch gegenüber den meisten bisher verfügbaren Brennstoffen aus nachwachsenden Rohstoffen günstiger. Mindestens einer meist aber mehrere oder alle der folgenden Parameter fallen bei Brennstoffen insbesondere gegenüber den Ausgangsstoffen beziehungsweise alternativen fossilen oder Biomasse-Brennstoffen günstiger aus: verminderter Ascheanteile, weniger Chlor, Nitrat, Schwefel, Schwermetalle sowie geringere Emissionen von Staub, Feinstaub und gasförmigen Schadstoffen einschließlich Stick- und Schwefeloxide. Dies gilt auch für die gepressten Formen von Brennstoffen wie Briketts und Pellets.
- Die Qualität des Brennstoffs und die Verbrennungseigenschaften ist abhängig vom Ausgangsstoff beziehungsweise dem Gemisch der Ausgangsstoffe, von der Prozessführung, vom Katalysatorgemisch und von der Zusammensetzung des Prozesswassers,
- Ausgangsstoffe mit hohen Anteilen an Fett und Energiegehalt führen zu Brennstoffen mit höheren Heizwerten. Beispielsweise kann bei der Verarbeitung besonders geeigneter Klärschlämmen Heizwerte von 34 - 36 MJ/kg erzielt werden.
- Der Aschegehalt nach Verbrennung des Brennstoffs mit einem Brennwert von 30 - 33 MJ/kg ist im Vergleich zum Ausgangsstoff mit einem Brennwert von 17 - 20 MJ/kg um bis zu 75 Prozent und mehr vermindert.
- Der Schwefelgehalt nach Verbrennung des Brennstoffs mit einem Brennwert von 30 - 33 MJ/kg ist im Vergleich zum Ausgangsstoff mit einem Brennwert von 17 - 20 MJ/kg um bis zu 50 Prozent und mehr geringer.
- Die Feinstaub- und Gasemissionen sind im Vergleich zum Ausgangsstoff geringer.
- Das Verbrennungsergebnis wir durch die Einheit von Prozessführung, aufbereitungsabhängiger Brennstoffqualität und Feuerungstechnik bestimmt.
- Der Brennstoff ist ein einheitlicher Brennstoff, dessen Eigenschaften sich über die Zusammensetzung der Ausgangsstoffe und der Katalysatoren sowie die Prozessführung berechnen und steuern lassen.
- Neben den bereits angeführten Unterschieden bei den Verbrennungseigenschaften sind dies zusätzliche Unterscheidungsmerkmale zu fossilen Brennstoffen wie Steinkohle, Braunkohle oder Torf.

Auch **Rein-, Reinst-** und **Ultrareinkohle-ähnliche Stoffe** gehören zu den anmeldungsgemäßen Produkten. Sie verfügen über vorteilhafte Eigenschaften, die vor allem auf der Verminderung mineralischer Stoffe gegenüber den Ausgangsstoffen zurückzuführen ist. Unter **Reinkohle** wird vor allem der brennbare Anteil der Kohle und unter **Reinstkohle** wird auch Aktivkohle verstanden. Bei **Ultrareinkohle** liegt beispielsweise der Mineralgehalt unter 0,1 Gewichtsprozent verfügen.

Herstellung von Briketts aus Partikeln und Staub aus Reaktionsprodukten des anmeldungsgemäßen Verfahrens (Briketts, Staub):

• Neben hoher Festigkeit und Dichte von Briketts sind eine schnelle Zündung und ein gutes Abbrandverhalten die wichtigsten Kriterien für Briketts.
- Durch eine starke Kreuzprofilierung von etwas ein bis zwei Zentimeter Tiefe mit Neigungswinkeln zwischen 30 bis 70 Grad verbessert sich das Zündverhalten durch eine verbesserte Luftströmung im Feuerraum und bietet eine größere spezifische Oberfläche, was zu einem besseren Ausbrennen des Briketts führt.
- Unterstützend für Stabilität und Brennverhalten ist das Mischungsverhältnis von anmeldungsgemäß erzeugtem Mahlstaub zu Cellulose- beziehungsweise Lignin-haltige Komponenten.
- Ein Verhältnis von Staub mit Heizwerten von 25 - 30 MJ/kg zu Holzspänen beziehungsweise Holzhackschnitzeln liegt bei 53: 47, auch bei 58:42 oder auch bevorzugt bei 64:36. Der Wassergehalt der Holzspäne beziehungsweise Holzhackschnitzel kann dabei um die 10 Prozent liegen. Die Partikel können nicht größer als 2 mm, auch kleiner 1,5 mm und auch kleiner 1 mm sein.
- Ein Verhältnis von Staub mit Heizwerten von 22 - 25 MJ/kg zu Stroh liegt bei 61: 39, auch bei 66:44 oder auch bei 72:28. Der Wassergehalt der Holzspäne beziehungsweise Holzhackschnitzel kann dabei um die 10 Prozent liegen. Die Partikel können dabei nicht größer als 2 mm, auch kleiner 1,5 mm oder auch bevorzugt kleiner 1 mm sein.
- Den obigen Verhältnissen entsprechend wird Staub mit Torf mit äquivalentem Cellulose- und Lignin-Gehalt zu Briketts verarbeiten.
- Torf kann auch allein bei äquivalentem Cellulose- und Lignin-Gehalt zu Briketts verarbeitet werden.
- Der Staub und Cellulose- und Lignin-haltigen Zusatzstoffe beziehungsweise Torf werden gemeinsam oder allein intensiv vermischt zum Beispiel in einer Schlagnasenmühle mit 2 mm-Conidur-Austragssieb.
- Der Pressdruck liegt über 100 MPa, auch über 120 MPa oder auch über 140 MPa.
- Die Verpressungstemperatur beträgt 80 Grad Celsius und sollte 90 Grad Celsius nicht übersteigen.
- Das Format liegt bei etwa 250 x 60 x 50 mm.
- Die Rohdichte der Briketts liegt bei etwa 0,95 - 1,15 g/cm3.

Herstellung von Pellets aus Reaktionsprodukten des anmeldungsgemäßen Verfahrens (Pellets):
- Zur Herstellung von Pellets mittels des anmeldungsgemäßen Verfahrens (Pellets) wird das Verfahren der Feuchtpelletierung mit anschließender Agglomerattrocknung bevorzugt. Dieses Verfahren ist dazu geeignet, um aus Brennstoffen unterschiedlicher Heizwerte Pellets mit relativ geringem Aufwand herzustellen.
- Mit Pellets lassen sich gute Verbrennungsergebnisse in handelsüblichen automatischen Feuerungssystemen erzielen.
- Dabei werden die festgelegten Emissionsnormen für Kleinfeuerstätten erfüllt.
- Voraussetzung ist die Darbietung des Brennstoffs in einer kleinstückigen und möglichst gleichförmigen Form.
- Die Pellets besitzen einen Durchmesser von 3 - 7 mm und bevorzugt von 4 - 6 mm. Die Länge liegt zwischen 5 und 45 mm. Sie weisen eine hohe Festigkeit, Staubarmut und Wasserbeständigkeit auf und lassen sich gut dosieren.
- Die Pellets werden den vollautomatisierten Pelletöfen oder -kesseln kontinuierlich zugeführt und dort geregelt verbrannt.
- Durch eine gleichmäßige und möglichst vollständige Verbrennung unter optimierten Bedingungen lässt sich ein hoher thermischer Wirkungsgrad bei minimalen Schadstoffemissionen erzielen.
- Bei hohen Heizwerten über 25 MJ/kg und auch über 27 MJ/kg werden Bindestoffe und Verbrennungsbeschleuniger eingesetzt, insbesondere Tapetenleim, Wiesengras, Stroh und andere Lignocellulose-haltige Biomasse.
- Das Verhältnis von Staub mit Heizwerten von 25 - 30 MJ/kg zu Holzspänen beziehungsweise Holzhackschnitzeln oder Lignocellulose-haltige Biomasse liegt bei 81:19, auch bei 85:15 und auch bevorzugt bei 89:11.
- Das auch Verhältnis von Staub mit Heizwerten von 22 - 25 MJ/kg zu Holzspänen beziehungsweise Holzhackschnitzeln oder Lignocellulose-haltige Biomasse liegt bei 87: 13, auch bei 90:10 und auch bei 93:7.
- Ein Anteil von etwa bis zu 30 Prozent an der Lignocellulose-haltigen-Biomasse kann zum Beispiel durch Tapetenleim ersetzt werden.
- Der Wassergehalt der Holzspäne beziehungsweise Holzhackschnitzel oder anderer Lignocellulose-haltige Biomasse kann dabei um die 12 - 14 Prozent liegen.
- Die Partikel können dabei nicht größer als 2 mm, auch kleiner 1,5 mm und auch kleiner 1 mm sein.
- Den obigen Verhältnissen entsprechend wird Staub mit Torf mit äquivalentem Cellulose- und Lignin-Gehalt zu Pellets verarbeiten.
- Torf kann auch allein bei äquivalentem Cellulose- und Lignin-Gehalt zu Pellets verarbeitet werden.
- Der Staub und Cellulose- und Lignin-haltigen Zusatzstoffe beziehungsweise Torf werden gemeinsam oder allein intensiv vermischt zum Beispiel in einer Schlagnasenmühle mit 2 mm-Conidur-Austragssieb.
- Der Pressdruck liegt über 100 MPa, auch über 120 MPa und auch über 140 MPa.
- Die Verpressungstemperatur beträgt bei etwa 80 Grad Celsius und sollte 90 Grad Celsius nicht übersteigen.
- Die wichtigsten Anpassungen an die Pellets insbesondere gegenüber Pellets aus fossilen Brennstoffen ergeben sich aus den verbesserten Verbrennungseigenschaften und liegen im Bereich des Sinterverhaltens der Kohlenasche, der Ascheabräumungsmethode (in der Regel geringerer Aschegehalt) und der Größe des Brenntellers.

Aus den mittels des anmeldungsgemäßen Verfahrens hergestellten Brennstoffen kann in besonders vorteilhafter Ausgestaltung der Anmeldung Energie erzeugt werden. Die Verbrennung der anmeldungsgemäß hergestellten Brennstoffe erfolgt je nach Konditionierung in unterschiedlichen Vorrichtungen:
- In Pelletform wird der Brennstoff in der Regel in Pelletöfen, Pelletkesseln oder Anbaubrennern auch mit automatischer Brennstoffzufuhr verbrannt. In der Regel können handelsübliche Verbrennungsanlagen verwendet werden. Zur Verbesserung der Brenneigenschaften können anmeldungsgemäße Verbrennungsanlagen in folgenden Bereichen an die veränderten Brenneigenschaften angepasst werden:
   - Anpassung der Form und Größe des Brenntellers an den Aschegehalt. Da dieser geringer ist, können kleinere Brenntellerdurchmesser zu einer verbesserten Verbrennung führen.
   - Zur Verhinderung von Anbackungen am Brennteller, ist eine automatische Vorrichtung zur Entfernung der Asche vom Brennteller zu empfehlen. In der Regel sind die Anbackungen geringer als bei Brennstoffpellets aus natürlich vorkommenden Kohlearten, insbesondere Braunkohle.
- Die Verbrennung des anmeldungsgemäßen Staubs erfolgt in einem Kohlekraftwerk mit mindestens einer Dampfturbine. Zur Erzielung hoher Wirkungsgrade findet der Verbrennungsprozess bei hohen Temperaturen von über 600 Grad Celsius, bevorzugt über 650 Grad Celsius und besonders bevorzugt über 700 Grad Celsius statt.
- Weitere Effizienzsteigerung im Hochtemperaturbereich sollen durch den Einsatz moderner Kraftwerkstechnologien genutzt werden, so dass eine kombinierter Gas-Dampfturbinenprozess mit höchstmöglichen Effizienzgraden zur Stromerzeugung höher als 43 Prozent, auch höher als 46 Prozent, oder auch 49 Prozent bis 55 Prozent, realisiert wird.
- Für eine Nutzung des Kombiprozesses ist das IGCC-Konzept mit integrierter Kohlevergasung, bevorzugt auch Wirbelschichtfeuerungen, vor allem die druckaufgeladene stationäre Wirbelschichtfeuerung (DWSF) mit Kombiprozess und besonders bevorzugt Kombikraftwerke mit Druckkohlenstaubfeuerung (DKSF) geeignet.
- Der Verbrennungsprozess weist eine Gaseintrittstemperatur von >1.000 Grad Celsius, auch >1.200 Grad Celsius und auch >1.400 Grad Celsius, auf.
- Der Hochtemperaturgasreinigung ist so geartet, dass der Partikelgehalt und der Gehalt an korrosiv wirkenden Inhaltsstoffen, insbesondere Natrium- und Kaliumverbindungen, als auch Schadgasen so weit verringert wird, dass das Rauchgas unmittelbar einer Gasturbine zugeleitet werden kann, bevorzugt unter Ausnutzung der Niedertemperaturplasma-Eigenschaften des Rauchgases.
- Durch den Rauchgasabscheider wird ein Partikelgehalt < 3mg/m³ i.N. bei d < 3 Mikrometer, Alkaligehalt ≤0,01 mg/m³ i.N. realisiert.
- Ein weiterer Weg zur Erzeugung von Strom bzw. Energie aus Brennstoffen, nach dem anmeldungsgemäßen Verfahren insbesondere von Staub, ist die Nutzung in einer Kohlenstoff-Brennstoffzelle.
- Synergien können mit anderen Energieträgern und/oder Energieerzeugungsverfahren hergestellt werden durch gemeinsame Nutzung von Vorrichtungen zur Energieerzeugung insbesondere von Turbinen, insbesondere eine Dampf- oder Gasturbine zur Energieerzeugung.
- Zu den erneuerbaren Energien bei denen sich eine gemeinsame Nutzung von Turbinen und insbesondere von Dampf- oder Gasturbinen anbietet ist das Dispatchable Wind Power System (DWPS). Dabei wird komprimierte Luft in einem Luftspeicher dekomprimiert. Diese Druckluft wird dann zusätzlich in eine ohnehin laufende Turbine eingeleitet.
- Der Wirkungsgrad erhöht sich durch Einleitung der Druckluft in eine ohnehin laufende Turbine um mehr als 20 bis 200 Prozent, auch 40 bis 170 Prozent und auch um 60 bis 150 Prozent.

## Patentansprüche

1. Verfahren zur Behandlung eines Fest-Flüssig-Gemischs aus Wasser und Biomasse nach dem Grundprinzip der hydrothermalen Karbonisierung, wobei das Fest-Flüssig-Gemisch bei einer Temperatur von über 160°C und einem Druck von über 7 bar behandelt wird,
**dadurch gekennzeichnet, dass**
das Fest-Flüssig-Gemisch für eine Behandlungsdauer von mindestens 2 Stunden in wenigstens einem als Druckbehälter ausgebildeten Membranreaktor mit einer Filter-Vorrichtung zum Abziehen von Wasser aus dem Fest-Flüssig-Gemisch während der Behandlung behandelt wird, wobei während der Behandlung Wasseranteile durch Filtration abgezogen werden.

2. Verfahren nach Anspruch 1, wobei das Fest-Flüssig-Gemisch wenigstens einen zweiten, in Durchflussrichtung hinter einem ersten Reaktor liegenden Reaktor, also mit jenem in Serie geschalteten Reaktor durchläuft.

3. Verfahren nach Anspruch 1, wobei nach der Behandlung der Biomasse die Reaktionsprodukte mit einem Trockner bis zu einem Restfeuchtegehalt von 6 bis 25 % getrocknet werden.

4. Verfahren nach Anspruch 3, womit Werk- oder Brennstoffe, Humus oder Maillardprodukte hergestellt werden.

5. Verfahren gemäß Anspruch 1, wodurch eine pumpfähige Brennstoff-, Humus-oder Werkstoffsuspension oder -dispersion bereitgestellt wird, und wobei der Kohlenstoffgehalt einer Ausgangs-Komponente um 10 bis 300 % erhöht und der Wasserstoff-, Sauerstoff- und Stickstoffgehalt sowie der Schwefel- oder Aschegehalt der kohlenstoffhaltigen Ausgangs-Komponente um 20 bis 100 % in Bezug auf H bzw. 15 bis 100 % in Bezug auf O und/oder N und um mindestens 50 % in Bezug auf S bzw. 75 % in Bezug auf Asche bezogen auf die Biomasse vermindert wird.

## Claims

1. A method of treating a solid-liquid mixture of water and biomass according to the basic principle of hydrothermal carbonisation, wherein the solid-liquid mixture is treated at a temperature of above 160°C and a pressure of above 7 bar,
**characterised in that**
the solid-liquid mixture is treated for a treatment period of at least 2 hours in at least one membrane reactor formed as a pressure containment, with a filtering device for withdrawing water from the solid-liquid mixture during the treatment, wherein during the treatment, water portions are withdrawn by filtration.

2. The method of claim 1, wherein the solid-liquid mixture passes through at least one second reactor positioned downstream of a first reactor, i.e. arranged in series with same.

3. The method of claim 1, wherein after the treatment of the biomass, the reaction products are dried with a dryer to a remaining dryness of 6 to 25 %.

4. The method of claim 3, whereby materials or fuels, humus or Maillard products are produced.

5. The method of claim 1, whereby a pumpable fuel, humus or material suspension or dispersion is provided, and wherein the carbon content of a starting component is increased by 10 to 300 %, and the hydrogen, oxygen and nitrogen content as well as the sulphur or ash content of the carbon containing starting component is reduced by 20 to 100 % in respect of H, by 15 to 100 % in respect of O and/or N and by at least 50 % in respect of S or 75 % in respect of ash, in relation to the biomass.

## Revendications

1. Procédé de traitement d'un mélange solide-liquide composé d'eau et de biomasse selon le principe de base de la carbonisation hydrothermale, dans lequel le mélange solide-liquide est traité à une température supérieure à 160 °C et à une pression supérieure à 7 bar,
**caractérisé en ce que**
le mélange solide-liquide est traité pendant une durée de traitement d'au moins 2 heures dans au moins un réacteur à membrane, réalisé en tant que contenant sous pression, avec un dispositif de filtrage servant à retirer l'eau du mélange solide-liquide pendant le traitement, dans lequel des fractions d'eau sont retirées par filtration pendant le traitement.

2. Procédé selon la revendication 1, dans lequel le mélange solide-liquide traverse au moins un deuxième réacteur situé, dans le sens de l'écoulement, derrière un premier réacteur, donc branché en série avec ce réacteur.

3. Procédé selon la revendication 1, dans lequel après le traitement de la biomasse, les produits de réaction sont séchés avec un sécheur jusqu'à une teneur en humidité résiduelle de 6 à 25 %.

4. Procédé selon la revendication 3, avec lequel des matériaux ou des combustibles, de l'humus ou des produits de réaction de Maillard sont fabriqués.

5. Procédé selon la revendication 1, par lequel une suspension ou une dispersion de matériau, d'humus ou de matériau pouvant être pompée est fournie, et dans lequel la teneur en carbone d'un composant de départ est augmentée de 10 à 300 % et la teneur en hydrogène, en oxygène et en azote ainsi que la teneur en soufre ou en cendres du composant de départ contenant du carbone est réduite par rapport à la biomasse de 20 à 100 % en ce qui concerne H ou de 15 à 100 % en ce qui concerne O et/ou N et d'au moins 50 % en ce qui concerne S ou de 75 % en ce qui concerne les cendres.
